# EUROPEAN PATENT SPECIFICATION

(11) **EP 2 935 297 B1**
(45) Date of publication and mention of the grant of the patent: **20.03.2019**
(21) Application number: 13866441.2
(22) Date of filing: 26.11.2013
(51) Int. Cl.: C07F 7/00, C07F 17/00, C08F 10/00, C08F 4/659

(54) **BRIDGED METALLOCENE COMPOUNDS, CATALYST SYSTEMS AND PROCESSES FOR POLYMERIZATION THEREWITH**
BRÜCKENMETALLOCENVERBINDUNGEN SOWIE KATALYSATORSYSTEME UND POLYMERISIERUNGSVERFAHREN DAMIT
COMPOSÉS MÉTALLOCÈNES PONTÉS, SYSTÈMES CATALYTIQUES ET PROCÉDÉS DE POLYMÉRISATION LES UTILISANT

(30) Priority: 21.12.2012 US 201261740938 P; 14.05.2013 EP 13167620
(43) Date of publication of application: 28.10.2015
(73) Proprietor: ExxonMobil Chemical Patents Inc., Baytown TX 77520-2101 (US)
(72) Inventor: MCCULLOUGH, Laughlin, G., League City, TX 77573 (US)
(74) Representative: ExxonMobil Chemical Europe Inc.
(86) International application number: PCT/US2013/071973
(87) International publication number: WO 2014/099303

(56) References cited:
- EP-B1- 1 772 445
- JP-A- 2007 169 341
- JP-A- 2008 050 278
- JP-A- 2011 089 019
- JP-A- 2011 137 146
- US-B2- 9 068 033
- ELENA VILLASEÑOR ET AL: "Neutral Dimethylzirconocene Complexes as Initiators for the Ring-Opening Polymerization of [epsilon]-Caprolactone", EUROPEAN JOURNAL OF INORGANIC CHEMISTRY, no. 7, 13 December 2012 (2012-12-13), pages 1184-1196, XP055079254, ISSN: 1434-1948, DOI: 10.1002/ejic.201201096
- YOON ET AL: "Synthesis, structure, and catalytic properties of ansa-Zirconocenes, Me2X(Cp)(RInd) ZrCl2 (X = C, Si; R = 2-p- or 3-p-tolyl)", JOURNAL OF ORGANOMETALLIC CHEMISTRY, ELSEVIER-SEQUOIA S.A. LAUSANNE, CH, vol. 534, no. 1-2, 28 April 1997 (1997-04-28), pages 81-87, XP005258541, ISSN: 0022-328X, DOI: 10.1016/S0022-328X(96)06874-X
- KARTTUNEN ET AL: "The influence of the ligand structure on activation of hafnocene polymerization catalysts: A theoretical study", JOURNAL OF ORGANOMETALLIC CHEMISTRY, ELSEVIER-SEQUOIA S.A. LAUSANNE, CH, vol. 693, no. 1, 26 November 2007 (2007-11-26), pages 155-163, XP022383035, ISSN: 0022-328X
- DATABASE CA [Online] CHEMICAL ABSTRACTS SERVICE, COLUMBUS, OHIO, US; 2011, SAKURAGI, TSUTOMU ET AL: "Manufacture of ethylene polymers with long-chain branches using metallocene catalysts", XP002713211, retrieved from STN Database accession no. 2011:879046 & JP 2011 137146 A (JAPAN POLYETHYLENE CORPORATION, JAPAN) 14 July 2011 (2011-07-14)
- J. Falbe, M. Regitz: "Römpp Chemie Lexikon", 1992, Georg Thieme Verlag, Stuttgart New York

## Description

### FIELD OF THE INVENTION

This invention relates to bridged metallocene compounds useful for the polymerization of ethylene. This invention also relates to polymerization processes using these bridged metallocene compounds, in particular, gas phase polymerization processes.

### BACKGROUND OF THE INVENTION

Various types of polyethylenes are known in the art and each type has various applications. For example, low density polyethylene is generally prepared at high pressure using free radical initiators, or in gas phase processes using Ziegler-Natta or vanadium catalysts, and typically has a density in the range of 0.916 to 0.950 g/cm³. This low density polyethylene, produced using free radical initiators, is known in the industry as "LDPE". LDPE is also known as "branched" or "heterogeneously branched" polyethylene because of the relatively large number of long chain branches extending from the main polymer backbone. Polyethylene in the same density range, i.e., 0.916 to 0.940 g/cm³, which is linear and does not contain long chain branching is also known; this "linear low density polyethylene" ("LLDPE") may be produced with conventional Ziegler-Natta catalysts or with metallocene catalysts. Polyethylenes having still greater density are the high density polyethylenes ("HDPEs"), i.e., polyethylenes having densities greater than 0.940 g/cm³, and are generally prepared with Ziegler-Natta catalysts. Very low density polyethylenes ("VLDPEs") are also known. VLDPEs can be produced by a number of different processes yielding polyethylenes having a density less than 0.916 g/cm³, typically 0.890 to 0.915 g/cm³ or 0.900 to 0.915 g/cm³.

67% of global LDPE demand includes film, carrying bag, and sack applications. Some examples of these applications include agricultural, multi-layer, and shrink films, as well as reinforcements for levees. LDPE, which is soft, ductile, and flexible, is additionally utilized for strong, elastic goods, such as screw caps, lids, and coatings. There remains a demand for LDPE in the global marketplace, and consequently there is a continued need for improvements that provide cost savings.

Some improvements include using a different catalyst system. For example, some work has been done to provide branched polymers having a density of 0.940 gcm⁻³ or less using metallocene compounds. JP2011089019A discloses a bridged metallocene in combination with a cocatalyst (a modified clay mineral, an alkyl alumoxane, or an ionized ionic compound) and an organoaluminum compound for olefin polymerization which can produce a polyolefin which possesses long chain branching, with high activity.

Villaseñor et al. (European Journal of Inorganic Chemistry 2013,Volume 2013, Issue 7, 13 December 2012, Pages 1184-1196) disclose a neutral dimethylzirconocene complex as initiator for the ring-opening polymerization of caprolactone, wherein the complex has an benzyl substituted indenyl. Sakuragi *et al.* (CHEMICAL ABSTRACTS SERVICE, COLUMBUS, OHIO, US; Sakuragi et al.: "Manufacture of ethylene polymers with long-chain branches using metallocene catalysts", XP002713211, retrieved from STN Database accession no. 2011:879046 ; & JP 2011 137146 A (JAPAN POLYETHYLENE CORPORATION, JAPAN) 14 July 2011) discloses a metallocene catalysts useful in the preparation of ethylene polymers with long-chain branches, wherein the complex has an unsubstituted bridged cyclopentadienyl ligand. Yoon et al. (Journal of Organometallic Chemistry 1997, Volume 534, Issues 1-2, 28 April 1997, Pages 81-87) disclose an *ansa-*Zirconocene which is however particularly designed for propylene polymerization in the presence of methylaluminoxane (MAO). In the context of hafnocene-based catalysts, Karttunen et al. (Journal of Organometallic Chemistry 2008, Volume 693, Issue 1, 1 January 2008, Pages 155-163) provided a theoretical quantum chemical study on the influence of ligand structure of hafnocenes on activation of the polymerization catalysts.

JP2011137146 discloses a manufacturing method for an ethylenic polymer using a catalyst for polymerization composed essentially of a component (A): a metallocene compound represented by a specified formula; a component (B): a compound to react with the metallocene component (A) to form cationic metallocenes; and a component (C): a fine particle carrier to give ethylene polymers characterized by (i) the existence of inflection points due to strain hardening in double-logarithmic plots of elongational viscosity [η(t); Pa●s; measured at 170° and elongational strain rate [λmax; defined as ηmax(t1)/ηlinear(t1); ηmax(t1) = maximum elongational viscosity after strain hardening; ηlinear(t1) = approximate line of elongational viscosity before hardening] ≥ 2.0. Silica, dimethylsilylene(cyclopentadienyl)(indenyl)zirconium dichloride and methyl alumoxane were reacted to give a solid catalyst, which was used for polymerization of ethylene and 1-hexene in the presence of trimethylaluminum to give a copolymer showing λmax of 17.1.

Accordingly, there is a need for new processes to produce branched polymers having a density of 0.940 g/cm³ or less. More specifically, there is a need for new catalyst systems, particularly metallocene catalyst systems to produce branched polymers having a density of 0.940 g/cm³ or less. It is further desirable that these new metallocene catalyst systems are robust and have high productivity, particularly in gas phase polymerization processes.

### SUMMARY OF THE INVENTION

This invention relates to a bridged metallocene compound represented by the following formula: 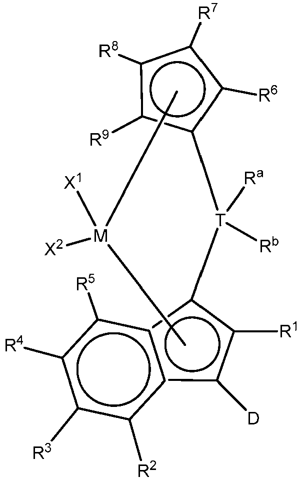 wherein:
M is a group 4 metal;
T is a group 14 atom;
D is a substituted or unsubstituted aromatic group;
R^{a} and R^{b} are independently, hydrogen, halogen, or a C₁ to C₂₀ substituted or unsubstituted hydrocarbyl, and R^{a} and R^{b} can form a cyclic structure including substituted or unsubstituted aromatic, partially saturated, or saturated cyclic or fused ring system;
each X¹ and X² is independently selected from the group consisting of C₁ to C₂₀ substituted or unsubstituted hydrocarbyl groups, hydrides, amides, amines, alkoxides, sulfides, phosphides, halides, dienes, phosphines, and ethers, and X¹ and X² can form a cyclic structure including aromatic, partially saturated, or saturated cyclic or fused ring system;
each of R¹, R², R³, R⁴, and R⁵ is, independently, hydrogen, halide, alkoxide or a C₁ to C₄₀ substituted or unsubstituted hydrocarbyl group, and any of adjacent R², R³, R⁴, and/or R⁵ groups may form a fused ring or multicenter fused ring systems, where the rings may be substituted or unsubstituted, and may be aromatic, partially unsaturated, or unsaturated; and
each of R⁶, R⁷, R⁸, and R⁹ is, each independently, hydrogen or a C₁ to C₄₀ substituted or unsubstituted hydrocarbyl group;
further provided that at least two of R⁶, R⁷, R⁸, and R⁹ are C₁ to C₄₀ substituted or unsubstituted hydrocarbyl groups.

This invention also relates to a catalyst system comprising:
(i) a bridged metallocene compound represented by the following formula: 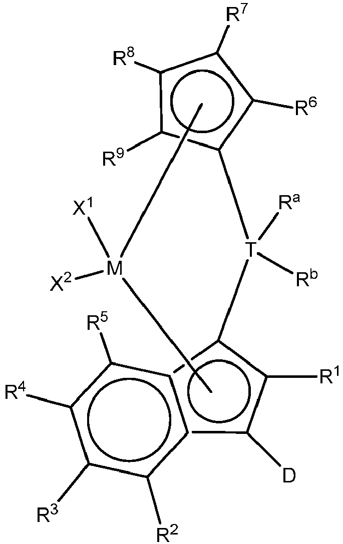 wherein:
   M is a group 4 metal;
   T is a group 14 atom;
   D is a substituted or unsubstituted aromatic group;
   R^{a} and R^{b} are independently, hydrogen, halogen, or a C₁ to C₂₀ substituted or unsubstituted hydrocarbyl, and R^{a} and R^{b} can form a cyclic structure including substituted or unsubstituted aromatic, partially saturated, or saturated cyclic or fused ring system;
   each X¹ and X² is independently selected from the group consisting of C₁ to C₂₀ substituted or unsubstituted hydrocarbyl groups, hydrides, amides, amines, alkoxides, sulfides, phosphides, halides, dienes, phosphines, and ethers, and X¹ and X² can form a cyclic structure including aromatic, partially saturated, or saturated cyclic or fused ring system;
   each of R¹, R², R³, R⁴, and R⁵ is, independently, hydrogen, halide, alkoxide or a C₁ to C₄₀ substituted or unsubstituted hydrocarbyl group, and any of adjacent R², R³, R⁴, and/or R⁵ groups may form a fused ring or multicenter fused ring systems, where the rings may be substituted or unsubstituted, and may be aromatic, partially unsaturated, or unsaturated; and
   each of R⁶, R⁷, R⁸, and R⁹ is, each independently, hydrogen or a C₁ to C₄₀ substituted or unsubstituted hydrocarbyl group;
   further provided that at least two of R⁶, R⁷, R⁸, and R⁹ are C₁ to C₄₀ substituted or unsubstituted hydrocarbyl groups; and
(ii) at least one activator.

### DETAILED DESCRIPTION

LDPE is typically produced in a tubular reactor system using a free radical initiator under conditions of very high pressure and temperature. The inventors have surprisingly found a metallocene compound and a catalyst system comprising said metallocene compound that produce branched low density polyethylene under less extreme conditions. Advantageously, this branched low density polyethylene may be produced in gas phase polymerization processes. The ability to produce branched low density polyethylene using gas phase polymerization systems is particularly advantageous because the production rate can be much greater than that achievable in tubular reactors, at lower pressures and temperatures. This increased productivity coupled with being able to run at reduced temperatures and pressures provides a significant cost advantage for branched low density polyethylene produced by metallocenes in the gas phase over traditional LDPEs. The metallocene compound and catalyst system are disclosed herein. Branched low density polyethylene and processes to make them are disclosed in "Branched Polyethylene with improved process and high tear films made therefrom", filed concurrently herewith and claiming priority to USSN 61/740,916, filed on December 21, 2012, which application has been published as WO 2014/099307 A1.

### DEFINITIONS

For the purposes of this invention and the claims thereto, the new numbering scheme for the Periodic Table Groups is used as set out in CHEMICAL AND ENGINEERING NEWS, 63(5), 27 (1985). Therefore, a "Group 4 metal" is an element from Group 4 of the Periodic Table.

"Catalyst productivity" is a measure of how many grams of polymer (P) are produced using a polymerization catalyst comprising W g of catalyst (cat), over a period of time of T hours; and may be expressed by the following formula: P/(T x W) and expressed in units of gP/gcat/hr. "Catalyst activity" is a measure of how many grams of polymer of polymer are produced using a polymerization catalyst comprising W g of catalyst (cat) and may be expressed by the following formula: P/W and expressed in units of gP/g(cat), and is typically used for batch processes. Catalyst activity may be converted to catalyst productivity by taking into account the run time of the batch process: catalyst productivity = catalyst activity/T, where T is the run time in hours.

An "olefin," alternatively referred to as "alkene," is a linear, branched, or cyclic compound of carbon and hydrogen having at least one double bond. For the purposes of this invention and the claims thereto, when a polymer is referred to as "comprising an olefin," the olefin present in the polymer is the polymerized form of the olefin. For example, when a copolymer is said to have an "ethylene" content of 35 wt% to 55 wt%, it is understood that the mer unit in the copolymer is derived from ethylene in the polymerization reaction and said derived units are present at 35 wt% to 55 wt%, based upon the weight of the copolymer. A "polymer" has two or more of the same or different mer units. "Polymer," as used herein, includes oligomers (up to 100 mer units) and larger polymers (greater than 100 mer units).

A "homopolymer" is a polymer having mer units that are the same. A "copolymer" is a polymer having two or more mer units that are different from each other. A "terpolymer" is a polymer having three mer units that are different from each other. "Different," as used to refer to mer units, indicates that the mer units differ from each other by at least one atom or are different isomerically. Accordingly, the definition of copolymer, as used herein, includes terpolymers.

As used herein, Mn is number average molecular weight (measured by Gel Permeation Chromatography, GPC), Mw is weight average molecular weight (measured by GPC), and Mz is z average molecular weight (measured by GPC), wt% is weight percent, mol% is mole percent, vol% is volume percent and mol is mole. Molecular weight distribution (MWD) is defined to be Mw (measured by GPC) divided by Mn (measured by GPC), Mw/Mn. Unless otherwise noted, all molecular weights (e.g., Mw, Mn, Mz) have units of g/mol.

A "catalyst system" is combination of at least one metallocene compound, at least one activator, an optional co-activator, and an optional support material. An "anionic ligand" is a negatively charged ligand which donates one or more pairs of electrons to a metal ion. A "neutral donor ligand" is a neutrally charged ligand which donates one or more pairs of electrons to a metal ion.

### METALLOCENE COMPOUNDS

A metallocene compound is defined as an organometallic compound with at least one π-bound cyclopentadienyl moiety (or substituted cyclopentadienyl moiety) and more frequently two π-bound cyclopentadienyl-moieties or substituted moieties. This includes other π-bound moieties such as indenyls or fluorenyls or derivatives thereof. The inventors have surprisingly discovered new metallocene compounds described below. These metallocene compounds may be useful in the production of branched, low density polyethylene.

For the purposes of this invention and the claims thereto, when catalyst systems are described as comprising neutral stable forms of the components, it is well understood by one of ordinary skill in the art, that the ionic form of the component is the form that reacts with the monomers to produce polymers.

This invention relates to bridged metallocene compounds represented by the following formula: 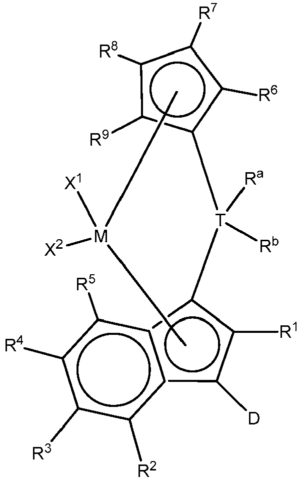 wherein:
M is a group 4 metal (preferably, M is zirconium or hafnium; more preferably, zirconium);
T is a group 14 atom (preferably, silicon or germanium; more preferably, silicon);
D is a substituted or unsubstituted aromatic group (preferably, D is selected from the group consisting of substituted or unsubstituted phenyl, naphthyl, biphenyl, cyclopropenyl, tropylium, cyclooctatetraenyl, furanyl, pyridinyl, borabenzyl, thiophenyl, azolyl, oxazolyl, and imidazolyl; more preferably, D is selected from the group consisting of substituted or unsubstituted phenyl, biphenyl, naphthyl, cyclopropenyl, furanyl, pyridinyl, thiophenyl, azolyl, oxazolyl, and imidazolyl, where "substituted or unsubstituted" refers to all members of the group listed);
R^{a} and R^{b} are independently, hydrogen, halogen, or a C₁ to C₂₀ substituted or unsubstituted hydrocarbyl, and R^{a} and R^{b} can form a cyclic structure including substituted or unsubstituted aromatic, partially saturated, or saturated cyclic or fused ring system (preferably, each R^{a} and R^{b} is independently selected from the group consisting of halides, C₁ to C₂₀ substituted or unsubstituted hydrocarbyl groups, and cyclic structures where R^{a} and R^{b} form a heterocyclopentyl, heterocyclobutyl, or heterocyclohexyl structure with T being the heteroatom; more preferably, each R^{a} and R^{b} is independently selected from the group consisting of chlorides, fluorides, methyl, and ethyl groups; more preferably, each R^{a} and R^{b} is, independently, selected from the group consisting of chlorides, fluorides, methyl, and ethyl groups);
each X¹ and X² is independently selected from the group consisting of C₁ to C₂₀ substituted or unsubstituted hydrocarbyl groups, hydrides, amides, amines, alkoxides, sulfides, phosphides, halides, dienes, phosphines, and ethers; and X¹ and X² can form a cyclic structure including aromatic, partially saturated, or saturated cyclic or fused ring system; more preferably, each X¹ and X² is independently selected from the group consisting of chlorides, fluorides, methyl, and ethyl groups;
each of R¹, R², R³, R⁴, and R⁵ is, independently, hydrogen, halide, alkoxide or a C₁ to C₄₀ substituted or unsubstituted hydrocarbyl group, and any of adjacent R², R³, R⁴, and/or R⁵ groups may form a fused ring or multicenter fused ring systems, where the rings may be substituted or unsubstituted, and may be aromatic, partially unsaturated, or unsaturated (preferably, each of R¹, R², R³, R⁴, and R⁵ is, independently, a C₁ to C₂₀ substituted or unsubstituted hydrocarbyl group); and
each of R⁶, R⁷, R⁸, and R⁹ is, each independently, hydrogen or a C₁ to C₄₀ substituted or unsubstituted hydrocarbyl group (preferably, each of R⁶, R⁷, R⁸, and R⁹ is, independently, a C₁ to C₄₀ substituted or unsubstituted hydrocarbyl group; more preferably, each of R⁶, R⁷, R⁸, and R⁹ is, independently, a C₁ to C₂₀ substituted or unsubstituted hydrocarbyl group; more preferably, each of R⁶, R⁷, R⁸, and R⁹ is, independently, selected from the group consisting of methyl, ethyl, propyl, isopropyl, n-butyl, sec-butyl, t-butyl, pentyl, hexyl, heptyl, octyl, decyl, and undecyl groups; even more preferably, each of R⁶, R⁷, R⁸, and R⁹ is, independently, selected from the group consisting of methyl, ethyl, and n-propyl groups; preferably adjacent R⁶, R⁷, R⁸, and/or R⁹ groups fuse together with the cyclopentadienyl group to form a substituted or unsubstituted fluorene);
further provided that at least two of R⁶, R⁷, R⁸, and R⁹ are C₁ to C₄₀ substituted or unsubstituted hydrocarbyl groups.

In preferred embodiments, the metallocene compound is asymmetric, which is defined to mean that the groups that are bridged by the TR^{a}R^{b} bridge do not have the same number of fused aromatic rings, for example, the metallocene compound is not a bis-indenyl compound. Instead, the metallocene compound may be a cyclopentadienyl-indenyl compound, a cyclopentadienyl-fluorenyl compound, or a indenyl-fluorenyl compound, etc.

Preferred metallocene compounds may be represented by the following formula: 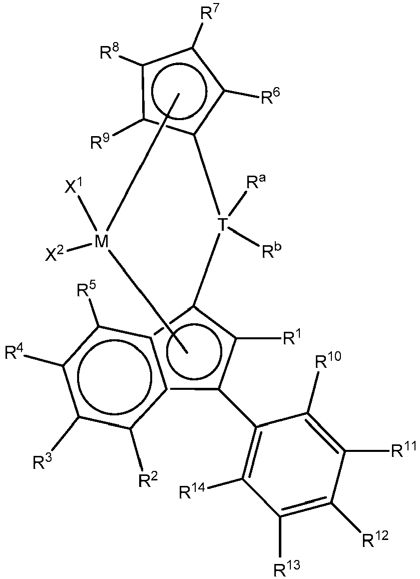
wherein R¹, R², R³, R⁴, R⁵, R⁶, R⁷, R⁸, R⁹, R^{a}, R^{b}, X¹, X², T, and M are as defined above; and
R¹⁰, R¹¹, R¹², R¹³, and R¹⁴ are each independently H or a C¹ to C⁴⁰ substituted or unsubstituted hydrocarbyl.

Other preferred metallocene compounds useful herein may be represented by the formula: 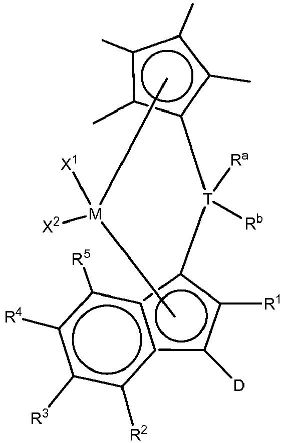 wherein R¹, R², R³, R⁴, R⁵, R^{a}, R^{b}, X¹, X², T, D, and M are as defined above.

In particularly preferred embodiments, metallocene compounds useful herein may be represented by the following structure: 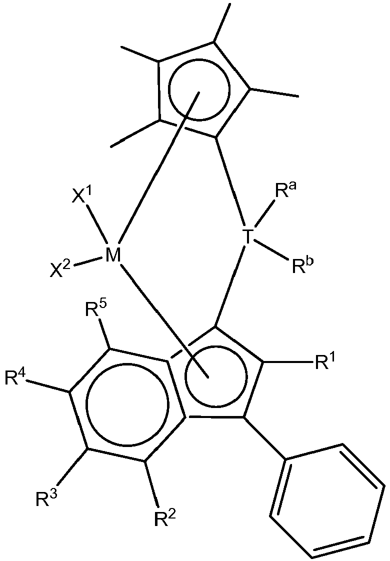 wherein R¹, R², R³, R⁴, R⁵, R^{a}, R^{b}, X¹, X², T, and M are as defined above.

Examples of preferred metallocene compounds include:
dimethylsilylene(3-phenyl-1-indenyl)(2,3,4,5-tetramethyl-1-cyclopentadienyl)zirconium dichloride;
dimethylsilylene(3-phenyl-1-indenyl)(2,5-dimethyl-1-cyclopentadienyl)zirconium dichloride;
dimethylsilylene(3-phenyl-1-indenyl)(3,4-dimethyl-1-cyclopentadienyl)zirconium dichloride;
dimethylsilylene(3-phenyl-1-indenyl)(2,3,4,5-tetraethyl-1-cyclopentadienyl)zirconium dichloride;
dimethylsilylene(3-phenyl-1-indenyl)(2,3,4,5-tetrapropyl-1-cyclopentadienyl)zirconium dichloride;
dimethylsilylene(3-phenyl-1-indenyl)(9-fluorenyl)zirconium dichloride;
dimethylsilylene(3-phenyl-1-indenyl)(2,7-dimethyl-9-fluorenyl)zirconium dichloride;
dimethylsilylene(3-phenyl-1-indenyl)(2,7-di-t-butyl-9-fluorenyl)zirconium dichloride;
dimethylsilylene(3-phenyl-1-indenyl)(3,6-dimethyl-9-fluorenyl)zirconium dichloride;
dimethylsilylene(3-phenyl-1-indenyl)(3,6-di-t-butyl-9-fluorenyl)zirconium dichloride;
dimethylsilylene(3-phenyl-1-indenyl)(4,7-dimethyl-9-fluorenyl)zirconium dichloride;
diethylsilylene(3-phenyl-1-indenyl)(2,3,4,5-tetramethyl-1-cyclopentadienyl)zirconium dichloride;
dipropylsilylene(3-phenyl-1-indenyl)(2,3,4,5-tetramethyl-1-cyclopentadienyl)zirconium dichloride;
dibutylsilylene(3-phenyl-1-indenyl)(2,3,4,5-tetramethyl-1-cyclopentadienyl)zirconium dichloride;
diphenylsilylene(3-phenyl-1-indenyl)(2,3,4,5-tetramethyl-1-cyclopentadienyl)zirconium dichloride;
silacyclobutylidene(3-phenyl-1-indenyl)(2,3,4,5-tetramethyl-1-cyclopentadienyl)zirconium dichloride;
silacyclopentylidene(3-phenyl-1-indenyl)(2,3,4,5-tetramethyl-1-cyclopentadienyl)zirconium dichloride;
silacyclohexylidene(3-phenyl-1-indenyl)(2,3,4,5-tetramethyl-1-cyclopentadienyl)zirconium dichloride;
dimethylgermylene(3-phenyl-1-indenyl)(2,3,4,5-tetramethyl-1-cyclopentadienyl)zirconium dichloride;
diethylgermylene(3-phenyl-1-indenyl)(2,3,4,5-tetramethyl-1-cyclopentadienyl)zirconium dichloride;
dipropylgermylene(3-phenyl-1-indenyl)(2,3,4,5-tetramethyl-1-cyclopentadienyl)zirconium dichloride;
dibutylgermylene(3-phenyl-1-indenyl)(2,3,4,5-tetramethyl-1-cyclopentadienyl)zirconium dichloride;
diphenylgermylene(3-phenyl-1-indenyl)(2,3 ,4,5-tetramethyl-1-cyclopentadienyl)zirconium dichloride;
isopropylidene(3-phenyl-1-indenyl)(2,3,4,5-tetramethyl-1-cyclopentadienyl)zirconium dichloride;
diphenylmethylene(3-phenyl-1-indenyl)(2,3,4,5-tetramethyl-1-cyclopentadienyl)zirconium dichloride;
dimethylsilylene(2-methyl-3-phenyl-1-indenyl)(2,3,4,5-tetramethyl-1-cyclopentadienyl)zirconium dichloride;
dimethylsilylene(2-ethyl-3 -phenyl-1-indenyl)(2,3,4,5-tetramethyl-1-cyclopentadienyl)zirconium dichloride;
dimethylsilylene(2-propyl-3-phenyl-1-indenyl)(2,3,4,5-tetramethyl-1-cyclopentadienyl)zirconium dichloride;
dimethylsilylene(2-isopropyl-3-phenyl-1-indenyl)(2,3,4,5-tetramethyl-1-cyclopentadienyl)zirconium dichloride;
dimethylsilylene(4-methyl-3-phenyl-1-indenyl)(2,3,4,5-tetramethyl-1-cyclopentadienyl)zirconium dichloride;
dimethylsilylene(4,7-dimethyl-3-phenyl-1-indenyl)(2,3,4,5-tetramethyl-1-cyclopentadienyl)zirconium dichloride;
dimethylsilylene(5,6-dimethyl-3-phenyl-1-indenyl)(2,3,4,5-tetramethyl-1-cyclopentadienyl)zirconium dichloride;
dimethylsilylene(2,4-dimethyl-3-phenyl-1-indenyl)(2,3,4,5-tetramethyl-1-cyclopentadienyl)zirconium dichloride;
dimethylsilylene(2,6-dimethyl-3-phenyl-1-indenyl)(2,3,4,5-tetramethyl-1-cyclopentadienyl)zirconium dichloride;
dimethylsilylene(3-phenyl-2,4,6-trimethyl-1-indenyl)(2,3,4,5-tetramethyl-1-cyclopentadienyl)zirconium dichloride;
dimethylsilylene(3-phenyl-2,4,7-trimethyl-1-indenyl)(2,3,4,5-tetramethyl-1-cyclopentadienyl)zirconium dichloride;
dimethylsilylene(3-phenyl-2,5,6-trimethyl-1-indenyl)(2,3,4,5-tetramethyl-1-cyclopentadienyl)zirconium dichloride;
dimethylsilylene(3-phenyl-4,5,6,7-tetramethyl-1-indenyl)(2,3,4,5-tetramethyl-1-cyclopentadienyl)zirconium dichloride;
dimethylsilylene(2,4,5,6,7-pentamethyl-3-phenyl--1-indenyl)(2,3,4,5-tetramethyl-1-cyclopentadienyl)zirconium dichloride;
dimethylsilylene(6-chloro-3-phenyl-1-indenyl)(2,3,4,5-tetramethyl-1-cyclopentadienyl)zirconium dichloride;
dimethylsilylene(7-chloro-3-phenyl-1-indenyl)(2,3,4,5-tetramethyl-1-cyclopentadienyl)zirconium dichloride;
dimethylsilylene(4,6-dichloro-3-phenyl-1-indenyl)(2,3,4,5-tetramethyl-1-cyclopentadienyl)zirconium dichloride;
dimethylsilylene(5,7-dichloro-2-methyl-3-phenyl-1-indenyl)(2,3,4,5-tetramethyl-1-cyclopentadienyl)zirconium dichloride;
dimethylsilylene(2-butyl-7-chloro-3-phenyl-1-indenyl)(2,3,4,5-tetramethyl-1-cyclopentadienyl)zirconium dichloride;
dimethylsilylene(7-chloro-3-phenyl-2-propyl-1-indenyl)(2,3,4,5-tetramethyl-1-cyclopentadienyl)zirconium dichloride;
dimethylsilylene(7-chloro-2-ethyl-3-phenyl-1-indenyl)(2,3,4,5-tetramethyl-1-cyclopentadienyl)zirconium dichloride;
dimethylsilylene(5-fluoro-3-phenyl-1-indenyl)(2,3,4,5-tetramethyl-1-cyclopentadienyl)zirconium dichloride;
dimethylsilylene(5,7-difluoro-3-phenyl-1-indenyl)(2,3,4,5-tetramethyl-1-cyclopentadienyl)zirconium dichloride;
dimethylsilylene(4,6-difluoro-3-phenyl-1-indenyl)(2,3,4,5-tetramethyl-1-cyclopentadienyl)zirconium dichloride;
dimethylsilylene(5,7 -difluoro-2-methyl-3-phenyl-1-indenyl)(2,3 ,4,5-tetramethyl-1-cyclopentadienyl)zirconium dichloride;
dimethylsilylene(3-phenyl-1,5,6,7-tetrahydro-s-1-indacenyl)(2,3,4,5-tetramethyl-1-cyclopentadienyl)zirconium dichloride;
dimethylsilylene(2-methyl-3-phenyl-1,5,6,7-tetrahydro-s-1-indacenyl)(2,3,4,5-tetramethyl-1-cyclopentadienyl)zirconium dichloride;
dimethylsilylene(6,6-dimethyl-3-phenyl-1,5,6,7-tetrahydro-s-1-indacenyl)(2,3,4,5-tetramethyl-1-cyclopentadienyl)zirconium dichloride;
dimethylsilylene(3-phenyl-2,6,6-trimethyl-1,5,6,7-tetrahydro-s-1-indacenyl)(2,3,4,5-tetramethyl-1-cyclopentadienyl)zirconium dichloride;
dimethylsilylene(3-pheny-5,5,8,8-tetramethyl-5,6,7,8-tetrahydrobenz[f]-1-indenyl)(2,3,4,5-tetramethyl-1-cyclopentadienyl)zirconium dichloride;
dimethylsilylene(3-phenylbenz[f]-1-indenyl)(2,3,4,5-tetramethyl-1-cyclopentadienyl)zirconium dichloride;
dimethylsilylene(2-methyl-3-phenylbenz[f]-1-indenyl)(2,3,4,5-tetramethyl-1-cyclopentadienyl)zirconium dichloride;
dimethylsilylene(2,5,5,8,8-pentamethyl-3-phenyl-5,6,7,8-tetrahydrobenz[f]-1-indenyl)(2,3,4,5-tetramethyl-1-cyclopentadienyl)zirconium dichloride;
dimethylsilylene(3-phenylbenz[e]-1-indenyl)(2,3,4,5-tetramethyl-1-cyclopentadienyl)zirconium dichloride;
dimethylsilylene(2-methyl-3-phenylbenz[e]-1-indenyl)(2,3,4,5-tetramethyl-1-cyclopentadienyl)zirconium dichloride;
dimethylsilylene(3-(4-methylphenyl)-1-indenyl)(2,3,4,5-tetramethyl-1-cyclopentadienyl)zirconium dichloride;
dimethylsilylene(3-(3,5-dimethylphenyl)-1-indenyl)(2,3,4,5-tetramethyl-1-cyclopentadienyl)zirconium dichloride;
dimethylsilylene(3-(2,6-dimethylphenyl)-1-indenyl)(2,3,4,5-tetramethyl-1-cyclopentadienyl)zirconium dichloride;
dimethylsilylene(3-(2,4-dimethylphenyl)-1-indenyl)(2,3,4,5-tetramethyl-1-cyclopentadienyl)zirconium dichloride;
dimethylsilylene(3-(3,4-dimethylphenyl)-1-indenyl)(2,3,4,5-tetramethyl-1-cyclopentadienyl)zirconium dichloride;
dimethylsilylene(3-(2,3-dimethylphenyl)-1-indenyl)(2,3,4,5-tetramethyl-1-cyclopentadienyl)zirconium dichloride;
dimethylsilylene(3-(2,5-dimethylphenyl)-1-indenyl)(2,3,4,5-tetramethyl-1-cyclopentadienyl)zirconium dichloride;
dimethylsilylene(3-(2,4,6-trimethylphenyl)-1-indenyl)(2,3,4,5-tetramethyl-1-cyclopentadienyl)zirconium dichloride;
dimethylsilylene(3-(2,3,4-trimethylphenyl)-1-indenyl)(2,3,4,5-tetramethyl-1-cyclopentadienyl)zirconium dichloride;
dimethylsilylene(3-(3,4,5-trimethylphenyl)-1-indenyl)(2,3,4,5-tetramethyl-1-cyclopentadienyl)zirconium dichloride;
dimethylsilylene(3-(2,3,5-trimethylphenyl)-1-indenyl)(2,3,4,5-tetramethyl-1-cyclopentadienyl)zirconium dichloride;
dimethylsilylene(3-(2,3,6-trimethylphenyl)-1-indenyl)(2,3,4,5-tetramethyl-1-cyclopentadienyl)zirconium dichloride;
dimethylsilylene(3-(2,4,5-trimethylphenyl)-1-indenyl)(2,3,4,5-tetramethyl-1-cyclopentadienyl)zirconium dichloride;
dimethylsilylene(3-(2,3,4,5-tetramethylphenyl)-1-indenyl)(2,3,4,5-tetramethyl-1-cyclopentadienyl)zirconium dichloride;
dimethylsilylene(3-(2,3 ,4,6-tetramethylphenyl)-1-indenyl)(2,3 ,4,5-tetramethyl-1-cyclopentadienyl)zirconium dichloride;
dimethylsilylene(3-(2,3,5,6-tetramethylphenyl)-1-indenyl)(2,3,4,5-tetramethyl-1-cyclopentadienyl)zirconium dichloride;
dimethylsilylene(3-(2,3,4,5,6-pentamethylphenyl)-1-indenyl)(2,3,4,5-tetramethyl-1-cyclopentadienyl)zirconium dichloride;
dimethylsilylene(3-(2-methylphenyl)-1-indenyl)(2,3,4,5-tetramethyl-1-cyclopentadienyl)zirconium dichloride;
dimethylsilylene(3-(2-ethylphenyl)-1-indenyl)(2,3,4,5-tetramethyl-1-cyclopentadienyl)zirconium dichloride;
dimethylsilylene(3-(2-propylphenyl)-1-indenyl)(2,3,4,5-tetramethyl-1-cyclopentadienyl)zirconium dichloride;
dimethylsilylene(3-(2-butylphenyl)-1-indenyl)(2,3,4,5-tetramethyl-1-cyclopentadienyl)zirconium dichloride;
dimethylsilylene(3-(3-methylphenyl)-1-indenyl)(2,3,4,5-tetramethyl-1-cyclopentadienyl)zirconium dichloride;
dimethylsilylene(3-(3-ethylphenyl)-1-indenyl)(2,3,4,5-tetramethyl-1-cyclopentadienyl)zirconium dichloride;
dimethylsilylene(3-(3-propylphenyl)-1-indenyl)(2,3,4,5-tetramethyl-1-cyclopentadienyl)zirconium dichloride;
dimethylsilylene(3-(3-butylphenyl)-1-indenyl)(2,3,4,5-tetramethyl-1-cyclopentadienyl)zirconium dichloride;
dimethylsilylene(3-(3-t-butylphenyl)-1-indenyl)(2,3,4,5-tetramethyl-1-cyclopentadienyl)zirconium dichloride;
dimethylsilylene(3-(4-methylphenyl)-1-indenyl)(2,3,4,5-tetramethyl-1-cyclopentadienyl)zirconium dichloride;
dimethylsilylene(3-(4-ethylphenyl)-1-indenyl)(2,3,4,5-tetramethyl-1-cyclopentadienyl)zirconium dichloride;
dimethylsilylene(3-(4-propylphenyl)-1-indenyl)(2,3,4,5-tetramethyl-1-cyclopentadienyl)zirconium dichloride;
dimethylsilylene(3-(4-butylphenyl)-1-indenyl)(2,3,4,5-tetramethyl-1-cyclopentadienyl)zirconium dichloride;
dimethylsilylene(3-(4-t-butylphenyl)-1-indenyl)(2,3,4,5-tetramethyl-1-cyclopentadienyl)zirconium dichloride;
dimethylsilylene(3-(4-biphenyl)-1-indenyl)(2,3,4,5-tetramethyl-1-cyclopentadienyl)zirconium dichloride;
dimethylsilylene(3-(3-biphenyl)-1-indenyl)(2,3,4,5-tetramethyl-1-cyclopentadienyl)zirconium dichloride;
dimethylsilylene(3-(2-biphenyl)-1-indenyl)(2,3,4,5-tetramethyl-1-cyclopentadienyl)zirconium dichloride;
dimethylsilylene(3-(3,5-diphenylphenyl)-1-indenyl)(2,3,4,5-tetramethyl-1-cyclopentadienyl)zirconium dichloride;
dimethylsilylene(3-(3,5-di-t-butylphenyl)-1-indenyl)(2,3,4,5-tetramethyl-1-cyclopentadienyl)zirconium dichloride;
dimethylsilylene(3-(2-fluorophenyl)-1-indenyl)(2,3,4,5-tetramethyl-1-cyclopentadienyl)zirconium dichloride;
dimethylsilylene(3-(3-fluorophenyl)-1-indenyl)(2,3,4,5-tetramethyl-1-cyclopentadienyl)zirconium dichloride;
dimethylsilylene(3-(4-fluorophenyl)-1-indenyl)(2,3,4,5-tetramethyl-1-cyclopentadienyl)zirconium dichloride;
dimethylsilylene(3-(2,3-difluorophenyl)-1-indenyl)(2,3,4,5-tetramethyl-1-cyclopentadienyl)zirconium dichloride;
dimethylsilylene(3-(2,4-difluorophenyl)-1-indenyl)(2,3,4,5-tetramethyl-1-cyclopentadienyl)zirconium dichloride;
dimethylsilylene(3-(2,5-difluorophenyl)-1-indenyl)(2,3,4,5-tetramethyl-1-cyclopentadienyl)zirconium dichloride;
dimethylsilylene(3-(2,6-difluorophenyl)-1-indenyl)(2,3,4,5-tetramethyl-1-cyclopentadienyl)zirconium dichloride;
dimethylsilylene(3-(3,4-difluorophenyl)-1-indenyl)(2,3,4,5-tetramethyl-1-cyclopentadienyl)zirconium dichloride;
dimethylsilylene(3-(3,5-difluorophenyl)-1-indenyl)(2,3,4,5-tetramethyl-1-cyclopentadienyl)zirconium dichloride;
dimethylsilylene(3-(2,3,4-trifluorophenyl)-1-indenyl)(2,3,4,5-tetramethyl-1-cyclopentadienyl)zirconium dichloride;
dimethylsilylene(3-(2,3,5-trifluorophenyl)-1-indenyl)(2,3,4,5-tetramethyl-1-cyclopentadienyl)zirconium dichloride;
dimethylsilylene(3-(2,3,6-trifluorophenyl)-1-indenyl)(2,3,4,5-tetramethyl-1-cyclopentadienyl)zirconium dichloride;
dimethylsilylene(3-(2,4,5-trifluorophenyl)-1-indenyl)(2,3,4,5-tetramethyl-1-cyclopentadienyl)zirconium dichloride;
dimethylsilylene(3-(2,4,6-trifluorophenyl)-1-indenyl)(2,3,4,5-tetramethyl-1-cyclopentadienyl)zirconium dichloride;
dimethylsilylene(3-(3,4,5-trifluorophenyl)-1-indenyl)(2,3,4,5-tetramethyl-1-cyclopentadienyl)zirconium dichloride;
dimethylsilylene(3-(2,3,4,5-tetrafluorophenyl)-1-indenyl)(2,3,4,5-tetramethyl-1-cyclopentadienyl)zirconium dichloride;
dimethylsilylene(3-(2,3,4,6-tetrafluorophenyl)-1-indenyl)(2,3,4,5-tetramethyl-1-cyclopentadienyl)zirconium dichloride;
dimethylsilylene(3-(2,3,5,6-tetrafluorophenyl)-1-indenyl)(2,3,4,5-tetramethyl-1-cyclopentadienyl)zirconium dichloride;
dimethylsilylene(3-(pentafluorophenyl)-1-indenyl)(2,3,4,5-tetramethyl-1-cyclopentadienyl)zirconium dichloride;
dimethylsilylene(3-(2-chlorophenyl)-1-indenyl)(2,3,4,5-tetramethyl-1-cyclopentadienyl)zirconium dichloride;
dimethylsilylene(3-(3-chlorophenyl)-1-indenyl)(2,3,4,5-tetramethyl-1-cyclopentadienyl)zirconium dichloride;
dimethylsilylene(3-(4-chlorophenyl)-1-indenyl)(2,3,4,5-tetramethyl-1 - cyclopentadienyl)zirconium dichloride;
dimethylsilylene(3-(2,6-dichlorophenyl)-1-indenyl)(2,3,4,5-tetramethyl-1-cyclopentadienyl)zirconium dichloride;
dimethylsilylene(3-(3,5-dichlorophenyl)-1-indenyl)(2,3,4,5-tetramethyl-1-cyclopentadienyl)zirconium dichloride;
dimethylsilylene(3-(2,4,6-trichlorophenyl)-1-indenyl)(2,3,4,5-tetramethyl-1-cyclopentadienyl)zirconium dichloride;
dimethylsilylene(3-(2-trifluoromethylphenyl)-1-indenyl)(2,3,4,5-tetramethyl-1-cyclopentadienyl)zirconium dichloride;
dimethylsilylene(3-(3 -trifluoromethylphenyl)-1-indenyl)(2,3,4,5-tetramethyl-1-cyclopentadienyl)zirconium dichloride;
dimethylsilylene(3-(4-trifluoromethylphenyl)-1-indenyl)(2,3,4,5-tetramethyl-1-cyclopentadienyl)zirconium dichloride;
dimethylsilylene(3-(3,5-bis(trifluoromethy)lphenyl)-1-indenyl)(2,3,4,5-tetramethyl-1-cyclopentadienyl)zirconium dichloride;
dimethylsilylene(3-(2-methoxyphenyl)-1-indenyl)(2,3,4,5-tetramethyl-1-cyclopentadienyl)zirconium dichloride;
dimethylsilylene(3-(3-methoxyphenyl)-1-indenyl)(2,3,4,5-tetramethyl-1-cyclopentadienyl)zirconium dichloride;
dimethylsilylene(3-(4-methoxyphenyl)-1-indenyl)(2,3,4,5-tetramethyl-1-cyclopentadienyl)zirconium dichloride;
dimethylsilylene(3-(2,6-dimethoxyphenyl)-1-indenyl)(2,3,4,5-tetramethyl-1-cyclopentadienyl)zirconium dichloride;
dimethylsilylene(3-(3,5-dimethoxyphenyl)-1-indenyl)(2,3,4,5-tetramethyl-1-cyclopentadienyl)zirconium dichloride;
dimethylsilylene(3-(2,4,6-trimethoxyphenyl)-1-indenyl)(2,3,4,5-tetramethyl-1-cyclopentadienyl)zirconium dichloride;
dimethylsilylene(3-(1-naphthyl)-1-indenyl)(2,3,4,5-tetramethyl-1-cyclopentadienyl)zirconium dichloride;
dimethylsilylene(3-(2-naphthyl)-1-indenyl)(2,3,4,5-tetramethyl-1-cyclopentadienyl)zirconium dichloride;
dimethylsilylene(2-methyl-3-(2-naphthyl)-1-indenyl)(2,3,4,5-tetramethyl-1-cyclopentadienyl)zirconium dichloride;
dimethylsilylene(3-(1-anthryl)-1-indenyl)(2,3,4,5-tetramethyl-1-cyclopentadienyl)zirconium dichloride;
dimethylsilylene(3-(2-anthryl)-1-indenyl)(2,3,4,5-tetramethyl-1-cyclopentadienyl)zirconium dichloride;
dimethylsilylene(3-(9-anthryl)-1-indenyl)(2,3,4,5-tetramethyl-1-cyclopentadienyl)zirconium dichloride;
dimethylsilylene(3-(9-phenanthryl)-1-indenyl)(2,3,4,5-tetramethyl-1-cyclopentadienyl)zirconium dichloride;
dimethylsilylene(3-(2-furanyl)-1-indenyl)(2,3,4,5-tetramethyl-,4,5-tetrapropyl-1-cyclopentadienyl)zirconium dichloride;
dimethylsilylene(3-(2-furanyl)-2-methyl-1-indenyl)(2,3,4,5-tetramethyl-1-cyclopentadienyl)zirconium dichloride;
dimethylsilylene(3-(3-furanyl)-1-indenyl)(2,3,4,5-tetramethyl-1-cyclopentadienyl)zirconium dichloride;
dimethylsilylene(3-(3-furanyl)-2-methyl-1-indenyl)(2,3,4,5-tetramethyl-1-cyclopentadienyl)zirconium dichloride;
dimethylsilylene(3-(2-thiophenyl)-1-indenyl)(2,3,4,5-tetramethyl-1-cyclopentadienyl)zirconium dichloride;
dimethylsilylene(2-methyl-3-(2-thiophenyl)-1-indenyl)(2,3,4,5-tetramethyl-1-cyclopentadienyl)zirconium dichloride;
dimethylsilylene(3-(3-thiophenyl)-1-indenyl)(2,3,4,5-tetramethyl-1-cyclopentadienyl)zirconium dichloride;
dimethylsilylene(2-methyl-3-(3-thiophenyl)-1-indenyl)(2,3,4,5-tetramethyl-1-cyclopentadienyl)zirconium dichloride;
dimethylsilylene(3-(2-pyridyl)-1-indenyl)(2,3,4,5-tetramethyl-1-cyclopentadienyl)zirconium dichloride;
dimethylsilylene(2-methyl-3-(2-pyridyl)-1-indenyl)(2,3,4,5-tetramethyl-1-cyclopentadienyl)zirconium dichloride;
dimethylsilylene(3-(3-pyridyl)-1-indenyl)(2,3,4,5-tetramethyl-1-cyclopentadienyl)zirconium dichloride;
dimethylsilylene(2-methyl-3-(3-pyridyl)-1-indenyl)(2,3,4,5-tetramethyl-1-cyclopentadienyl)zirconium dichloride;
titanium and hafnium analogs of the above zirconium dichloride compounds wherein the zirconium transition metal is replaced with titanium or hafnium; and
dimethyl analogs of the above dichloride compounds wherein the chloride groups on the zirconium, hafnium, or titanium transition metal are replaced with methyl groups.

### METALLOCENE CATALYST SYSTEMS

This invention also relates to a catalyst system comprising:
(i) a bridged metallocene compound represented by the following formula: 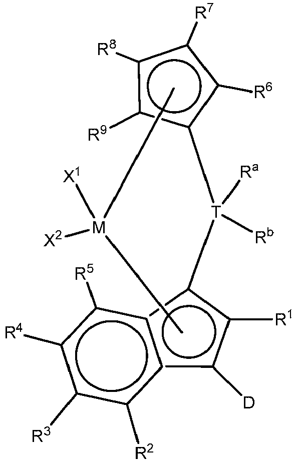 wherein:
   M is a group 4 metal (preferably, M is zirconium or hafnium; more preferably, zirconium);
   T is a group 14 atom (preferably, silicon or germanium; more preferably, silicon);
   D is a substituted or unsubstituted aromatic group (preferably, D is selected from the group consisting of substituted or unsubstituted phenyl, naphthyl, biphenyl, cyclopropenyl, tropylium, cyclooctatetraenyl, furanyl, pyridinyl, borabenzyl, thiophenyl, azolyl, oxazolyl, and imidazolyl; more preferably, D is selected from the group consisting of substituted or unsubstituted phenyl, naphthyl, biphenyl, cyclopropenyl, furanyl, pyridinyl, thiophenyl, azolyl, oxazolyl, and imidazolyl);
   R^{a} and R^{b} are independently, hydrogen, halogen, or a C₁ to C₂₀ substituted or unsubstituted hydrocarbyl, and R^{a} and R^{b} can form a cyclic structure including substituted or unsubstituted aromatic, partially saturated, or saturated cyclic or fused ring system(preferably each R^{a} and R^{b} is independently selected from the group consisting of halides, C₁ to C₂₀ substituted or unsubstituted hydrocarbyl groups, and cyclic structures where R^{a} and R^{b} form a heterocyclopentyl, heterocyclobutyl, or heterocyclohexyl structure with T being the heteroatom; more preferably each R^{a} and R^{b} is independently selected from the group consisting of chlorides, fluorides, methyl, and ethyl groups; more preferably, each R^{a} and R^{b} is, independently, selected from the group consisting of chlorides, fluorides, methyl, and ethyl groups);
   each X¹ and X² is independently selected from the group consisting of C₁ to C₂₀ substituted or unsubstituted hydrocarbyl groups, hydrides, amides, amines, alkoxides, sulfides, phosphides, halides, dienes, phosphines, and ethers; and X¹ and X² can form a cyclic structure including aromatic, partially saturated, or saturated cyclic or fused ring system; more preferably, each X¹ and X² is independently selected from the group consisting of chlorides, fluorides, methyl, and ethyl groups;
   each of R¹, R², R³, R⁴, and R⁵ is, independently, hydrogen, halide, alkoxide or a C₁ to C₄₀ substituted or unsubstituted hydrocarbyl group, and any of adjacent R², R³, R⁴, and/or R⁵ groups may form a fused ring or multicenter fused ring systems, where the rings may be substituted or unsubstituted, and may be aromatic, partially unsaturated, or unsaturated (preferably, each of R¹, R², R³, R⁴, and R⁵ is, independently, a C₁ to C₂₀ substituted or unsubstituted hydrocarbyl group); and
   each of R⁶, R⁷, R⁸, and R⁹ is, each independently, hydrogen or a C₁ to C₄₀ substituted or unsubstituted hydrocarbyl group (preferably, each of R⁶, R⁷, R⁸, and R⁹ is, independently, a C₁ to C₄₀ substituted or unsubstituted hydrocarbyl group; more preferably, each of R⁶, R⁷, R⁸, and R⁹ is, independently, a C₁ to C₂₀ substituted or unsubstituted hydrocarbyl group; more preferably, each of R⁶, R⁷, R⁸, and R⁹ is, independently, selected from the group consisting of methyl, ethyl, propyl, isopropyl, n-butyl, sec-butyl, t-butyl, pentyl, hexyl, heptyl, octyl, decyl, and undecyl groups; even more preferably, each of R⁶, R⁷, R⁸, and R⁹ is, independently, selected from the group consisting of methyl, ethyl, and n-propyl groups; preferably, adjacent R⁶, R⁷, R⁸, and/or R⁹ groups fuse together with the cyclopentadienyl group to form a substituted or unsubstituted fluorene);
   further provided that at least two of R⁶, R⁷, R⁸, and R⁹ are C₁ to C₄₀ substituted or unsubstituted hydrocarbyl groups;
(ii) at least one activator (preferably, an alumoxane or a stoichiometric activator);
(iii) optionally, a support material; and
(iv) optionally, a cocatalyst.

The metallocene catalyst system of this invention comprises a metallocene compound, an activator, an optional support material, and an optional cocatalyst/scavenger. The metallocene compound was discussed above. The activator, optional support material, and optional cocatalyst/scavenger are discussed below.

### ACTIVATORS

The term "activator" is used herein to be any compound which can activate any one of the metallocene compounds described above by converting the neutral catalyst compound to a catalytically active metallocene compound cation. Activators useful herein include alumoxanes and stoichiometric activators.

### Alumoxanes

Preferred activators typically include alumoxane compounds (or "alumoxanes") and modified alumoxane compounds. Alumoxanes are generally oligomeric compounds containing -Al(R¹)-O- sub-units, where R¹ is an alkyl group. Examples of alumoxanes include methylalumoxane (MAO), modified methylalumoxane (MMAO), ethylalumoxane, isobutylalumoxane, and mixtures thereof. Alkylalumoxanes and modified alkylalumoxanes are suitable as catalyst activators, particularly when the abstractable ligand is an alkyl, halide, alkoxide, or amide. Mixtures of different alumoxanes and modified alumoxanes may also be used. It may be preferable to use a visually clear methylalumoxane. A cloudy or gelled alumoxane can be filtered to produce a clear solution or clear alumoxane can be decanted from the cloudy solution. Another useful alumoxane is a modified methylalumoxane (MMAO) cocatalyst type 3A (commercially available from Akzo Chemicals, Inc. under the trade name Modified Methylalumoxane type 3A, covered under US 5,041,584). In preferred embodiments of this invention, the activator is an alkylalumoxane, preferably methylalumoxane or isobutylalumoxane.

The minimum activator metal-to-zirconium (preferably, aluminum from the alumoxane to zirconium from the zirconocene catalyst of the catalyst system) ratio is a 1:1 molar ratio. Alternate preferred ratios include up to 5000:1, preferably up to 500:1, preferably up to 200:1, preferably up to 100:1, or preferably from 1:1 to 50:1.

In some embodiments of this invention, the alumoxane activator may be supported on a support material prior to contact with the metallocene compound. In other embodiments, the alumoxane activator is combined with the metallocene compound prior to being placed upon a support material. In yet other embodiments, the alumoxane activator may be combined with the metallocene compound in the absence of a support material.

### Stoichiometric Activators

In preferred embodiments, the catalyst system of this invention further comprises one or more stoichiometric activators. A stoichiometric activator is a non-alumoxane compound which when combined in a reaction with the metallocene compound forms a catalytically active species at a molar ratio of stoichiometric activator to metallocene compound of 10:1 or less (preferably 5:1, more preferably 2:1, or even more preferably 1:1). It is within the scope of this invention to use a molar ratio of stoichiometric activator to metallocene compound of greater than 10:1. However, one of skill in the art would appreciate that the stoichiometric activator would be in excess and that a catalytically active species may be obtained using a molar ratio of stoichiometric activator to metallocene compound of 10:1 or less.

The typical stoichiometric (or non-alumoxane) activator-to-catalyst ratio is a 1:1 molar ratio. A particularly useful range is from 0.5:1 to 10:1, preferably 1:1 to 5:1. Alternate preferred ranges include from 0.1:1 to 100:1, alternately from 0.5:1 to 200:1, alternately from 1:1 to 500:1 alternately from 1:1 to 1000:1.

Stoichiometric activators are non-alumoxane compounds which may be neutral or ionic, such as tri (n-butyl) ammonium tetrakis (pentafluorophenyl) borate, a tris perfluorophenyl boron metalloid precursor, or a tris perfluoronaphthyl boron metalloid precursor, polyhalogenated heteroborane anions (WO 98/43983), boric acid (US 5,942,459), or a combination thereof. It is also within the scope of this invention to use stoichiometric activators alone or in combination with alumoxane or modified alumoxane activators.

### Neutral Stoichiometric Activators

Examples of neutral stoichiometric activators include tri-substituted boron, tellurium, aluminum, gallium, indium, or mixtures thereof. The three substituent groups are each independently selected from alkyls, alkenyls, halogens, substituted alkyls, aryls, arylhalides, alkoxy, and halides. Preferably, the three groups are independently selected from halogen, mono or multicyclic (including halosubstituted) aryls, alkyls, alkenyl compounds, and mixtures thereof; preferred are alkenyl groups having 1 to 20 carbon atoms, alkyl groups having 1 to 20 carbon atoms, alkoxy groups having 1 to 20 carbon atoms, and aryl groups having 3 to 20 carbon atoms (including substituted aryls). More preferably, the three groups are alkyls having 1 to 4 carbon groups, phenyl, naphthyl, or mixtures thereof. Even more preferably, the three groups are halogenated, preferably fluorinated, aryl groups. Most preferably, the neutral stoichiometric activator is tris perfluorophenyl boron or tris perfluoronaphthyl boron.

### Ionic Stoichiometric Activators

Ionic stoichiometric activators may contain an active proton, or some other cation associated with, but not coordinated to, or only loosely coordinated to, the remaining anion of the activator. Such compounds are described in European publications EP 0 570 982 A; EP 0 520 732 A; EP 0 495 375 A; EP 0 500 944 B1; EP 0 277 003 A; EP 0 277 004 A; US 5,153,157; US 5,198,401; US 5,066,741; US 5,206,197; US 5,241,025; US 5,384,299; US 5,502,124; and USSN 08/285,380, filed August 3, 1994.

Ionic stoichiometric activators comprise a cation, which is preferably a Bronsted acid capable of donating a proton, and a compatible non-coordinating anion. Preferably, the anion is relatively large (bulky), capable of stabilizing the catalytically active species (preferably a group 4 catalytically active species) which is formed when the metallocene compound and the stoichiometric activator are combined. Preferably the anion will be sufficiently labile to be displaced by olefinic, diolefinic, and acetylenically unsaturated substrates or other neutral Lewis bases, such as ethers, and amines. Two classes of compatible non-coordinating anions have been disclosed in EP 0 277,003 A and EP 0 277,004 A: 1) anionic coordination complexes comprising a plurality of lipophilic radicals covalently coordinated to and shielding a central charge-bearing metal or metalloid core, and 2) anions comprising a plurality of boron atoms, such as carboranes, metallacarboranes, and boranes.

Ionic stoichiometric activators comprise an anion, preferably a non-coordinating anion. The term "non-coordinating anion" (NCA) means an anion which either does not coordinate to said cation or which is only weakly coordinated to said cation thereby remaining sufficiently labile to be displaced by a neutral Lewis base. "Compatible" non-coordinating anions are those which are not degraded to neutrality when the initially formed complex decomposes. Further, the anion will not transfer an anionic substituent or fragment to the cation so as to cause it to form a neutral four coordinate metallocene compound and a neutral by-product from the anion. Non-coordinating anions useful in accordance with this invention are those that are compatible, stabilize the metallocene cation in the sense of balancing its ionic charge at +1, yet retain sufficient lability to permit displacement by an ethylenically or acetylenically unsaturated monomer during polymerization.

In a preferred embodiment of this invention, the ionic stoichiometric activators are represented by the following formula (1):

(Z)_{d}⁺ A^{d-} (1)

wherein (Z)_{d}⁺ is the cation component and A^{d-} is the anion component; where Z is (L-H) or a reducible Lewis Acid, L is an neutral Lewis base; H is hydrogen; (L-H)⁺ is a Bronsted acid; A^{d-} is a non-coordinating anion having the charge d-; and d is an integer from 1 to 3.

When Z is (L-H) such that the cation component is (L-H)_{d}⁺, the cation component may include Bronsted acids such as protonated Lewis bases capable of protonating a moiety, such as an alkyl or aryl, from the bulky ligand metallocene containing transition metal catalyst precursor, resulting in a cationic transition metal species. Preferably, the activating cation (L-H)_{d}⁺ is a Bronsted acid, capable of donating a proton to the transition metal catalytic precursor resulting in a transition metal cation, including ammoniums, oxoniums, phosphoniums, silyliums, and mixtures thereof, preferably ammoniums of methylamine, aniline, dimethylamine, diethylamine, N-methylaniline, diphenylamine, trimethylamine, triethylamine, N,N-dimethylaniline, methyldiphenylamine, pyridine, p-bromo N,N-dimethylaniline, p-nitro-N,N-dimethylaniline, phosphoniums from triethylphosphine, triphenylphosphine, and diphenylphosphine, oxoniums from ethers, such as dimethyl ether diethyl ether, tetrahydrofuran, and dioxane, sulfoniums from thioethers, such as diethyl thioethers and tetrahydrothiophene, and mixtures thereof.

When Z is a reducible Lewis acid, (Z)_{d}⁺ is preferably represented by the formula: (Ar₃C)⁺, where Ar is aryl or aryl substituted with a heteroatom, a C₁ to C₄₀ hydrocarbyl, or a substituted C₁ to C₄₀ hydrocarbyl, preferably (Z)_{d}⁺ is represented by the formula: (Ph₃C)⁺, where Ph is phenyl or phenyl substituted with a heteroatom, a C₁ to C₄₀ hydrocarbyl, or a substituted C₁ to C₄₀ hydrocarbyl. In a preferred embodiment, the reducible Lewis acid is triphenyl carbenium.

The anion component A^{d-} includes those having the formula [M^{k+}Qₙ]^{d-} wherein k is 1, 2, or 3; n is 1, 2, 3, 4, 5, or 6, preferably 3, 4, 5, or 6; (n - k) = d; M is an element selected from group 13 of the Periodic Table of the Elements, preferably boron or aluminum; and each Q is, independently, a hydride, bridged or unbridged dialkylamido, halide, alkoxide, aryloxide, hydrocarbyl, substituted hydrocarbyl, halocarbyl, substituted halocarbyl, and halosubstituted-hydrocarbyl radicals, said Q having up to 20 carbon atoms with the proviso that in not more than one occurrence is Q a halide, and two Q groups may form a ring structure. Preferably, each Q is a fluorinated hydrocarbyl group having 1 to 20 carbon atoms, more preferably each Q is a fluorinated aryl group, and most preferably each Q is a pentafluoryl aryl group. Examples of suitable A^{d-} components also include diboron compounds as disclosed in US 5,447,895.

In other embodiments of this invention, the ionic stoichiometric activator may be an activator comprising expanded anions, represented by the formula:

(A*^{+a})_{b}(Z*J*ⱼ)^{-c} _{d};

wherein A* is a cation having charge +a; Z* is an anion group of from 1 to 50 atoms not counting hydrogen atoms, further containing two or more Lewis base sites; J* independently each occurrence is a Lewis acid coordinated to at least one Lewis base site of Z*, and optionally two or more such J* groups may be joined together in a moiety having multiple Lewis acid functionality; J is a number from 2 to 12; and a, b, c, and d are integers from 1 to 3, with the proviso that a x b is equal to c x d. Examples of such activators comprising expandable anions may be found in US 6,395,671.

Most preferably, the ionic stoichiometric activator is N,N-dimethylanilinium tetrakis(perfluoronaphthyl)borate, N,N-dimethylanilinium tetrakis(perfluorobiphenyl)borate, N,N-dimethylanilinium tetrakis(3,5-bis(trifluoromethyl)phenyl)borate, triphenylcarbenium tetrakis(perfluoronaphthyl)borate, triphenylcarbenium tetrakis(perfluorobiphenyl)borate, triphenylcarbenium tetrakis(3,5-bis(trifluoromethyl)phenyl)borate, or triphenylcarbenium tetrakis(perfluorophenyl)borate.

### Bulky Ionic Stoichiometric Activators

"Bulky activator" as used herein refers to ionic stoichiometric activators represented by the formula: 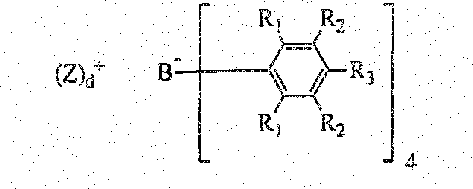 where:
each R₁ is, independently, a halide, preferably a fluoride;
each R₂ is, independently, a halide, a C₆ to C₂₀ substituted aromatic hydrocarbyl group or a siloxy group of the formula -O-Si-Rₐ, where R^{a} is a C₁ to C₂₀ substituted or unsubstituted hydrocarbyl or hydrocarbylsilyl group (preferably, R₂ is a fluoride or a perfluorinated phenyl group);
each R₃ is a halide, C₆ to C₂₀ substituted aromatic hydrocarbyl group or a siloxy group of the formula -O-Si-Rₐ, where Rₐ is a C₁ to C₂₀ substituted or unsubstituted hydrocarbyl or hydrocarbylsilyl group (preferably, R₃ is a fluoride or a C₆ perfluorinated aromatic hydrocarbyl group); wherein R₂ and R₃ can form one or more saturated or unsaturated, substituted or unsubstituted rings (preferably, R₂ and R₃ form a perfluorinated phenyl ring);
(Z)_{d}⁺ is the cation component; where Z is (L-H) or a reducible Lewis Acid, L is an neutral Lewis base; H is hydrogen; (L-H)⁺ is a Bronsted acid; and d is an integer from I to 3;
wherein the boron anion component has a molecular weight of greater than 1020 g/mol; and wherein at least three of the substituents on the B atom each have a molecular volume of greater than 250 cubic Å, alternately greater than 300 cubic Å, or alternately greater than 500 cubic Å.

"Molecular volume" is used herein as an approximation of spatial steric bulk of an activator molecule in solution. Comparison of substituents with differing molecular volumes allows the substituent with the smaller molecular volume to be considered "less bulky" in comparison to the substituent with the larger molecular volume. Conversely, a substituent with a larger molecular volume may be considered "more bulky" than a substituent with a smaller molecular volume.

Exemplary bulky ionic stoichiometric activators useful in catalyst systems herein include: trimethylammonium tetrakis(perfluoronaphthyl)borate, triethylammonium tetrakis(perfluoronaphthyl)borate, tripropylammonium tetrakis(perfluoronaphthyl)borate, tri(n-butyl)ammonium tetrakis(perfluoronaphthyl)borate, tri(t-butyl)ammonium tetrakis(perfluoronaphthyl)borate, N,N-dimethylanilinium tetrakis(perfluoronaphthyl)borate, N,N-diethylanilinium tetrakis(perfluoronaphthyl)borate, N,N-dimethyl-(2,4,6-trimethylanilinium) tetrakis(perfluoronaphthyl)borate, tropillium tetrakis(perfluoronaphthyl)borate, triphenylcarbenium tetrakis(perfluoronaphthyl)borate, triphenylphosphonium tetrakis(perfluoronaphthyl)borate, triethylsilylium tetrakis(perfluoronaphthyl)borate, benzene(diazonium) tetrakis(perfluoronaphthyl)borate, trimethylammonium tetrakis(perfluorobiphenyl)borate, triethylammonium tetrakis(perfluorobiphenyl)borate, tripropylammonium tetrakis(perfluorobiphenyl)borate, tri(n-butyl)ammonium tetrakis(perfluorobiphenyl)borate, tri(t-butyl)ammonium tetrakis(perfluorobiphenyl)borate, N,N-dimethylanilinium tetrakis(perfluorobiphenyl)borate, N,N-diethylanilinium tetrakis(perfluorobiphenyl)borate, N,N-dimethyl-(2,4,6-trimethylanilinium) tetrakis(perfluorobiphenyl)borate, tropillium tetrakis(perfluorobiphenyl)borate, triphenylcarbenium tetrakis(perfluorobiphenyl)borate, triphenylphosphonium tetrakis(perfluorobiphenyl)borate, triethylsilylium tetrakis(perfluorobiphenyl)borate, benzene(diazonium) tetrakis(perfluorobiphenyl)borate, [4-t-butyl-PhNMe₂H][(C₆F₃(C₆F₅)₂)₄B], (where Ph is phenyl and Me is methyl), and the types disclosed in US 7,297,653.

In another embodiment of this invention, an activation method using ionic compounds not containing an active proton but capable of producing a bulky ligand metallocene catalyst cation and their non-coordinating anion are also contemplated, and are described in EP 0 426 637 A, EP 0 573 403 A, and US 5,387,568.

In another embodiment of this invention, inventive processes also can employ stoichiometric activator compounds that are initially neutral Lewis acids but form a cationic metal complex and a noncoordinating anion, or a zwitterionic complex upon reaction with the metallocene compounds. For example, tris(pentafluorophenyl) boron or aluminum may act to abstract a hydrocarbyl or hydride ligand to yield an invention cationic metal complex and stabilizing noncoordinating anion, see EP 0 427 697 A and EP 0 520 732 A for illustrations of analogous group 4 metallocene compounds. Also, see the methods and compounds of EP 0 495 375 A. For formation of zwitterionic complexes using analogous group 4 compounds, see US 5,624,878; US 5,486,632; and US 5,527,929.

In another embodiment of this invention, another suitable ionic stoichiometric activator comprises a salt of a cationic oxidizing agent and a noncoordinating, compatible anion represented by the formula:

(X^{e+})_{d} (A^{d-})_{c} (3)

wherein X^{e+} is a cationic oxidizing agent having a charge of e+; e is 1, 2, or 3; A^{d-} is a non-coordinating anion having the charge d-; and d is 1, 2, or 3. Examples of X^{e+} include: ferrocenium, hydrocarbyl-substituted ferrocenium, Ag⁺, or Pb⁺². Preferred embodiments of A^{d-} are those anions previously defined with respect to the Bronsted acid containing activators, especially tetrakis(pentafluorophenyl)borate.

### Activator Combinations

It is within the scope of this invention that metallocene compounds can be combined with one or more activators or activation methods described above. For example, a combination of activators have been described in US 5,153,157; US 5,453,410; EP 0 573 120 B1; WO 94/07928; and WO 95/14044. These documents all discuss the use of an alumoxane in combination with a stoichiometric activator.

### Optional Cocatalysts

In addition to these alumoxane activator compounds, cocatalysts may be used. Aluminum alkyl or organometallic compounds which may be utilized as cocatalysts (or scavengers) include, for example, triethylaluminum, tri-isobutylaluminum, tri-n-hexylaluminum, tri-n-octylaluminum, diethyl aluminum chloride, dibutyl zinc, and diethyl zinc.

Preferably, cocatalyst is present at a molar ratio of cocatalyst metal to transition metal of less than 100:1, preferably less than 50:1, preferably less than 15:1, preferably less than 10:1. In alternate embodiments, the cocatalyst is present at 0 wt%.

Other additives may also be used, as desired, such as one or more scavengers, promoters, modifiers, reducing agents, oxidizing agents, aluminum alkyls, or silanes.

### SUPPORT MATERIAL

In preferred embodiments of the invention herein, the catalyst system comprises an inert support material. Preferably, the supported material is a porous support material, for example, talc, and inorganic oxides. Other support materials include zeolites, clays, organoclays, or any other organic or inorganic support material, or mixtures thereof.

Preferably, the support material is an inorganic oxide in a finely divided form. Suitable inorganic oxide materials for use in metallocene catalyst systems herein include Groups 2, 4, 13, and 14 metal oxides such as silica, alumina, and mixtures thereof. Other inorganic oxides that may be employed, either alone or in combination, with the silica or alumina are magnesia, titania, and zirconia. Other suitable support materials, however, can be employed, for example, finely divided functionalized polyolefins such as finely divided polyethylene. Particularly useful supports include magnesia, titania, zirconia, montmorillonite, phyllosilicate, zeolites, talc, and clays. Also, combinations of these support materials may be used, for example, silica-chromium, silica-alumina, and silica-titania. Preferred support materials include Al₂O₃, ZrO₂, SiO₂, and combinations thereof, more preferably SiO₂, Al₂O₃, or SiO₂/Al₂O₃.

It is preferred that the support material, most preferably an inorganic oxide, has a surface area in the range of from 10 m²/g to 700 m²/g, pore volume in the range of from 0.1 cc/g to 4.0 cc/g, and average particle size in the range of from 5 µm to 500 µm. More preferably, the surface area of the support material is in the range of from 50 m²/g to 500 m²/g, pore volume of from 0.5 cc/g to 3.5 cc/g, and average particle size of from 10 µm to 200 µm. Most preferably, the surface area of the support material is in the range is from 100 m²/g to 400 m²/g, pore volume from 0.8 cc/g to 3.0 cc/g, and average particle size is from 5 µm to 100 µm. The average pore size of the support material useful in the invention is in the range of from 10 to 1000 Å, preferably 50 to 500 Å, and most preferably 75 to 350 Å. In some embodiments, the support material is a high surface area, amorphous silica (surface area ≥ 300 m²/gm, pore volume ≥ 1.65 cm³/gm), and is marketed under the tradenames of DAVISON™ 952 or DAVISON™ 955 by the Davison Chemical Division of W. R. Grace and Company, are particularly useful. In other embodiments, DAVISON™ 948 is used.

In some embodiments of this invention, the support material may be dry, that is, free of absorbed water. Drying of the support material can be achieved by heating or calcining at 100°C to 1000°C, preferably at least 600°C. When the support material is silica, it is typically heated to at least 200°C, preferably 200°C to 850°C, and most preferably at 600°C; and for a time of 1 minute to 100 hours, from 12 hours to 72 hours, or from 24 hours to 60 hours.

### METHODS OF MAKING THE CATALYST SYSTEM

The catalyst system may be may be supported or unsupported. In embodiments where the catalyst system is unsupported, the metallocene compound may be activated with the activator in situ in the reactor, or may be pre-activated before addition to the reactor. Preactivation may involve contacting the metallocene compound with the activator, in solution, at a temperature in the range of from 0°C to 100°C, preferably to 25°C to 60°C, preferably at room temperature (25°C) for a time period of from 2 minutes to 24 hours, preferably from 0.5 hours to 24 hours, from 2 hours to 16 hours, or from 4 hours to 8 hours. Such unsupported catalysts systems may be useful in solution polymerizations. Preferred activators for solution polymerizations are the stoichiometric activators, preferably ionic stoichiometric activators. Suitable solvents are materials in which all of the reagents used herein, i.e., the activator, and the metallocene compound, are at least partially soluble and which are liquid at reaction temperatures. Preferred solvents are alkanes, such as isopentane, hexane, n-heptane, octane, nonane, and decane, although a variety of other materials including cycloalkanes, such as cyclohexane, aromatics, such as benzene, toluene, and ethylbenzene, alone or in combination, may also be employed.

In embodiments where the catalyst system is a supported catalyst system, any method of supporting the metallocene compound and activator may be used. In some embodiments of this invention, the support material, typically having reactive surface groups, typically hydroxyl groups, is slurried in a non-polar solvent and the resulting slurry is contacted with a solution of an activator. The slurry mixture may be heated to 0°C to 70°C, preferably to 25°C to 60°C, preferably at room temperature (25°C). Contact times typically range from 0.5 hours to 24 hours, from 2 hours to 16 hours, or from 4 hours to 8 hours.

Suitable non-polar solvents are materials in which all of the reagents used herein, i.e., the activator, and the metallocene compound, are at least partially soluble and which are liquid at reaction temperatures. Preferred non-polar solvents are alkanes, such as isopentane, hexane, n-heptane, octane, nonane, and decane, although a variety of other materials including cycloalkanes, such as cyclohexane, aromatics, such as benzene, toluene, and ethylbenzene, alone or in combination, may also be employed.

In particular embodiments of the invention, where the activator is an alumoxane, the support material is contacted with a solution of an alumoxane activator to form a supported alumoxane activator. The period of time for contact between the activator and the support material is as long as is necessary to titrate the reactive groups on the support material. To "titrate" is meant to react with available reactive groups on the surface of the support material, thereby reducing the surface hydroxyl groups by at least 80%, at least 90%, at least 95%, or at least 98%. The surface reactive group concentration may be determined based on the calcining temperature and the type of support material used. The support material calcining temperature affects the number of surface reactive groups on the support material available to react with the metallocene compound and an alumoxane activator: the higher the drying temperature, the lower the number of sites. For example, where the support material is silica which, prior to the use thereof in the first catalyst system synthesis step, is dehydrated by fluidizing it with nitrogen and heating at 600°C for 16 hours, a surface hydroxyl group concentration of 0.5 to 0.9 millimoles per gram, preferably 0.7 (mmols/gm) is typically achieved. Thus, the exact molar ratio of the activator to the surface reactive groups on the carrier will vary. Preferably, this is determined on a case-by-case basis to assure that only so much of the activator is added to the solution as will be deposited onto the support material without leaving excess of the activator in the solution.

The amount of the activator which will be deposited onto the support material without leaving excess in the solution can be determined in any conventional manner, e.g., by adding the activator to the slurry of the carrier in the solvent, while stirring the slurry, until the activator is detected as a solution in the solvent by any technique known in the art, such as by ¹H NMR. For example, for the silica support material heated at 600°C, the amount of the alumoxane activator added to the slurry is such that the molar ratio of Al to the hydroxyl groups (OH) on the silica is 0.5:1 to 4:1, preferably 0.8:1 to 3:1, more preferably 0.9:1 to 2:1, and most preferably 1:1. The amount of Al in/on the silica may be determined by using ICPES (Inductively Coupled Plasma Emission Spectrometry), which is described in J. W. Olesik, "Inductively Coupled Plasma-Optical Emission Spectroscopy," in the Encyclopedia of Materials Characterization, C. R. Brundle, C. A. Evans, Jr. and S. Wilson, eds., Butterworth-Heinemann, Boston, Mass., 1992, pp. 633-644. In another embodiment, it is also possible to add such an amount of the activator which is in excess of that which will be deposited onto the support material, and then remove, e.g., by filtration and washing.

The supported activator is then slurried into an appropriate solvent, preferably a non-polar solvent. Preferred non-polar solvents are alkanes, such as isopentane, hexane, n-heptane, octane, nonane, and decane, although a variety of other materials including cycloalkanes, such as cyclohexane, aromatics, such as benzene, toluene, and ethylbenzene, may also be employed. The metallocene compound is added to the slurry mixture and heated to a temperature in the range of from 0°C to 70°C, preferably from 25°C to 60°C, most preferably at 25°C. Contact times typically range from 0.5 hours to 24 hours, from 2 hours to 16 hours, or from 4 hours to 8 hours. The volatiles are removed to yield the supported catalyst system, preferably as a free-flowing solid.

In other embodiments, the metallocene compound is contacted with the alumoxane activator in solution, preferably in a solution of non-polar solvent, such as those above. The solution may be heated to 0°C to 70°C, preferably from 25°C to 60°C, preferably at 25°C. Contact times may range from 0.5 hours to 24 hours, from 2 hours to 16 hours, or from 4 hours to 8 hours. The metallocene-activator solution is then contacted with the support material to form a slurry mixture. The slurry mixture may be heated to 0°C to 70°C, preferably from 25° to 60°C, preferably at 25°C. Contact times may range from 0.5 hours to 24 hours, from 2 hours to 16 hours, or from 4 hours to 8 hours. The volatiles are removed, preferably under vacuum, to yield the supported catalyst system, preferably as a free-flowing solid.

In some embodiments, the weight ratio of the zirconocene catalyst to the solid support material may be from 10:1 to 0.0001:1, from 1:1 to 0.001:1, or from 0.1:1 to 0.001:1. The weight ratio of the support material to the alumoxane activator compound may range from 1:10 to 100:1, from 1:1 to 100:1, or from 1:1 to 10:1.

In some embodiments, the supported catalyst system is suspended in a paraffinic agent, such as mineral oil, for easy addition to a reactor system, for example a gas phase polymerization system.

### POLYMERIZATION PROCESSES

This invention also relates to ethylene polymerization processes comprising: contacting ethylene with the metallocene catalyst system of the present invention under polymerization conditions; and obtaining an ethylene polymer.

The metallocene catalyst systems described herein are useful in the polymerization of ethylene. This includes polymerization processes which produce homopolymers, copolymers, terpolymers, as well as block copolymers and impact copolymers.

According to the invention, the monomer comprises ethylene and optional comonomers comprising one or more C₃ to C₄₀ olefins, preferably C₄ to C₂₀ olefins, or preferably C₆ to C₁₂ olefins. The C₃ to C₄₀ olefin monomers may be linear, branched, or cyclic. The C₃ to C₄₀ cyclic olefins may be strained or unstrained, monocyclic or polycyclic, and may optionally include heteroatoms and/or one or more functional groups.

Examples of optional comonomers include ethylene, propylene, butene, pentene, hexene, heptene, octene, nonene, decene, undecene, dodecene, norbornene, norbornadiene, dicyclopentadiene, cyclopentene, cycloheptene, cyclooctene, cyclooctadiene, cyclododecene, 7-oxanorbornene, 7-oxanorbomadiene, substituted derivatives thereof, and isomers thereof, preferably hexene, heptene, octene, nonene, decene, dodecene, cyclooctene, 1,5-cyclooctadiene, 1-hydroxy-4-cyclooctene, 1-acetoxy-4-cyclooctene, 5-methylcyclopentene, cyclopentene, dicyclopentadiene, norbornene, norbornadiene, and their respective homologs and derivatives, preferably norbornene, norbornadiene, and dicyclopentadiene. Preferably, the copolymerization is carried out using olefins such as propylene, 1-butene, 1-hexene, 4-methyl-1-pentene, and 1-octene, vinylcyclohexane, norbornene and norbornadiene. In particular, propylene and ethylene are polymerized.

In some embodiments, where butene is the comonomer, the butene source may be a mixed butene stream comprising various isomers of butene. The 1-butene monomers are expected to be preferentially consumed by the polymerization process. Use of such mixed butene streams will provide an economic benefit, as these mixed streams are often waste streams from refining processes, for example, C₄ raffinate streams, and can therefore be substantially less expensive than pure 1-butene.

Polymerization processes of this invention can be carried out in any manner known in the art, in solution, in suspension or in the gas phase, continuously or batchwise, or any combination thereof, in one or more steps. Homogeneous polymerization processes, slurry, and gas phase processes are preferred. (A homogeneous polymerization process is defined to be a process where at least 90 wt% of the product is soluble in the reaction media.) A bulk homogeneous process is particularly preferred. (A bulk process is defined to be a process where monomer concentration in all feeds to the reactor is 70 vol% or more.) Alternately, no solvent or diluent is present or added in the reaction medium (except for the small amounts used as the carrier for the catalyst system or other additives, or amounts typically found with the monomer; e.g., propane in propylene). In another embodiment, the process is a slurry process. As used herein the term "slurry polymerization process" means a polymerization process where a supported catalyst is employed and monomers are polymerized on the supported catalyst particles and at least 95 wt% of polymer products derived from the supported catalyst are in granular form as solid particles (not dissolved in the diluent).

If the polymerization is carried out as a suspension or solution polymerization, an inert solvent may be used, for example, the polymerization may be carried out in suitable diluents/solvents. Suitable diluents/solvents for polymerization include non-coordinating, inert liquids. Examples include straight and branched-chain hydrocarbons, such as isobutane, butane, pentane, isopentane, hexanes, isohexane, heptane, octane, dodecane, and mixtures thereof; cyclic and alicyclic hydrocarbons, such as cyclohexane, cycloheptane, methylcyclohexane, methylcycloheptane, and mixtures thereof, such as can be found commercially (Isopar™); perhalogenated hydrocarbons, such as perfluorinated C₄₋₁₀ alkanes, chlorobenzene, and aromatic and alkylsubstituted aromatic compounds, such as benzene, toluene, mesitylene, and xylene. Suitable solvents also include liquid olefins which may act as monomers or comonomers including ethylene, propylene, 1-butene, 1-hexene, 1-pentene, 3-methyl-1-pentene, 4-methyl-1-pentene, 1-octene, 1-decene, and mixtures thereof. In a preferred embodiment, aliphatic hydrocarbon solvents are used as the solvent, such as isobutane, butane, pentane, isopentane, hexanes, isohexane, heptane, octane, dodecane, and mixtures thereof; cyclic and alicyclic hydrocarbons, such as cyclohexane, cycloheptane, methylcyclohexane, methylcycloheptane, and mixtures thereof. In another embodiment, the solvent is not aromatic, preferably aromatics are present in the solvent at less than 1 wt%, preferably less than 0.5 wt%, preferably less than 0 wt%, based upon the weight of the solvents. It is also possible to use mineral spirit or a hydrogenated diesel oil fraction as a solvent. Toluene may also be used. The polymerization is preferably carried out in the liquid monomer(s). If inert solvents are used, the monomer(s) is (are) metered in gas or liquid form.

In a preferred embodiment, the feed concentration of the monomers and comonomers for the polymerization is 60 vol% solvent or less, preferably 40 vol% or less, or preferably 20 vol% or less, based on the total volume of the feedstream. Preferably, the polymerization is run in a bulk process.

Preferred polymerizations can be run at any temperature and/or pressure suitable to obtain the desired polymers. Typical temperatures and/or pressures include a temperature greater than 30°C, preferably greater than 50°C, preferably greater than 65°C, alternately less than 200°C, preferably less than 150°C, most preferably less than 140°C, and at a pressure in the range of from 0.35 MPa to 10 MPa, preferably from 0.45 MPa to 6 MPa, or preferably from 0.5 MPa to 4 MPa.

In a typical polymerization, the run time of the reaction is up to 300 minutes, preferably in the range of from 5 to 250 minutes, or preferably from 10 to 120 minutes.

If necessary, hydrogen is added as a molecular-weight regulator and/or in order to increase the activity. The overall pressure in the polymerization system usually is at least 0.5 bar, preferably at least 2 bar, most preferred at least 5 bar. Pressures higher than 100 bar, e.g., higher than 80 bar and, in particular, higher than 64 bar, are usually not preferred. In some embodiments, hydrogen is present in the polymerization reactor at a partial pressure of from 0.001 to 100 psig (0.007 to 690 kPa), preferably from 0.001 to 50 psig (0.007 to 345 kPa), preferably from 0.01 to 25 psig (0.07 to 172 kPa), more preferably 0.1 to 10 psig (0.7 to 70 kPa).

In an alternate embodiment, the productivity of the catalyst is at least 50 gpolymer/g (cat)/hour, preferably 500 or more gpolymer/g (cat)/hour, preferably 5000 or more gpolymer/g (cat)/hour, preferably 50,000 or more gpolymer/g (cat)/hour.

In an alternate embodiment, the conversion of olefin monomer is at least 10%, based upon polymer yield and the weight of the monomer entering the reaction zone, preferably 20% or more, preferably 30% or more, preferably 50% or more, preferably 80% or more. A "reaction zone", also referred to as a "polymerization zone", is a vessel where polymerization takes place, for example, a batch reactor. When multiple reactors are used in either series or parallel configuration, each reactor is considered as a separate polymerization zone. For a multi-stage polymerization in both a batch reactor and a continuous reactor, each polymerization stage is considered as a separate polymerization zone. In preferred embodiments, the polymerization occurs in one, two, three, four, or more reaction zones.

In a preferred embodiment, the catalyst system used in the polymerization comprises no more than one catalyst compound.

Other additives may also be used in the polymerization, as desired, such as one or more scavengers, promoters, modifiers, chain transfer agents (such as diethyl zinc), reducing agents, oxidizing agents, hydrogen, aluminum alkyls, or silanes.

### POLYOLEFIN PRODUCTS

Polyolefins produced using the metallocene catalyst systems of this invention, are ethylene homopolymers and copolymers, particularly polyethylene, having a density in the range of 0.916 to 0.940 g/cc, preferably in the range of from 0.920 to 0.940 g/cc, preferably 0.920 to 0.935 g/cc.

The process described herein produces ethylene homopolymers or copolymers, such as ethylene-propylene and/or ethylene-α-olefin (preferably C₃ and/or C₄ to C₂₀) copolymers (such as ethylene-hexene copolymers, ethylene-octene copolymers, or ethylene-propylene-hexene terpolymers) having a Mw/Mn of greater than 1 to 40 (preferably greater than 1 to 5). Preferably, copolymers of ethylene have from 0 wt% to 25 wt% (alternately from 0.5 wt% to 20 wt%, alternately from 1 wt% to 15 wt%, preferably from 3 wt% to 10 wt%, preferably less than 1 wt%, preferably 0 wt%) of one or more of C₃ to C₄₀ olefin comonomer (preferably propylene or C₃ to C₂₀ or C₄ to C₁₂ alpha olefin comonomer, preferably propylene, butene, hexene, octene, decene, dodecene, preferably ethylene, butene, hexene, and octene).

### USES OF POLYOLEFINS

Polyolefins prepared using the processes described herein find uses in all applications including fibers, injection molded parts, films, pipes, and wire and cable applications. Examples include carpet fibers and primary and secondary carpet backing; slit tape applications such as tarpaulins, erosion abatement screens, sand bags, fertilizer and feed bags, swimming pool covers, intermediate bulk container (IBC) bags; non-woven applications for spun-bonded, melt blown and thermobonded fibers; carded web applications such as disposable diaper liners, feminine hygiene products, tarpaulins and tent fabrics, and hospital garments; apparel applications such as socks, T-shirts, undergarments, bicycle shorts, sweat bands, football undershirts, hiking socks, and other outdoor sporting apparel; cordage applications such as mooring and towing lines and rope; netting applications such as safety fences and geogrids for soil stabilization; injection molded applications such as appliance parts in automatic dishwashers and clothes washers, hand tools, and kitchen appliances; consumer product applications such as outdoor furniture, luggage, infant car seats, ice coolers, yard equipment; medical applications such as disposable syringes and other hospital and laboratory devices; rigid packaging made by injection molding, blow molding, or thermoforming such as margarine tubs, yogurt containers and closures, commercial bottles, and ready-to-eat food containers; transportation applications such as automotive interior trim, instrument panels, bumper fascia, grills and external trim parts, battery cases; film applications such as snack packages and other food packaging and film labels, packing tapes and pressure sensitive labels; wire and cable applications such as wire insulation.

The polyolefins described herein may be used by themselves or blended with one or more additional polymers. In another embodiment, the polyolefin (preferably propylene or ethylene homopolymer or copolymer) produced herein is combined with one or more additional polymers prior to being formed into a film, molded part, or other article. Useful additional polymers include polyethylene, isotactic polypropylene, highly isotactic polypropylene, syndiotactic polypropylene, random copolymer of propylene and ethylene, and/or butene, and/or hexene, polybutene, ethylene vinyl acetate, LDPE (low density polyethylene), LLDPE (linear low density polyethylene), HDPE (high density polyethylene), ethylene vinyl acetate, ethylene methyl acrylate, copolymers of acrylic acid, polymethylmethacrylate or any other polymers polymerizable by a high-pressure free radical process, polyvinylchloride, polybutene-1, isotactic polybutene, ABS resins, ethylene-propylene rubber (EPR), vulcanized EPR, EPDM (ethylene-propylene-diene monomer rubber), block copolymer, styrenic block copolymers, polyamides, polycarbonates, PET (polyethylene terephthalate) resins, cross linked polyethylene, copolymers of ethylene and vinyl alcohol (EVOH), polymers of aromatic monomers such as polystyrene, poly-1 esters, polyacetal, polyvinylidine fluoride, polyethylene glycols, and/or polyisobutylene.

In other embodiments, this invention relates to:
1. A bridged metallocene compound represented by the following formula: 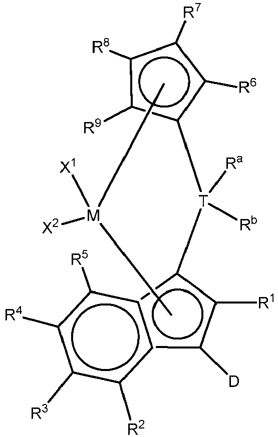 wherein:
   M is a group 4 metal (preferably M is zirconium or hafnium, more preferably zirconium);
   T is a group 14 atom (preferably silicon or germanium, more preferably silicon);
   D is a substituted or unsubstituted aromatic group (preferably D is selected from the group consisting of substituted or unsubstituted phenyl, naphthyl, biphenyl, cyclopropenyl, tropylium, cyclooctatetraenyl, furanyl, pyridinyl, borabenzyl, thiophenyl, azolyl, oxazolyl, and imidazolyl; more preferably D is selected from the group consisting of substituted or unsubstituted phenyl, biphenyl, naphthyl, cyclopropenyl, furanyl, pyridinyl, thiophenyl, azolyl, oxazolyl, and imidazolyl);
   R^{a} and R^{b} are independently, hydrogen, halogen, or a C₁ to C₂₀ substituted or unsubstituted hydrocarbyl, and R^{a} and R^{b} can form a cyclic structure including substituted or unsubstituted aromatic, partially saturated, or saturated cyclic or fused ring system (preferably each R^{a} and R^{b} is independently selected from the group consisting of halides, C₁ to C₂₀ substituted or unsubstituted hydrocarbyl groups, and cyclic structures where R^{a} and R^{b} form a heterocyclopentyl, heterocyclobutyl, or heterocyclohexyl structure with T being the heteroatom; more preferably each R^{a} and R^{b} is independently selected from the group consisting of chlorides, fluorides, methyl and ethyl groups); more preferably each R^{a} and R^{b} is, independently, selected from the group consisting of chlorides, fluorides, methyl and ethyl groups);
   each X¹ and X² is independently selected from the group consisting of C₁ to C₂₀ substituted or unsubstituted hydrocarbyl groups, hydrides, amides, amines, alkoxides, sulfides, phosphides, halides, dienes, phosphines, and ethers; and X¹ and X² can form a cyclic structure including aromatic, partially saturated, or saturated cyclic or fused ring system; more preferably, each X¹ and X² is independently selected from the group consisting of chlorides, fluorides, methyl, and ethyl groups;
   each of R¹, R², R³, R⁴, and R⁵ is, independently, hydrogen, halide, alkoxide or a C₁ to C₄₀ substituted or unsubstituted hydrocarbyl group, and any of adjacent R², R³, R⁴, and/or R⁵ groups may form a fused ring or multicenter fused ring systems, where the rings may be substituted or unsubstituted, and may be aromatic, partially unsaturated, or unsaturated (preferably, each of R¹, R², R³, R⁴, and R⁵ is, independently, a C₁ to C₂₀ substituted or unsubstituted hydrocarbyl group); and
   each of R⁶, R⁷, R⁸, and R⁹ is, each independently, hydrogen or a C₁ to C₄₀ substituted or unsubstituted hydrocarbyl group (preferably each of R⁶, R⁷, R⁸, and R⁹ is, independently, a C₁ to C₄₀ substituted or unsubstituted hydrocarbyl group; more preferably each of R⁶, R⁷, R⁸, and R⁹ is, independently, a C₁ to C₂₀ substituted or unsubstituted hydrocarbyl group; more preferably, each of R⁶, R⁷, R⁸, and R⁹ is, independently, selected from the group consisting of methyl, ethyl, propyl, isopropyl, n-butyl, sec-butyl, t-butyl, pentyl, hexyl, heptyl, octyl, decyl, and undecyl groups; even more preferably, each of R⁶, R⁷, R⁸, and R⁹ is, independently, selected from the group consisting of methyl, ethyl, and n-propyl groups; preferably, adjacent R⁶, R⁷, R⁸, and/or R⁹ groups fuse together with the cyclopentadienyl group to form a substituted or unsubstituted fluorene);
   further provided that at least two of R⁶, R⁷, R⁸, and R⁹ are C₁ to C₄₀ substituted or unsubstituted hydrocarbyl groups; and
   (preferably, the metallocene compound is asymmetric, which is defined to mean that the groups that are bridged by the TR^{a}R^{b} bridge do not have the same number of fused aromatic rings, for example, the metallocene compound is not a bis-indenyl compound. Instead, the metallocene compound may be a cyclopentadienyl-indenyl compound, a cyclopentadienyl-fluorenyl compound, or an indenyl-fluorenyl compound).
2. The metallocene compounds of paragraphs 1, represented by the formula: 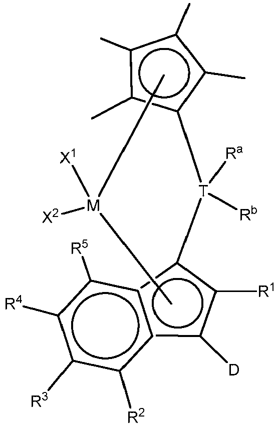 wherein R¹, R², R³, R⁴, R⁵, R^{a}, R^{b}, X¹, X², T, D, and M are as defined in paragraph 1.
3. The metallocene compounds of paragraphs 1 and 2, represented by the following structure: 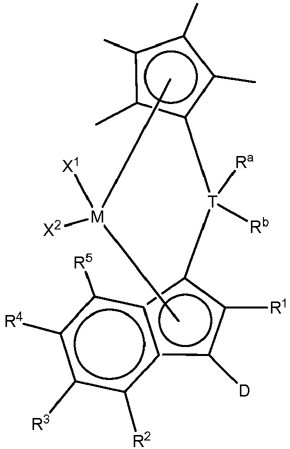 wherein R¹, R², R³, R⁴, R⁵, R^{a}, R^{b}, X¹, X², T, and M are as defined above in paragraph 1.
4. The metallocene compounds of paragraphs 1 to 3, represented by the following structure: 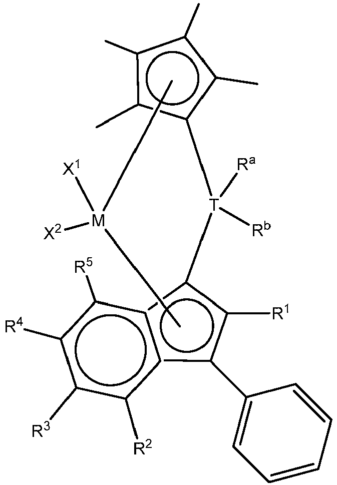 wherein R¹, R², R³, R⁴, R⁵, R^{a}, R^{b}, X¹, X², T, and M are as defined above in paragraph 1.
5. A catalyst system comprising:
   (i) the bridged metallocene compound of paragraphs 1 to 4;
   (ii) at least one activator (preferably, an alumoxane or a stoichiometric activator);
   (iii) optionally, a support material (preferably, magnesia, titania, zirconia, montmorillonite, phyllosilicate, zeolites, talc, clays, and combinations of thereof; more preferably, silica-chromium, silica-alumina, silica-titania, Al₂O₃, ZrO₂, SiO₂, and combinations thereof, more preferably, SiO₂, Al₂O₃, or SiO₂/Al₂O₃);
   (iv) optionally, a cocatalyst (preferably, organometallic compounds; preferably, triethylaluminum, tri-isobutylaluminum, tri-n-hexylaluminum, tri-n-octylaluminum, diethyl aluminum chloride, dibutyl zinc, and diethyl zinc).

In another embodiment, this invention relates to:
1A. A bridged metallocene compound represented by the following formula: 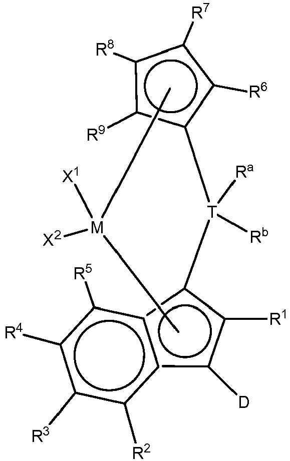 wherein:
   M is a group 4 metal;
   T is a group 14 atom;
   D is a substituted or unsubstituted aromatic group;
   R^{a} and R^{b} are independently, hydrogen, halogen, or a C₁ to C₂₀ substituted or unsubstituted hydrocarbyl, and R^{a} and R^{b} can form a cyclic structure including substituted or unsubstituted aromatic, partially saturated, or saturated cyclic or fused ring system;
   each X¹ and X² is independently selected from the group consisting of C₁ to C₂₀ substituted or unsubstituted hydrocarbyl groups, hydrides, amides, amines, alkoxides, sulfides, phosphides, halides, dienes, phosphines, and ethers; and X¹ and X² can form a cyclic structure including aromatic, partially saturated, or saturated cyclic or fused ring system;
   each of R¹, R², R³, R⁴, and R⁵ is, independently, hydrogen, halide, alkoxide or a C₁ to C₄₀ substituted or unsubstituted hydrocarbyl group, and any of adjacent R², R³, R⁴, and/or R⁵ groups may form a fused ring or multicenter fused ring systems, where the rings may be substituted or unsubstituted, and may be aromatic, partially unsaturated, or unsaturated; and
   each of R⁶, R⁷, R⁸, and R⁹ is, each independently, hydrogen or a C₁ to C₄₀ substituted or unsubstituted hydrocarbyl group;
   further provided that at least two of R⁶, R⁷, R⁸, and R⁹ are C₁ to C₄₀ substituted or unsubstituted hydrocarbyl groups.
2A. The bridged metallocene compound of paragraph 1A, wherein M is zirconium or hafnium.
3A. The bridged metallocene compound of paragraph 1A or 2A, wherein D is selected from the group consisting of substituted or unsubstituted phenyl, naphthyl, biphenyl, cyclopropenyl, tropylium, cyclooctatetraenyl, furanyl, pyridinyl, borabenzyl, thiophenyl, azolyl, oxazolyl, and imidazolyl.
4A. The bridged metallocene compound of any of paragraph 1A to 3A, wherein T is silicon or germanium.
5A. The bridged metallocene compound of any of paragraph 1A to 4A, wherein each R^{a} and R^{b} is independently selected from the group consisting of halides, C₁ to C₂₀ substituted or unsubstituted hydrocarbyl groups, and cyclic structures where R^{a} and R^{b} form a heterocyclopentyl, heterocyclobutyl, or heterocyclohexyl structure with T being the heteroatom.
6A. The bridged metallocene compound of any of paragraph 1A to 5A, wherein each X¹ and X² is independently selected from the group consisting of halides and C₁ to C₂₀ substituted or unsubstituted hydrocarbyl groups.
7A. The bridged metallocene compound of any of paragraph 1A to 6A, wherein each of R¹, R², R³, R⁴, R⁵, R⁶, R⁷, R⁸, and R⁹ is, independently, hydrogen or a C₁ to C₂₀ substituted or unsubstituted hydrocarbyl group.
8A. The bridged metallocene compound of any of paragraph 1A to 6A, wherein each of R⁶, R⁷, R⁸, and R⁹ is, independently, a C₁ to C₄₀ substituted or unsubstituted hydrocarbyl group.
9A. The bridged metallocene compound of paragraph 8A, wherein R⁶ and R⁹ are the same.
10A. The bridged metallocene compound of paragraph 8A, wherein R⁷ and R⁸ are the same.
11A. The bridged metallocene compound of any of paragraph 1A to 6A, wherein each of R⁶, R⁷, R⁸, and R⁹ is, independently, selected from the group consisting of methyl, ethyl, propyl, isopropyl, n-butyl, sec-butyl, t-butyl, pentyl, hexyl, heptyl, octyl, decyl, and undecyl groups, preferably a methyl group, an ethyl group, or an n-propyl group.
12A. The bridged metallocene compound of any of paragraph 1A to 6A, wherein adjacent R⁶, R⁷, R⁸, and/or R⁹ groups fuse together with the cyclopentadienyl group to form a substituted or unsubstituted fluorene.
13A. The bridged metallocene compound of any of paragraph 1A to 12A, wherein each R^{a} and R^{b} is each independently selected from the group consisting of chlorides, fluorides, methyl, and ethyl groups.
14A. A catalyst system comprising the bridged metallocene compounds of any of paragraphs 1A to 13A:
   15A. The catalyst system of paragraph 14A, further comprising a support material.
   16A. The catalyst system of claim 14A or 15A, wherein the activator is an alumoxane, preferably an alkyl alumoxane.
   17A. The catalyst system of paragraphs 14A to 16A, wherein the activator is a stoichiometric activator, preferably an ionic stoichiometric activator.
   18A. A process to polymerize ethylene and optional comonomers comprising one or more C₃ to C₄₀ olefins comprising contacting ethylene and optional comonomers comprising one or more C₃ to C₄₀ olefins with the bridged metallocene compound of any of paragraph 1 to 13A or catalyst systems of any of paragraphs 14A to 17A.
   19A. The process of paragraph 18A wherein the polymerization is conducted in the gas phase.

### EXAMPLES

The following abbreviations may be used below: eq. means equivalents.

All reagents were obtained from Sigma Aldrich (St. Louis, MO) and used as obtained, unless stated otherwise. All solvents were anhydrous. All reactions were performed under an inert nitrogen atmosphere, unless otherwise stated. All deuterated solvents were obtained from Cambridge Isotopes (Cambridge, MA) and dried over 3Angstrom molecular sieves before use.

Products were characterized by ¹H NMR as follows:

### ¹H NMR

¹H NMR data was collected at room temperature in a 5 mm probe using a Varian spectrometer with a ¹H frequency of at least 400 MHz. Data was recorded using a maximum pulse width of 45°C, 8 seconds between pulses and signal averaging 120 transients.

### Preparation of dimethyl(3-phenyl-1H-indenyl)(2,3,4,5-tetramethylcyclopentadienyl) silane (Compound A).

To a solution of chlorodimethyl(2,3,4,5-tetramethylcyclopenta-2,4-dien-1-yl)silane (5.00 g, 23.3 mmol, 1.00 eq.) in ether (25 mL) at -35°C was added lithium(1-phenylindenide) (4,85 g, 24.5 mmol, 1.05 eq.). The reaction was stirred for 23 hours, and the volatiles were then removed under vacuum. The residue was extracted with pentane (40 mL) and the extract was filtered. The resulting solution was evaporated under vacuum to give a thick oil. Yield 7.07 g (82%). ¹H NMR (C₆D₆): δ 7.74 (d, 1H), 7.65 (d, 2H), 7.48 (d, 1H), 7.25 (m, 5H), 6.60 (s, 1H), 3.69, (s, 1H), 2.92 (br s, 1H), 1.93 (s, 3H), 1.90 (s, 3H), 1.82 (s, 3H), 1.821 (s, 3H), -0.09 (s, 3H), -0.39 (s, 3H).

### Preparation of dilithium [tetramethylcyclopentadienidedimethylsilyl(3-phenylindenide) 1.10 etherate (Compound B).

To a solution of dimethyl(3-phenyl-1H-indenyl)(2,3,4,5-tetramethylcyclopentadienyl)silane (Compound A, 7.03 g, 19.0 mmol, 1.00 eq.) in ether (25 mL) at -35°C was added 2.63M butyllithium in hexanes (14.8 mL, 38.9 mmol, 2.05 eq.). The reaction was stirred for 20 hours and then filtered to give a solid. The solid was washed with pentane (2 x 40 mL) and dried under vacuum. Yield 8.51 g (97%). ¹H NMR (THF-d8): δ 7.70 (d, 1H), 7.54 (m, 3H), 7.12 (s, 1H), 7.03 (t, 2H), 6.57 (t, 1H), 6.48, (t, 1H), 6.43 (t, 1H), 3.39 (q, 4.4H), 2.20 (s, 6H), 1.91 (s, 6H), 1.13 (t, 6.5H), 0.64 (br s, 6H).

### Preparation of dimethylsilylene(2,3,4,5-tetramethyl-1-cyclopentadienyl)(3-phenyl-1-indenyl)zirconium dichloride (Metallocene I).

To a suspension of zirconium tetrachloride bis(etherate) (2.00 g, 5.25 mmol, 1.00 eq.) in ether (25 mL) at -35°C was added dilithium [tetramethylcyclopentadienidedimethylsilyl(3-phenylindenide) 1.10 etherate (Compound B, 2.43 g, 5.24 mmol, 1.00 eq.). The reaction was stirred for 16 hours and was then evaporated under vacuum, leaving a solid. The solid was extracted with dichloromethane (50 mL, then 3 x 10 mL) and the extracts were filtered. The resulting solution was evaporated under vacuum to yield a solid. The solid was washed with pentane (2 x 20 mL) and dried under vacuum. Yield 2.53 g (91%). ¹H NMR (CD₂Cl₂): δ 7.90. (d, 1H), 7.60 (m, 3H), 7.49 (t, 2H), 7.38 (m, 2H), 7.10 (m, 1H), 6.00 (s, 1H), 2.00 (s, 3H), 1.96 (s, 3H), 1.92 (s, 3H), 1.89 (s, 3H), 1.23 (s, 3H), 1.00 (s, 3H).

### Supported dimethylsilylene(2,3,4,5-tetramethyl-1-cyclopentadienyl)(3-phenyl-1-indenyl)zirconium dichloride (Supported Metallocene I).

30 wt% MAO in toluene (Albemarle, Baton Rouge, LA, 6.25 g, 32.3 mmol, 120 eq.) and toluene (6.50 g) were combined and stirred for 15 minutes to give a clear solution. To this MAO solution was added dimethylsilylene(2,3,4,5-tetramethyl-1-cyclopentadienyl)(3-phenyl-1-indenyl)zirconium dichloride (Metallocene I, 0.147 g, 0.27 mmol, 1.00 eq.). The reaction was stirred for 15 minutes and then DAVISON™ 948 silica (5.00 g, dried at 600°C for 16 hours) was added. The slurry was mixed for 10 minutes and then dried under vacuum for 22 hours. Yield 6.87 g (98%).

### Preparation of dimethyl(2,3,4,5-tetramethylcyclopenta-2,4-dien-1-yl)silyl trifluoromethanesulfonate (Compound C).

To a solution of chlorodimethyl(2,3,4,5-tetramethylcyclopenta-2,4-dien-1-yl)silane (30.00 g, 140 mmol, 1.00 eq.) in toluene (100 mL) was added silver trifluoromethanesulfonate (38.00 g, 148 mmol, 1.06 equiv.). The reaction was stirred 3 hours and was then evaporated under vacuum. The residue was extracted with pentane (100 mL) and the extract was filtered. The resulting solution was evaporated under vacuum to give a liquid. Yield 44.72 g (98%). ¹H NMR (C₆D₆): δ 2.78 (br s, 1H), 1.74 (s, 6H), 1.61 (s, 6H), 0.04 (s, 6H).

### Preparation of (3-(4-(tert-Butyl)phenyl)-1H-inden-1-yl)dimethyl(2,3,4,5-tetramethylcyclopenta-2,4-dien-1-yl)silane (Compound D).

To a solution of dimethyl(2,3,4,5-tetramethylcyclopenta-2,4-dien-1-yl)silyl trifluoromethanesulfonate (Compound C, 7.50 g, 22.8 mmol, 1.00 eq.) in ether (25 mL) at -35°C was added lithium (1-(4-t-butylphenyl)indenide) (6.20 g, 24.4 mmol, 1.07 eq.). The reaction was stirred for 18 hours, and was then evaporated under vacuum. The residue was extracted with pentane (40 mL) and the extract was filtered. The resulting solution was evaporated under vacuum to give a thick oil. Yield 10.11 g (104%). ¹H NMR (C₆D₆): δ 7.83 (d, 1H), 7.67 (d, 2H), 7.50 (d, 1H), 7.41 (d, 2H), 7.26 (m, 2H), 6.64 (s, 1H), 3.71, (s, 1H), 2.95 (br s, 1H), 1.95 (s, 3H), 1.93 (s, 3H), 1.84 (s, 3H), 1.82 (s, 3H), 1.30 (s, 9H), -0.06 (s, 3H), -0.36 (s, 3H).

### Preparation of dilithium [tetramethylcyclopentadienidedimethylsilyl(3-(4-t-butylphenyl)indenide) etherate (Compound E).

To a solution of (3-(4-(tert-butyl)phenyl)-1H-inden-1-yl)dimethyl(2,3,4,5-tetramethylcyclopenta-2,4-dien-1-yl)silane (Compound D, 10.01 g, 23.5 mmol, 1.00 eq.) in ether (35 mL) at -35°C was added 2.56M butyllithium in hexanes (19.0 mL, 48.6 mmol, 2.07 eq.). The reaction was stirred for 18 hours and then evaporated under vacuum to give a solid. The solid was washed with pentane (2 x 40 mL) and dried under vacuum. Yield 11.67 g (97%). ¹H NMR (THF-d8): δ 7.71 (d, 1H), 7.52 (m, 3H), 7.16 (d, 2H), 7.09 (s, 1H), 6.50 (t, 1H), 6.43, (t, 1H), 3.42 (q, 4H), 2.22 (s, 6H), 1.93 (s, 6H), 1.34 (s, 9H), 1.15 (t, 6H), 0.69 (br s, 6H).

### Preparation of Dimethylsilylene(2,3,4,5-tetramethyl-1-cyclopentadienyl)(3-(4-t-butylphenyl)-1-indenyl)zirconium dichloride (Metallocene II).

To a suspension of zirconium tetrachloride bis(etherate) (2.00 g, 5.25 mmol, 1.00 eq.) in ether (35 mL) at -35°C was added dilithium [tetramethylcyclopentadienidedimethylsilyl(3-(4-t-butylphenyl)indenide) etherate (Compound D, 2.43 g, 5.24 mmol, 1.00 eq.). The reaction was stirred for 17 hours and was then evaporated under vacuum, leaving a solid. The solid was extracted with dichloromethane (40 mL, then 2 x 10 mL) and the extracts were filtered. The resulting solution was evaporated under vacuum to yield a solid. The solid was washed with pentane (10 mL) and dried under vacuum. Yield 2.62 g (85%). ¹H NMR (CD₂Cl₂): δ 7.81 (d, 1H), 7.59 (d, 1H), 7.52 (s, 4H), 7.38 (m, 1H), 7.08 (m, 1H), 5.98 (s, 1H), 1.99 (s, 3H), 1.95 (s, 3H), 1.92 (s, 3H), 1.89 (s, 3H), 1.38 (s, 9H), 1.22 (s, 3H), 0.96 (s, 3H).

### Supported Dimethylsilylene(2,3,4,5-tetramethyl-1-cyclopentadienyl)(3-phenyl-1-indenyl)zirconium dichloride (Supported Metallocene II).

30 wt% MAO in toluene (6.27 g, 32.4 mmol, 120 eq.) and toluene (6.50 g) were combined and stirred for 15 minutes to give a clear solution. To this MAO solution was added dimethylsilylene(2,3,4,5-tetramethyl-1-cyclopentadienyl)(3-(4-t-butylphenyl)-1-indenyl)zirconium dichloride (Metallocene II, 0.158 g, 0.269 mmol, 1.00 eq.). The reaction was stirred for 15 minutes and then DAVISON™ 948 silica (5.00 g, dried at 600°C for 16 hours) was added. The slurry was mixed for 10 minutes and then dried under vacuum for 24 hours. Yield 6.92 g (98%).

### Preparation of (3-(3,5-dimethylphenyl)-1H-inden-1-yl)dimethyl(2,3,4,5-tetramethylcyclopenta-2,4-dien-1-yl)silane (Compound F).

To a solution of dimethyl(2,3,4,5-tetramethylcyclopenta-2,4-dien-1-yl)silyl trifluoromethanesulfonate (Compound C, 7.50 g, 22.8 mmol, 1.00 eq.) in ether (25 mL) at -35°C was added lithium (1-(3,5-dimethylphenyl)indenide) (5.53 g, 24.4 mmol, 1.07 eq.). The reaction was stirred for 19 hours, and was then evaporated under vacuum. The residue was extracted with pentane (40 mL, then 2 x 20 mL) and the extract was filtered. The resulting solution was evaporated under vacuum to give a sticky solid. Yield 9.65 g (106%). ¹H NMR (C₆D₆): δ 7.87 (d, 1H), 7.40 (s, 2H), 7.25 (m, 2H), 6.88 (s, 1H), 6.64 (s, 1H), 3.73, (s, 1H), 2.93 (br s, 1H), 2.23 (s, 6H), 1.93 (s, 3H), 1.92 (s, 3H), 1.84 (s, 3H), 1.82 (s, 3H), -0.07 (s, 3H), -0.36 (s, 3H).

### Preparation of dilithium [tetramethylcyclopentadienidedimethylsilyl(3-(3,5-dimethylphenyl)indenide) etherate (Compound G).

To a solution of (3-(3,5-dimethylphenyl)-1H-inden-1-yl)dimethyl(2,3,4,5-tetramethylcyclopenta-2,4-dien-1-yl)silane (Compound F, 9.58 g, 24.0 mmol, 1.00 eq.) in ether (35 mL) at -35°C was added 2.56M butyllithium in hexanes (19.5 mL, 49.9 mmol, 2.08 eq.). The reaction was stirred for 17 hours and then filtered to give a solid. The solid was washed with pentane (2 x 30 mL) and dried under vacuum. Yield 9.50 g (82%). ¹H NMR (THF-d8): δ 7.72 (d, 1H), 7.53 (d, 1H), 7.23 (s, 2H), 7.12 (s, 1H), 6.48 (t, 1H), 6.41, (t, 1H), 6.31 (s, 1H), 3.40 (q, 4H), 2.24 (s, 3H), 2.21 (s, 3H), 1.92 (s, 6H), 1.13 (t, 6H), 0.66 (br s, 6H).

### Preparation of dimethylsilylene(2,3,4,5-tetramethyl-1-cyclopentadienyl)(3-(3,5-dimethylphenyl)-1-indenyl)zirconium dichloride (Metallocene III).

To a suspension of zirconium tetrachloride bis(etherate) (2.00 g, 5.25 mmol, 1.00 eq.) in ether (25 mL) at -35°C was added dilithium [tetramethylcyclopentadienidedimethylsilyl(3-(3,5-dimethylphenyl)indenide) etherate (Compound G, 2.54 g, 5.24 mmol, 1.00 eq.). The reaction was stirred for 18 hours and was then evaporated under vacuum, leaving a solid. The solid was extracted with dichloromethane (30 mL, then 2 x 10 mL) and the extracts were filtered. The resulting solution was evaporated under vacuum to yield a solid. The solid was washed with pentane (10 mL) and dried under vacuum. Yield 2.54 g (87%). ¹H NMR (CD₂Cl₂): δ 7.89 (d, 1H), 7.59 (d, 1H), 7.38 (t, 1H), 7.20 (s, 2H), 7.09 (t, 1H), 5.98 (s, 1H), 2.40 (s, 6H), 1.99 (s, 3H), 1.96 (s, 3H), 1.92 (s, 3H), 1.89 (s, 3H), 1.22 (s, 3H), 1.00 (s, 3H).

### Supported dimethylsilylene(2,3,4,5-tetramethyl-1-cyclopentadienyl)(3-(3,5-dimethylphenyl)-1-indenyl)zirconium dichloride (Supported Metallocene III).

30 wt% MAO in toluene (6.26 g, 32.4 mmol, 120 eq.) and toluene (6.50 g) were combined and stirred for 15 minutes to give a clear solution. To this MAO solution was added dimethylsilylene(2,3,4,5-tetramethyl-1-cyclopentadienyl)(3-(3,5-dimethylphenyl)-1-indenyl)zirconium dichloride (Metallocene III, 0.151 g, 0.270 mmol, 1.00 eq.). The reaction was stirred for 15 minutes and then DAVISON™ 948 silica (5.00 g, dried at 600C) was added. The slurry was mixed for 10 minutes and then dried under vacuum for 23 hours. Yield 6.87 g (98%).

### Preparation of (3-([1,1'-biphenyl]-4-yl)-1H-inden-1-yl)dimethyl(2,3,4,5-tetramethylcyclopenta-2,4-dien-1-yl)silane (Compound H).

To a solution of dimethyl(2,3,4,5-tetramethylcyclopenta-2,4-dien-1-yl)silyl trifluoromethanesulfonate (Compound C, 7.50 g, 22.8 mmol, 1.00 eq.) in ether (25 mL) at -35°C was added lithium (1-(4-biphenyl)indenide) (6.70 g, 24.4 mmol, 1.07 eq.). The reaction was stirred for 23 hours, and was then evaporated under vacuum. The residue was extracted with pentane (50 mL, then 2 x 25 mL) and the extract was filtered. The resulting solution was evaporated under vacuum to give a thick oil. The oil was extracted with pentane and the extracts were filtered to give a solution. The solution was evaporated under vacuum to give a foam. Yield 10.07 g (93%). ¹H NMR (C₆D₆): δ 7.82 (d, 1H), 7.72 (d, 2H), 7.59 (m, 4H) 7.51 (d, 1H), 7.26 (m, 5H), 6.67 (d, 1H), 3.73, (s, 1H), 2.94 (br s, 1H), 1.95 (s, 3H), 1.93 (s, 3H), 1.85 (s, 3H), 1.83 (s, 3H), -0.06 (s, 3H), -0.35 (s, 3H).

### Preparation of dilithium [tetramethylcyclopentadienidedimethylsilyl(3-(4-biphenyl)indenide) etherate (Compound I).

To a solution of (3-([1,1'-biphenyl]-4-yl)-1H-inden-1-yl)dimethyl(2,3,4,5-tetramethylcyclopenta-2,4-dien-1-yl)silane (Compound H, 10.04 g, 22.5mmol, 1.00 eq.) in ether (30 mL) at -35°C was added 2.66M butyllithium in hexanes (17.5 mL, 46.6 mmol, 2.07 eq.). The reaction was stirred for 18 hours and then filtered to give a solid. The solid was washed with pentane (2 x 20 mL) and dried under vacuum. Yield 11.12 g (93%). ¹H NMR (THF-d8): δ 7.74 (d, 1H), 7.64 (d, 2H), 7.55 (m, 3H), 7.36 (d, 2H), 7.30 (t, 2H), 7.21 (s, 1H), 7.10 (t, 1H), 6.51 (t, 1H), 6.41, (t, 1H), 3.39 (q, 4H), 2.19 (s, 6H), 1.92 (s, 6H), 1.12 (t, 6H), 0.61 (br s, 6H).

### Preparation of dimethylsilylene(2,3,4,5-tetramethyl-1-cyclopentadienyl)(3-(4-biphenyl)-1-indenyl)zirconium dichloride (Metallocene IV).

To a suspension of zirconium tetrachloride bis(etherate) (2.00 g, 5.25 mmol, 1.00 eq.) in ether (25 mL) at -35°C was added dilithium [tetramethylcyclopentadienidedimethylsilyl(3-(4-biphenyl)indenide) etherate (Compound I, 2.79 g, 5.24 mmol, 1.00 eq.). The reaction was stirred for 18 hours and was then evaporated under vacuum, leaving a solid. The solid was extracted with dichloromethane (10 x 100 mL) and the extracts were filtered. The resulting solution was evaporated under vacuum to yield a solid. The solid was washed with pentane (2 x 20 mL) and dried under vacuum. Yield 2.01 g (63%). ¹H NMR (CD₂Cl₂): δ 7.94 (d, 1H), 7.74 (d, 2H), 7.63 (t, 3H), 7.59 (d, 1H), 7.39 (m, 5H), 7.11 (d, 1H), 6.04 (s, 1H), 2.00 (s, 3H), 1.96 (s, 3H), 1.93 (s, 3H), 1.90 (s, 3H), 1.22 (s, 3H), 1.01 (s, 3H).

### Supported dimethylsilylene(2,3,4,5-tetramethyl-1-cyclopentadienyl)(3-(4-biphenyl)-1-indenyl)zirconium dichloride (Supported Metallocene IV).

30 wt% MAO in toluene (6.27 g, 32.4 mmol, 120 eq.) and toluene (6.50 g) were combined and stirred for 15 minutes to give a clear solution. To this MAO solution was added dimethylsilylene(2,3,4,5-tetramethyl-1-cyclopentadienyl)(3-(4-biphenyl)-1-indenyl)zirconium dichloride (Metallocene IV, 0.164 g, 0.270 mmol, 1.00 eq.). The reaction was stirred for 15 minutes and then DAVISON™ 948 silica (5.00 g, dried at 600°C) was added. The solid was mixed for 10 minutes and then dried under vacuum for 23 hours. Yield 6.94 g (98%).

### Preparation of dimethyl(3-(naphthalen-2-yl)-1H-inden-1-yl)(2,3,4,5-tetramethylcyclopenta-2,4-dien-1-yl)silane (Compound J).

To a solution of dimethyl(2,3,4,5-tetramethylcyclopenta-2,4-dien-1-yl)silyl trifluoromethanesulfonate (Compound C, 7.50 g, 22.8 mmol, 1.00 eq.) in ether (25 mL) at -35°C was added lithium (1-(2-naphthyl)indenide) (6.05 g, 24.4 mmol, 1.07 eq.). The reaction was stirred for 19 hours, and was then evaporated under vacuum. The residue was extracted with pentane (40 mL, then 2 x 20 mL) and the extract was filtered. The resulting solution was evaporated under vacuum to give a foam. The foam was extracted with pentane and the extracts were filtered to give a solution. The solution was evaporated under vacuum to give thick oil. Yield 9.44 g (98%). ¹H NMR (C₆D₆): δ 8.20 (s, 1H), 7.84 (d, 1H), 7.76 (m, 2H), 7.70 (m, 2H) 7.51 (d, 1H), 7.27 (m, 4H), 6.71 (s, 1H), 3.75, (s, 1H), 2.94 (br s, 1H), 1.95 (s, 3H), 1.93 (s, 3H), 1.84 (s, 3H), 1.82 (s, 3H), -0.04 (s, 3H), -0.34 (s, 3H).

### Preparation of dilithium [tetramethylcyclopentadienidedimethylsilyl(3-(2-naphthyl)indenide) etherate (Compound K).

To a solution of dimethyl(3-(naphthalen-2-yl)-1H-inden-1-yl)(2,3,4,5-tetramethylcyclopenta-2,4-dien-1-yl)silane (Compound J, 9.40 g, 22.3 mmol, 1.00 eq.) in ether (30 mL) at -35°C was added 2.66M butyllithium in hexanes (17.5 mL, 46.6 mmol, 2.078 eq.). The reaction was stirred for 25 hours and then evaporated under vacuum to give a solid. The solid was washed with pentane (2 x 40 mL) and dried under vacuum. Yield 11.04 g (97%). ¹H NMR (THF-d8): δ 7.87 (m, 2H), 7.81 (s, 1H), 7.63 (m, 4H), 7.28 (s, 1H), 7.12 (t, 1H), 6.92 (t, 1H), 6.54 (t, 1H), 6.43 (t, 1H), 3.40 (q, 4H), 2.19 (s, 6H), 1.92 (s, 6H), 1.13 (t, 6H), 0.61 (br s, 6H).

### Preparation of dimethylsilylene(2,3,4,5-tetramethyl-1-cyclopentadienyl)(3-(2-naphthyl)-1-indenyl)zirconium dichloride (Metallocene V).

To a suspension of zirconium tetrachloride bis(etherate) (2.00 g, 5.25 mmol, 1.00 eq.) in ether (25 mL) at -35°C was added dilithium [tetramethylcyclopentadienidedimethylsilyl(3-(2-naphthyl)indenide) etherate (Compound K, 2.66 g, 5.25 mmol, 1.00 eq.). The reaction was stirred for 21 hours and was then evaporated under vacuum, leaving a solid. The solid was extracted with dichloromethane (40 ml, then 2 x 10 mL) and the extracts were filtered. The resulting solution was evaporated under vacuum to yield a solid. The solid was washed with pentane (2 x 20 mL) and dried under vacuum. Yield 2.68 g (88%). ¹H NMR (CD₂Cl₂): δ 8.01 (m, 2H), 7.81 (m, 3H), 7.77 (d, 1H), 7.63 (d, 1H), 7.51 (m, 2H), 7.43 (m, 1H), 7.12 (m, 1H), 6.13 (s, 1H), 2.01 (s, 3H), 1.94 (s, 3H), 1.93 (s, 3H), 1.90 (s, 3H), 1.25 (s, 3H), 1.03 (s, 3H).

### Supported dimethylsilylene(2,3,4,5-tetramethyl-1-cyclopentadienyl)(3-(2-naphthyl)-1-indenyl)zirconium dichloride (Supported Metallocene V).

30 wt% MAO in toluene (6.27 g, 32.4 mmol, 120 eq.) and toluene (6.50 g) were combined and stirred for 15 minutes to give a clear solution. To this MAO solution was added dimethylsilylene(2,3,4,5-tetramethyl-1-cyclopentadienyl)(3-(2-naphthyl)-1-indenyl)zirconium dichloride (Metallocene V, 0.157 g, 0.270 mmol, 1.00 eq.). The reaction was stirred 15 for minutes and then DAVISON™ 948 silica (5.00 g, dried at 600°C for 16 hours) was added. The slurry was mixed for 10 minutes and then dried under vacuum for 23 hours. Yield 6.83 g (97%).

### Preparation of (4,7-Dimethyl-3-phenyl-1H-inden-1-yl)dimethyl(2,3,4,5-tetramethylcyclopenta-2,4-dien-1-yl)silane (Compound L).

To a solution of dimethyl(2,3,4,5-tetramethylcyclopenta-2,4-dien-1-yl)silyl trifluoromethanesulfonate (Compound C, 7.50 g, 22.8 mmol, 1.00 eq.) in ether (25 mL) at -35°C was added lithium (4,7-dimethyl-1-phenylindenide) (5.53 g, 24.4 mmol, 1.07 eq.). The reaction was stirred for 25 hours, and was then evaporated under vacuum. The residue was extracted with pentane (3 x 40 mL) and the extract was filtered. The resulting solution was evaporated under vacuum to give a thick oil. Yield 9.07 g (100%). ¹H NMR (C₆D₆): δ 7.41 (d, 2H), 7.19 (m, 2H), 6.97 (s, 3H), 6.45 (d, 1H), 3.78, (s, 1H), 2.86 (br s, 1H), 2.30 (s, 3H), 2.13 (s, 3H), 1.96 (s, 3H), 1.89 (s, 3H), 1.78 (s, 3H), 1.77 (s, 3H), -0.04 (s, 3H), -0.32 (s, 3H).

### Preparation of dilithium [tetramethylcyclopentadienidedimethylsilyl(4,7-dimethyl-3-phenylindenide) 1.10 etherate (Compound M).

To a solution of (4,7-dimethyl-3-phenyl-1H-inden-1-yl)dimethyl(2,3,4,5-tetramethylcyclopenta-2,4-dien-1-yl)silane (Compound L, 8.98 g, 22.5 mmol, 1.00 eq.) in ether (40 mL) at -35°C was added 2.56M butyllithium in hexanes (18.0 mL, 46.1 mmol, 2.05 eq.). The reaction was stirred for 17 hours and then filtered to give a solid. The solid was washed with pentane (2 x 20 mL) and dried under vacuum. Yield 9.62 g (87%). ¹H NMR (THF-d8): δ 7.30 (d, 2H), 7.12 (t, 2H), 6.89 (m, 2H), 6.22 (s, 2H), 3.39 (q, 4.3H), 2.65 (s, 3H), 2.24 (s, 3H), 2.00 (s, 6H), 1.91 (s, 6H), 1.12 (t, 6.6H), 0.56 (br s, 6H).

### Preparation of dimethylsilylene(2,3,4,5-tetramethyl-1-cyclopentadienyl)(4,7-dimethyl-3-phenyl-1-indenyl)zirconium dichloride (Metallocene VI).

To a suspension of zirconium tetrachloride bis(etherate) (2.00 g, 5.25 mmol, 1.00 eq.) in ether (25 mL) at -35°C was added dilithium [tetramethylcyclopentadienidedimethylsilyl(4,7-dimethyl-3-phenylindenide) 1.10 etherate (Compound M, 2.58 g, 5.24 mmol, 1.00 eq.). The reaction was stirred for 16 hours and was then evaporated under vacuum, leaving a solid. The solid was extracted with dichloromethane (50 mL, then 2 x 10 mL) and the extracts were filtered. The resulting solution was evaporated under vacuum to yield a solid. The solid was washed with pentane (2 x 20 mL) and dried under vacuum. Yield 2.53 g (86%). ¹H NMR (CD₂Cl₂): δ 7.39 (m, 2H), 7.32 (d, 1H), 7.24 (d, 2H), 7.02 (d, 2H), 6.93 (d, 1H), 6.25 (s, 1H), 2.37 (s, 3H), 2.27 (s, 3H), 2.19 (s, 3H), 2.03 (s, 3H), 1.97 (s, 3H), 1.95 (s, 3H), 1.10 (s, 3H), 1.02 (s, 3H).

### Supported Dimethylsilylene(2,3,4,5-tetramethyl-1-cyclopentadienyl)(4,7-dimethyl-3-phenyl-1-indenyl)zirconium dichloride (Supported Metallocene VI).

30 wt% MAO in toluene (6.26 g, 32.4 mmol, 120 eq.) and toluene (6.50 g) were combined and stirred for 15 minutes to give a clear solution. To this MAO solution was added dimethylsilylene(2,3,4,5-tetramethyl-1-cyclopentadienyl)(4,7-dimethyl-3-phenyl-1-indenyl)zirconium dichloride (Metallocene VI, 0.151 g, 0.270 mmol, 1.00 eq.). The reaction was stirred for 15 minutes and then DAVISON™ 948 silica (5.00 g, dried at 600°C) was added. The slurry was mixed for 10 minutes and then dried under vacuum for 23 hours. Yield 6.93 g (99%).

### Preparation of (5,6-Dimethyl-3-phenyl-1H-inden-1-yl)dimethyl(2,3,4,5-tetramethylcyclopenta-2,4-dien-1-yl)silane (Compound N).

To a solution of dimethyl(2,3,4,5-tetramethylcyclopenta-2,4-dien-1-yl)silyl trifluoromethanesulfonate (Compound C, 7.50 g, 22.8 mmol, 1.00 eq.) in ether (25 mL) at -35°C was added lithium (5,6-dimethyl-1-phenylindenide) (5.53 g, 24.4 mmol, 1.07 eq.). The reaction was stirred for 24 hours, and was then evaporated under vacuum. The residue was extracted with pentane (40 mL, then 2 x 25 mL) and the extract was filtered. The resulting solution was evaporated under vacuum to give a sticky solid. Yield 9.34 g (103%). ¹H NMR (C₆D₆): δ 7.71 (d, 2H), 7.62 (s, 1H), 7.36 (s, 1H), 7.31 (t, 2H), 7.20 (m, 1H), 6.57 (s, 1H), 3.70, (s, 1H), 2.98 (br s, 1H), 2.23 (s, 3H), 2.17 (s, 3H), 1.97 (s, 3H), 1.95 (s, 3H), 1.84 (s, 6H), -0.04 (s, 3H), -0.32 (s, 3H).

### Preparation of dilithium [tetramethylcyclopentadienidedimethylsilyl(5,6-dimethyl-3-phenylindenide) etherate (Compound O).

To a solution of (5,6-dimethyl-3-phenyl-1H-inden-1-yl)dimethyl(2,3,4,5-tetramethylcyclopenta-2,4-dien-1-yl)silane (Compound N, 9.52 g, 23.9mmol, 1.00 eq.) in ether (40 mL) at -35°C was added 2.56M butyllithium in hexanes (19.0 mL, 48.6 mmol, 2.04 eq.). The reaction was stirred for 18 hours and then filtered to give a solid. The solid was washed with pentane (2 x 20 mL) and dried under vacuum. Yield 9.68 g (84%). ¹H NMR (THF-d8): δ 7.55 (m, 3H), 7.34 (s, 1H), 7.04 (m, 3H), 6.58 (t, 1H), 3.40 (q, 4H), 2.27 (s, 3H), 2.25 (s, 3H), 2.21 (s, 6H), 1.90 (s, 6H), 1.13 (t, 6H), 0.65 (br s, 6H).

### Preparation of dimethylsilylene(2,3,4,5-tetramethyl-1-cyclopentadienyl)(5,6-dimethyl-3-phenyl-1-indenyl)zirconium dichloride (Metallocene VII).

To a suspension of zirconium tetrachloride bis(etherate) (2.00 g, 5.25 mmol, 1.00 eq.) in ether (25 mL) at -35°C was added dilithium [tetramethylcyclopentadienidedimethylsilyl(5,6-dimethyl-3-phenylindenide) etherate (Compound O, 2.54 g, 5.24 mmol, 1.00 eq.). The reaction was stirred for 17 hours and was then evaporated under vacuum, leaving a solid. The solid was extracted with dichloromethane (50 mL, then 2 x 10 mL) and the extracts were filtered. The resulting solution was evaporated under vacuum to yield a solid. The solid was washed with pentane (2 x 20 mL) and dried under vacuum. Yield 2.67 g (91%). ¹H NMR (CD₂Cl₂): δ 7.69. (s, 1H), 7.59 (d, 2H), 7.48 (t, 2H), 7.34 (m, 2H), 5.87 (s, 1H), 2.41 (s, 3H), 2.27 (s, 3H), 1.99 (s, 3H), 1.94 (s, 3H), 1.92 (s, 3H), 1.86 (s, 3H), 1.22 (s, 3H), 0.97 (s, 3H).

### Supported dimethylsilylene(2,3,4,5-tetramethyl-1-cyclopentadienyl)(5,6-dimethyl-3-phenyl-1-indenyl)zirconium dichloride (Supported Metallocene VII).

30 wt% MAO in toluene (6.26 g, 32.4 mmol, 120 eq.) and toluene (6.50 g) were combined and stirred for 15 minutes to give a clear solution. To this MAO solution was added dimethylsilylene(2,3,4,5-tetramethyl-1-cyclopentadienyl)(5,6-dimethyl-3-phenyl-1-indenyl)zirconium dichloride (Metallocene VII, 0.151 g, 0.270 mmol, 1.00 eq.). The reaction was stirred for 15 minutes and then DAVISON™ 948 silica (5.00 g, dried at 600°C for 16 hours) was added. The solid was mixed for 10 minutes and then dried under vacuum for 23 hours. Yield 6.91 g (98%).

## Claims

1. A bridged metallocene compound represented by the following formula: 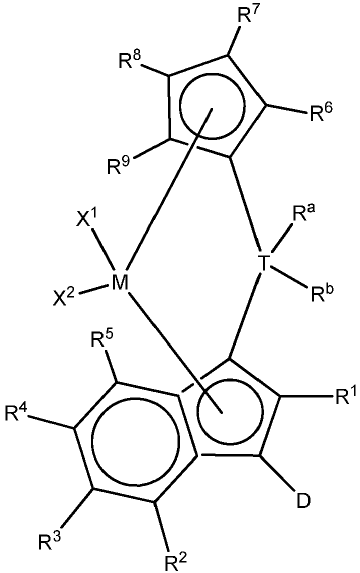 wherein:
M is a group 4 metal;
T is a group 14 atom;
D is a substituted or unsubstituted aromatic group;
R^{a} and R^{b} are independently, hydrogen, halogen, or a C₁ to C₂₀ substituted or unsubstituted hydrocarbyl, and R^{a} and R^{b} can form a cyclic structure including substituted or unsubstituted aromatic, partially saturated, or saturated cyclic or fused ring system;
each X¹ and X² is independently selected from the group consisting of C₁ to C₂₀ substituted or unsubstituted hydrocarbyl groups, hydrides, amides, amines, alkoxides, sulfides, phosphides, halides, dienes, phosphines, and ethers; and X¹ and X² can form a cyclic structure including aromatic, partially saturated, or saturated cyclic or fused ring system;
each of R¹, R², R³, R⁴, and R⁵ is, independently, hydrogen, halide, alkoxide or a C₁ to C₄₀ substituted or unsubstituted hydrocarbyl group, and any of adjacent R², R³, R⁴, and/or R⁵ groups may form a fused ring or multicenter fused ring systems, where the rings may be substituted or unsubstituted, and may be aromatic, partially unsaturated, or unsaturated; and
each of R⁶, R⁷, R⁸, and R⁹ is, each independently, hydrogen or a C₁ to C₄₀ substituted or unsubstituted hydrocarbyl group;
further provided that at least two of R⁶, R⁷, R⁸, and R⁹ are C₁ to C₄₀ substituted or unsubstituted hydrocarbyl groups.

2. The bridged metallocene compound of claim 1, wherein M is zirconium or hafnium.

3. The bridged metallocene compound of claim 1 or 2, wherein D is selected from the group consisting of substituted or unsubstituted phenyl, naphthyl, biphenyl, cyclopropenyl, tropylium, cyclooctatetraenyl, furanyl, pyridinyl, borabenzyl, thiophenyl, azolyl, oxazolyl, and imidazolyl.

4. The bridged metallocene compound of any of claims 1 to 3, wherein T is silicon or germanium.

5. The bridged metallocene compound of any of claims 1 to 4, wherein each R^{a} and R^{b} is independently selected from the group consisting of halides, C₁ to C₂₀ substituted or unsubstituted hydrocarbyl groups, and cyclic structures where R^{a} and R^{b} form a heterocyclopentyl, heterocyclobutyl, or heterocyclohexyl structure with T being the heteroatom.

6. The bridged metallocene compound of any of claims 1 to 5, wherein each X¹ and X² is independently selected from the group consisting of halides and C₁ to C₂₀ substituted or unsubstituted hydrocarbyl groups.

7. The bridged metallocene compound of claim 1, wherein the metallocene compound is one or more of:
dimethylsilylene(3 -phenyl-1 -indenyl)(2,3,4,5 -tetramethyl-1 - cyclopentadienyl)zirconium dichloride;
dimethylsilylene(3-phenyl-1-indenyl)(2,5-dimethyl-1-cyclopentadienyl)zirconium dichloride;
dimethylsilylene(3-phenyl-1-indenyl)(3,4-dimethyl-1-cyclopentadienyl)zirconium dichloride;
dimethylsilylene(3-phenyl-1-indenyl)(2,3,4,5-tetraethyl-1-cyclopentadienyl)zirconium dichloride;
dimethylsilylene(3-phenyl-1-indenyl)(2,3,4,5-tetrapropyl-1-cyclopentadienyl)zirconium dichloride;
dimethylsilylene(3-phenyl-1-indenyl)(9-fluorenyl)zirconium dichloride;
dimethylsilylene(3-phenyl-1-indenyl)(2,7-dimethyl-9-fluorenyl)zirconium dichloride;
dimethylsilylene(3-phenyl-1-indenyl)(2,7-di-t-butyl-9-fluorenyl)zirconium dichloride;
dimethylsilylene(3-phenyl-1-indenyl)(3,6-dimethyl-9-fluorenyl)zirconium dichloride;
dimethylsilylene(3-phenyl-1-indenyl)(3,6-di-t-butyl-9-fluorenyl)zirconium dichloride;
dimethylsilylene(3-phenyl-1-indenyl)(4,7-dimethyl-9-fluorenyl)zirconium dichloride;
diethylsilylene(3-phenyl-1-indenyl)(2,3,4,5-tetramethyl-1-cyclopentadienyl)zirconium dichloride;
dipropylsilylene(3 -phenyl-1 -indenyl)(2,3,4,5-tetramethyl-1 - cyclopentadienyl)zirconium dichloride;
dibutylsilylene(3-phenyl-1-indenyl)(2,3,4,5-tetramethyl-1-cyclopentadienyl)zirconium dichloride;
diphenylsilylene(3-phenyl-1-indenyl)(2,3,4,5-tetramethyl-1-cyclopentadienyl)zirconium dichloride;
silacyclobutylidene(3-phenyl-1-indenyl)(2,3,4,5-tetramethyl-1-cyclopentadienyl)zirconium dichloride;
silacyclopentylidene(3-phenyl-1-indenyl)(2,3,4,5-tetramethyl-1-cyclopentadienyl)zirconium dichloride;
silacyclohexylidene(3-phenyl-1 -indenyl)(2,3,4,5 -tetramethyl-1 - cyclopentadienyl)zirconium dichloride;
dimethylgermylene(3-phenyl-1-indenyl)(2,3,4,5-tetramethyl-1-cyclopentadienyl)zirconium dichloride;
diethylgermylene(3-phenyl-1-indenyl)(2,3,4,5-tetramethyl-1-cyclopentadienyl)zirconium dichloride;
dipropylgermylene(3-phenyl-1-indenyl)(2,3,4,5-tetramethyl-1-cyclopentadienyl)zirconium dichloride;
dibutylgermylene(3-phenyl-1-indenyl)(2,3,4,5-tetramethyl-1-cyclopentadienyl)zirconium dichloride;
diphenylgermylene(3 -phenyl-1 -indenyl)(2,3,4,5 -tetramethyl-1 - cyclopentadienyl)zirconium dichloride;
isopropylidene(3-phenyl-1-indenyl)(2,3,4,5-tetramethyl-1-cyclopentadienyl)zirconium dichloride;
diphenylmethylene(3-phenyl-1 -indenyl)(2,3,4,5 -tetramethyl-1 - cyclopentadienyl)zirconium dichloride;
dimethylsilylene(2-methyl-3-phenyl-1-indenyl)(2,3,4,5-tetramethyl-1-cyclopentadienyl)zirconium dichloride;
dimethylsilylene(2-ethyl-3-phenyl-1-indenyl)(2,3,4,5-tetramethyl-1-cyclopentadienyl)zirconium dichloride;
dimethylsilylene(2-propyl-3-phenyl-1-indenyl)(2,3,4,5-tetramethyl-1-cyclopentadienyl)zirconium dichloride;
dimethylsilylene(2-isopropyl-3-phenyl-1-indenyl)(2,3,4,5-tetramethyl-1-cyclopentadienyl)zirconium dichloride;
dimethylsilylene(4-methyl-3-phenyl-1-indenyl)(2,3,4,5-tetramethyl-1-cyclopentadienyl)zirconium dichloride;
dimethylsilylene(4,7-dimethyl-3-phenyl-1-indenyl)(2,3,4,5-tetramethyl-1-cyclopentadienyl)zirconium dichloride;
dimethylsilylene(5,6-dimethyl-3-phenyl-1-indenyl)(2,3,4,5-tetramethyl-1-cyclopentadienyl)zirconium dichloride;
dimethylsilylene(2,4-dimethyl-3-phenyl-1-indenyl)(2,3,4,5-tetramethyl-1-cyclopentadienyl)zirconium dichloride;
dimethylsilylene(2,6-dimethyl-3-phenyl-1-indenyl)(2,3,4,5-tetramethyl-1-cyclopentadienyl)zirconium dichloride;
dimethylsilylene(3-phenyl-2,4,6-trimethyl-1-indenyl)(2,3,4,5-tetramethyl-1-cyclopentadienyl)zirconium dichloride;
dimethylsilylene(3-phenyl-2,4,7-trimethyl-1-indenyl)(2,3,4,5-tetramethyl-1-cyclopentadienyl)zirconium dichloride;
dimethylsilylene(3-phenyl-2,5,6-trimethyl-1-indenyl)(2,3,4,5-tetramethyl-1-cyclopentadienyl)zirconium dichloride;
dimethylsilylene(3-phenyl-4,5,6,7-tetramethyl-1-indenyl)(2,3,4,5-tetramethyl-1-cyclopentadienyl)zirconium dichloride;
dimethylsilylene(2,4,5,6,7-pentamethyl-3-phenyl-1-indenyl)(2,3,4,5-tetramethyl-1-cyclopentadienyl)zirconium dichloride;
dimethylsilylene(6-chloro-3-phenyl-1-indenyl)(2,3,4,5-tetramethyl-1-cyclopentadienyl)zirconium dichloride;
dimethylsilylene(7-chloro-3-phenyl-1-indenyl)(2,3,4,5-tetramethyl-1-cyclopentadienyl)zirconium dichloride;
dimethylsilylene(4,6-dichloro-3-phenyl-1-indenyl)(2,3,4,5-tetramethyl-1-cyclopentadienyl)zirconium dichloride;
dimethylsilylene(5,7-dichloro-2-methyl-3-phenyl-1-indenyl)(2,3,4,5-tetramethyl-1-cyclopentadienyl)zirconium dichloride;
dimethylsilylene(2-butyl-7-chloro-3-phenyl-1-indenyl)(2,3,4,5-tetramethyl-1-cyclopentadienyl)zirconium dichloride;
dimethylsilylene(7-chloro-3-phenyl-2-propyl-1-indenyl)(2,3,4,5-tetramethyl-1-cyclopentadienyl)zirconium dichloride;
dimethylsilylene(7-chloro-2-ethyl-3-phenyl-1-indenyl)(2,3,4,5-tetramethyl-1-cyclopentadienyl)zirconium dichloride;
dimethylsilylene(5-fluoro-3-phenyl-1-indenyl)(2,3,4,5-tetramethyl-1-cyclopentadienyl)zirconium dichloride;
dimethylsilylene(5,7-difluoro-3-phenyl-1-indenyl)(2,3,4,5-tetramethyl-1-cyclopentadienyl)zirconium dichloride;
dimethylsilylene(4,6-difluoro-3-phenyl-1-indenyl)(2,3,4,5-tetramethyl-1-cyclopentadienyl)zirconium dichloride;
dimethylsilylene(5,7-difluoro-2-methyl-3-phenyl-1-indenyl)(2,3,4,5-tetramethyl-1-cyclopentadienyl)zirconium dichloride;
dimethylsilylene(3-phenyl-1,5,6,7-tetrahydro-s-1-indacenyl)(2,3,4,5-tetramethyl-1-cyclopentadienyl)zirconium dichloride;
dimethylsilylene(2-methyl-3-phenyl-1,5,6,7-tetrahydro-s-1-indacenyl)(2,3,4,5-tetramethyl-1-cyclopentadienyl)zirconium dichloride;
dimethylsilylene(6,6-dimethyl-3-phenyl-1,5,6,7-tetrahydro-s-1-indacenyl)(2,3,4,5-tetramethyl-1-cyclopentadienyl)zirconium dichloride;
dimethylsilylene(3-phenyl-2,6,6-trimethyl-1,5,6,7-tetrahydro-s-1-indacenyl)(2,3,4,5-tetramethyl-1-cyclopentadienyl)zirconium dichloride;
dimethylsilylene(3-phenyl-5,5,8,8-tetramethyl-5,6,7,8-tetrahydrobenz[f]-1-indenyl)(2,3,4,5-tetramethyl-1-cyclopentadienyl)zirconium dichloride;
dimethylsilylene(3-phenylbenz[f]-1-indenyl)(2,3,4,5-tetramethyl-1-cyclopentadienyl)zirconium dichloride;
dimethylsilylene(2-methyl-3-phenylbenz[f]-1-indenyl)(2,3,4,5-tetramethyl-1-cyclopentadienyl)zirconium dichloride;
dimethylsilylene(2,5,5,8,8-pentamethyl-3-phenyl-5,6,7,8-tetrahydrobenz[f]-1-indenyl)(2,3,4,5-tetramethyl-1-cyclopentadienyl)zirconium dichloride;
dimethylsilylene(3-phenylbenz[e]-1-indenyl)(2,3,4,5-tetramethyl-1-cyclopentadienyl)zirconium dichloride;
dimethylsilylene(2-methyl-3-phenylbenz[e]-1-indenyl)(2,3,4,5-tetramethyl-1-cyclopentadienyl)zirconium dichloride;
dimethylsilylene(3-(4-methylphenyl)-1-indenyl)(2,3,4,5-tetramethyl-1-cyclopentadienyl)zirconium dichloride;
dimethylsilylene(3-(3,5-dimethylphenyl)-1-indenyl)(2,3,4,5-tetramethyl-1-cyclopentadienyl)zirconium dichloride;
dimethylsilylene(3-(2,6-dimethylphenyl)-1-indenyl)(2,3,4,5-tetramethyl-1-cyclopentadienyl)zirconium dichloride;
dimethylsilylene(3-(2,4-dimethylphenyl)-1-indenyl)(2,3,4,5-tetramethyl-1-cyclopentadienyl)zirconium dichloride;
dimethylsilylene(3-(3,4-dimethylphenyl)-1-indenyl)(2,3,4,5-tetramethyl-1-cyclopentadienyl)zirconium dichloride;
dimethylsilylene(3-(2,3-dimethylphenyl)-1-indenyl)(2,3,4,5-tetramethyl-1-cyclopentadienyl)zirconium dichloride;
dimethylsilylene(3-(2,5-dimethylphenyl)-1-indenyl)(2,3,4,5-tetramethyl-1-cyclopentadienyl)zirconium dichloride;
dimethylsilylene(3-(2,4,6-trimethylphenyl)-1-indenyl)(2,3,4,5-tetramethyl-1-cyclopentadienyl)zirconium dichloride;
dimethylsilylene(3-(2,3,4-trimethylphenyl)-1-indenyl)(2,3,4,5-tetramethyl-1-cyclopentadienyl)zirconium dichloride;
dimethylsilylene(3-(3,4,5-trimethylphenyl)-1-indenyl)(2,3,4,5-tetramethyl-1-cyclopentadienyl)zirconium dichloride;
dimethylsilylene(3-(2,3,5-trimethylphenyl)-1-indenyl)(2,3,4,5-tetramethyl-1-cyclopentadienyl)zirconium dichloride;
dimethylsilylene(3-(2,3,6-trimethylphenyl)-1-indenyl)(2,3,4,5-tetramethyl-1-cyclopentadienyl)zirconium dichloride;
dimethylsilylene(3-(2,4,5-trimethylphenyl)-1-indenyl)(2,3,4,5-tetramethyl-1-cyclopentadienyl)zirconium dichloride;
dimethylsilylene(3-(2,3,4,5-tetramethylphenyl)-1-indenyl)(2,3,4,5-tetramethyl-1-cyclopentadienyl)zirconium dichloride;
dimethylsilylene(3-(2,3,4,6-tetramethylphenyl)-1-indenyl)(2,3,4,5-tetramethyl-1-cyclopentadienyl)zirconium dichloride;
dimethylsilylene(3-(2,3,5,6-tetramethylphenyl)-1-indenyl)(2,3,4,5-tetramethyl-1-cyclopentadienyl)zirconium dichloride;
dimethylsilylene(3-(2,3,4,5,6-pentamethylphenyl)-1-indenyl)(2,3,4,5-tetramethyl-1-cyclopentadienyl)zirconium dichloride;
dimethylsilylene(3-(2-methylphenyl)-1-indenyl)(2,3,4,5-tetramethyl-1-cyclopentadienyl)zirconium dichloride;
dimethylsilylene(3-(2-ethylphenyl)-1-indenyl)(2,3,4,5-tetramethyl-1-cyclopentadienyl)zirconium dichloride;
dimethylsilylene(3-(2-propylphenyl)-1-indenyl)(2,3,4,5-tetramethyl-1-cyclopentadienyl)zirconium dichloride;
dimethylsilylene(3-(2-butylphenyl)-1-indenyl)(2,3,4,5-tetramethyl-1-cyclopentadienyl)zirconium dichloride;
dimethylsilylene(3-(3-methylphenyl)-1-indenyl)(2,3,4,5-tetramethyl-1-cyclopentadienyl)zirconium dichloride;
dimethylsilylene(3-(3-ethylphenyl)-1-indenyl)(2,3,4,5-tetramethyl-1-cyclopentadienyl)zirconium dichloride;
dimethylsilylene(3-(3-propylphenyl)-1-indenyl)(2,3,4,5-tetramethyl-1-cyclopentadienyl)zirconium dichloride;
dimethylsilylene(3-(3-butylphenyl)-1-indenyl)(2,3,4,5-tetramethyl-1-cyclopentadienyl)zirconium dichloride;
dimethylsilylene(3-(3-t-butylphenyl)-1-indenyl)(2,3,4,5-tetramethyl-1-cyclopentadienyl)zirconium dichloride;
dimethylsilylene(3-(4-methylphenyl)-1-indenyl)(2,3,4,5-tetramethyl-1-cyclopentadienyl)zirconium dichloride;
dimethylsilylene(3-(4-ethylphenyl)-1-indenyl)(2,3,4,5-tetramethyl-1-cyclopentadienyl)zirconium dichloride;
dimethylsilylene(3-(4-propylphenyl)-1-indenyl)(2,3,4,5-tetramethyl-1-cyclopentadienyl)zirconium dichloride;
dimethylsilylene(3-(4-butylphenyl)-1-indenyl)(2,3,4,5-tetramethyl-1-cyclopentadienyl)zirconium dichloride;
dimethylsilylene(3-(4-t-butylphenyl)-1-indenyl)(2,3,4,5-tetramethyl-1-cyclopentadienyl)zirconium dichloride;
dimethylsilylene(3-(4-biphenyl)-1-indenyl)(2,3,4,5-tetramethyl-1-cyclopentadienyl)zirconium dichloride;
dimethylsilylene(3-(3-biphenyl)-1-indenyl)(2,3,4,5-tetramethyl-1-cyclopentadienyl)zirconium dichloride;
dimethylsilylene(3-(2-biphenyl)-1-indenyl)(2,3,4,5-tetramethyl-1-cyclopentadienyl)zirconium dichloride;
dimethylsilylene(3-(3,5-diphenylphenyl)-1-indenyl)(2,3,4,5-tetramethyl-1-cyclopentadienyl)zirconium dichloride;
dimethylsilylene(3-(3,5-di-t-butylphenyl)-1-indenyl)(2,3,4,5-tetramethyl-1-cyclopentadienyl)zirconium dichloride;
dimethylsilylene(3-(2-fluorophenyl)-1-indenyl)(2,3,4,5-tetramethyl-1-cyclopentadienyl)zirconium dichloride;
dimethylsilylene(3-(3-fluorophenyl)-1-indenyl)(2,3,4,5-tetramethyl-1-cyclopentadienyl)zirconium dichloride;
dimethylsilylene(3-(4-fluorophenyl)-1-indenyl)(2,3,4,5-tetramethyl-1-cyclopentadienyl)zirconium dichloride;
dimethylsilylene(3-(2,3-difluorophenyl)-1-indenyl)(2,3,4,5-tetramethyl-1-cyclopentadienyl)zirconium dichloride;
dimethylsilylene(3-(2,4-difluorophenyl)-1-indenyl)(2,3,4,5-tetramethyl-1-cyclopentadienyl)zirconium dichloride;
dimethylsilylene(3-(2,5-difluorophenyl)-1-indenyl)(2,3,4,5-tetramethyl-1-cyclopentadienyl)zirconium dichloride;
dimethylsilylene(3-(2,6-difluorophenyl)-1-indenyl)(2,3,4,5-tetramethyl-1-cyclopentadienyl)zirconium dichloride;
dimethylsilylene(3-(3,4-difluorophenyl)-1-indenyl)(2,3,4,5-tetramethyl-1-cyclopentadienyl)zirconium dichloride;
dimethylsilylene(3-(3,5-difluorophenyl)-1-indenyl)(2,3,4,5-tetramethyl-1-cyclopentadienyl)zirconium dichloride;
dimethylsilylene(3-(2,3,4-trifluorophenyl)-1-indenyl)(2,3,4,5-tetramethyl-1-cyclopentadienyl)zirconium dichloride;
dimethylsilylene(3-(2,3,5-trifluorophenyl)-1-indenyl)(2,3,4,5-tetramethyl-1-cyclopentadienyl)zirconium dichloride;
dimethylsilylene(3-(2,3,6-trifluorophenyl)-1-indenyl)(2,3,4,5-tetramethyl-1-cyclopentadienyl)zirconium dichloride;
dimethylsilylene(3-(2,4,5-trifluorophenyl)-1-indenyl)(2,3,4,5-tetramethyl-1-cyclopentadienyl)zirconium dichloride;
dimethylsilylene(3-(2,4,6-trifluorophenyl)-1-indenyl)(2,3,4,5-tetramethyl-1-cyclopentadienyl)zirconium dichloride;
dimethylsilylene(3-(3,4,5-trifluorophenyl)-1-indenyl)(2,3,4,5-tetramethyl-1-cyclopentadienyl)zirconium dichloride;
dimethylsilylene(3-(2,3,4,5-tetrafluorophenyl)-1-indenyl)(2,3,4,5-tetramethyl-1-cyclopentadienyl)zirconium dichloride;
dimethylsilylene(3-(2,3,4,6-tetrafluorophenyl)-1-indenyl)(2,3,4,5-tetramethyl-1-cyclopentadienyl)zirconium dichloride;
dimethylsilylene(3-(2,3,5,6-tetrafluorophenyl)-1-indenyl)(2,3,4,5-tetramethyl-1-cyclopentadienyl)zirconium dichloride;
dimethylsilylene(3-(pentafluorophenyl)-1-indenyl)(2,3,4,5-tetramethyl-1-cyclopentadienyl)zirconium dichloride;
dimethylsilylene(3-(2-chlorophenyl)-1-indenyl)(2,3,4,5-tetramethyl-1-cyclopentadienyl)zirconium dichloride;
dimethylsilylene(3-(3-chlorophenyl)-1-indenyl)(2,3,4,5-tetramethyl-1-cyclopentadienyl)zirconium dichloride;
dimethylsilylene(3-(4-chlorophenyl)-1-indenyl)(2,3,4,5-tetramethyl-1-cyclopentadienyl)zirconium dichloride;
dimethylsilylene(3-(2,6-dichlorophenyl)-1-indenyl)(2,3,4,5-tetramethyl-1-cyclopentadienyl)zirconium dichloride;
dimethylsilylene(3-(3,5-dichlorophenyl)-1-indenyl)(2,3,4,5-tetramethyl-1-cyclopentadienyl)zirconium dichloride;
dimethylsilylene(3-(2,4,6-trichlorophenyl)-1-indenyl)(2,3,4,5-tetramethyl-1-cyclopentadienyl)zirconium dichloride;
dimethylsilylene(3-(2-trifluoromethylphenyl)-1-indenyl)(2,3,4,5-tetramethyl-1-cyclopentadienyl)zirconium dichloride;
dimethylsilylene(3-(3-trifluoromethylphenyl)-1-indenyl)(2,3,4,5-tetramethyl-1-cyclopentadienyl)zirconium dichloride;
dimethylsilylene(3-(4-trifluoromethylphenyl)-1-indenyl)(2,3,4,5-tetramethyl-1-cyclopentadienyl)zirconium dichloride;
dimethylsilylene(3-(3,5-bis(trifluoromethyl)phenyl)-1-indenyl)(2,3,4,5-tetramethyl-1-cyclopentadienyl)zirconium dichloride;
dimethylsilylene(3-(2-methoxyphenyl)-1-indenyl)(2,3,4,5-tetramethyl-1-cyclopentadienyl)zirconium dichloride;
dimethylsilylene(3-(3-methoxyphenyl)-1-indenyl)(2,3,4,5-tetramethyl-1-cyclopentadienyl)zirconium dichloride;
dimethylsilylene(3-(4-methoxyphenyl)-1-indenyl)(2,3,4,5-tetramethyl-1-cyclopentadienyl)zirconium dichloride;
dimethylsilylene(3-(2,6-dimethoxyphenyl)-1-indenyl)(2,3,4,5-tetramethyl-1-cyclopentadienyl)zirconium dichloride;
dimethylsilylene(3-(3,5-dimethoxyphenyl)-1-indenyl)(2,3,4,5-tetramethyl-1-cyclopentadienyl)zirconium dichloride;
dimethylsilylene(3-(2,4,6-trimethoxyphenyl)-1-indenyl)(2,3,4,5-tetramethyl-1-cyclopentadienyl)zirconium dichloride;
dimethylsilylene(3-(1-naphthyl)-1-indenyl)(2,3,4,5-tetramethyl-1-cyclopentadienyl)zirconium dichloride;
dimethylsilylene(3-(2-naphthyl)-1-indenyl)(2,3,4,5-tetramethyl-1-cyclopentadienyl)zirconium dichloride;
dimethylsilylene(2-methyl-3-(2-naphthyl)-1-indenyl)(2,3,4,5-tetramethyl-1-cyclopentadienyl)zirconium dichloride;
dimethylsilylene(3-(1-anthryl)-1-indenyl)(2,3,4,5-tetramethyl-1-cyclopentadienyl)zirconium dichloride;
dimethylsilylene(3-(2-anthryl)-1-indenyl)(2,3,4,5-tetramethyl-1-cyclopentadienyl)zirconium dichloride;
dimethylsilylene(3-(9-anthryl)-1-indenyl)(2,3,4,5-tetramethyl-1-cyclopentadienyl)zirconium dichloride;
dimethylsilylene(3-(9-phenanthryl)-1-indenyl)(2,3,4,5-tetramethyl-1-cyclopentadienyl)zirconium dichloride;
dimethylsilylene(3-(2-furanyl)-1-indenyl)(2,3,4,5-tetramethyl-1-cyclopentadienyl)zirconium dichloride;
dimethylsilylene(3-(2-furanyl)-2-methyl-1-indenyl)(2,3,4,5-tetramethyl-1-cyclopentadienyl)zirconium dichloride;
dimethylsilylene(3-(3-furanyl)-1-indenyl)(2,3,4,5-tetramethyl-1-cyclopentadienyl)zirconium dichloride;
dimethylsilylene(3-(3-furanyl)-2-methyl-1-indenyl)(2,3,4,5-tetramethyl-1-cyclopentadienyl)zirconium dichloride;
dimethylsilylene(3-(2-thiophenyl)-1-indenyl)(2,3,4,5-tetramethyl-1-cyclopentadienyl)zirconium dichloride;
dimethylsilylene(2-methyl-3-(2-thiophenyl)-1-indenyl)(2,3,4,5-tetramethyl-1-cyclopentadienyl)zirconium dichloride;
dimethylsilylene(3-(3-thiophenyl)-1-indenyl)(2,3,4,5-tetramethyl-1-cyclopentadienyl)zirconium dichloride;
dimethylsilylene(2-methyl-3-(3-thiophenyl)-1-indenyl)(2,3,4,5-tetramethyl-1-cyclopentadienyl)zirconium dichloride;
dimethylsilylene(3-(2-pyridyl)-1-indenyl)(2,3,4,5-tetramethyl-1-cyclopentadienyl)zirconium dichloride;
dimethylsilylene(2-methyl-3-(2-pyridyl)-1-indenyl)(2,3,4,5-tetramethyl-1-cyclopentadienyl)zirconium dichloride;
dimethylsilylene(3-(3-pyridyl)-1-indenyl)(2,3,4,5-tetramethyl-1-cyclopentadienyl)zirconium dichloride;
dimethylsilylene(2-methyl-3-(3-pyridyl)-1-indenyl)(2,3,4,5-tetramethyl-1-cyclopentadienyl)zirconium dichloride;
titanium and hafnium analogs of the above zirconium dichloride compounds wherein the zirconium transition metal is replaced with titanium or hafnium; and
dimethyl analogs of the above dichloride compounds wherein the chloride groups on the zirconium, hafnium, or titanium transition metal are replaced with methyl groups.

8. The bridged metallocene compound of any of claims 1 to 6, wherein each of R¹, R², R³, R⁴, R⁵, R⁶, R⁷, R⁸, and R⁹ is, independently, hydrogen or a C₁ to C₂₀ substituted or unsubstituted hydrocarbyl group.

9. The bridged metallocene compound of any of claims 1 to 6, wherein each of R⁶, R⁷, R⁸, and R⁹ is, independently, a C₁ to C₄₀ substituted or unsubstituted hydrocarbyl group.

10. The bridged metallocene compound of claim 9, wherein R⁶ and R⁹ are the same.

11. The bridged metallocene compound of claim 9, wherein R⁷ and R⁸ are the same.

12. The bridged metallocene compound of any of claims 1 to 6, wherein each of R⁶, R⁷, R⁸, and R⁹ is, independently, selected from the group consisting of methyl, ethyl, propyl, isopropyl, n-butyl, sec-butyl, t-butyl, pentyl, hexyl, heptyl, octyl, decyl, and undecyl groups, preferably, a methyl group, an ethyl group, or an n-propyl group.

13. A catalyst system comprising the bridged metallocene compound of any of claims 1 to 12 and at least one activator.

14. The catalyst system of claim 13, further comprising a support material.

15. The catalyst system of claim 13, wherein the activator is an alumoxane.

16. The catalyst system of claim 13, wherein the activator is an ionic stoichiometric activator.

17. A process to polymerize ethylene and optional comonomers comprising one or more C₃ to C₄₀ olefins comprising contacting ethylene and optional comonomers comprising one or more C₃ to C₄₀ olefins with the catalyst systems of any of claims 13 to 16.

18. The process of claim 17, wherein the polymerization is conducted in the gas phase.

## Patentansprüche

1. Verbrückte Metallocenverbindung, die durch die folgende Formel wiedergegeben ist: 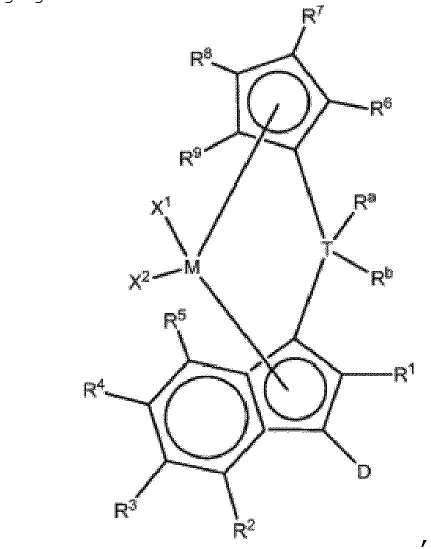 in der:
M ein Metall der Gruppe 4 ist,
T ein Atom der Gruppe 14 ist,
D eine aromatische Gruppe ist, die substituiert oder nicht substituiert ist,
R^{a} und R^{b} unabhängig Wasserstoff, Halogen oder substituierter oder nicht substituierter C₁- bis C₂₀-Kohlenwasserstoff sind und R^{a} und R^{b} eine cyclische Struktur einschließlich substituiertes oder nicht substituiertes aromatisches, teilweise gesättigtes oder gesättigtes cyclisches oder anneliertes Ringsystem bilden können,
jedes X¹ und X² unabhängig ausgewählt ist aus der Gruppe bestehend aus substituierten oder nicht substituierten C₁-bis C₂₀-Kohlenwasserstoffgruppen, Hydriden, Amiden, Aminen, Alkoxiden, Sulfiden, Phosphiden, Halogeniden, Dienen, Phosphinen und Ethern und X¹ und X² eine cyclische Struktur einschließlich aromatischem, teilweise gesättigtem oder gesättigtem cyclischen oder anneliertem Ringsystem bilden können,
R¹, R², R³, R⁴ und R⁵ unabhängig Wasserstoff, Halogenid, Alkoxid oder substituierte oder nicht substituierte C₁- bis C₄₀-Kohlenwasserstoffgruppe und jedes der benachbarten R²-, R³-, R⁴- und/oder R⁵-Gruppen annelierte oder mehrkernige annelierte Ringsysteme bilden können, wobei die Ringe substituiert oder nicht substituiert sein können und aromatisch, teilweise ungesättigt oder ungesättigt sein können, und
jedes R⁶, R⁷, R⁸ und R⁹ jeweils unabhängig Wasserstoff oder substituierte oder nicht substituierte C₁- bis C₄₀-Kohlenwasserstoffgruppen ist,
ferner vorausgesetzt, dass mindestens zwei von R⁶, R⁷, R⁸ und R⁹ substituierte oder nicht substituierte C₁- bis C₄₀-Kohlenwasserstoffgruppen sind.

2. Verbrückte Metallocenverbindung nach Anspruch 1, wobei M Zirkonium oder Hafnium ist.

3. Verbrückte Metallocenverbindung nach Anspruch 1 oder 2, wobei D ausgewählt ist aus der Gruppe bestehend aus substituiertem oder nicht substituiertem Phenyl, Naphthyl, Biphenyl, Cyclopropenyl, Tropylium, Cyclooctatetraenyl, Furanyl, Pyridinyl, Borabenzyl, Thiophenyl, Azolyl, Oxazolyl und Imidazolyl.

4. Verbrückte Metallocenverbindung nach einem der Ansprüche 1 bis 3, wobei T Silicium oder Germanium ist.

5. Verbrückte Metallocenverbindung nach einem der Ansprüche 1 bis 4, wobei jedes R^{a} und R^{b} unabhängig ausgewählt ist aus der Gruppe bestehend aus Halogeniden, substituierten oder nicht substituierten C₁- bis C₂₀-Kohlenwasserstoffgruppen und cyclischen Strukturen, in denen R^{a} und R^{b} eine Heterocyclopentyl-, Heterocyclobutyl- oder Heterocyclohexylstruktur bilden, in der T ein Heteroatom ist.

6. Verbrückte Metallocenverbindung nach einem der Ansprüche 1 bis 5, wobei jedes X¹ und X² unabhängig ausgewählt ist aus der Gruppe bestehend aus Halogeniden und substituierten oder nicht substituierten C₁- bis C₂₀-Kohlenwasserstoffgruppen.

7. Verbrückte Metallocenverbindung nach Anspruch 1, wobei die Metallocenverbindung eine oder mehrere ist von:
Dimethylsilylen(3-phenyl-1-indenyl)(2,3,4,5-tetramethyl-1-cyclopentadienyl)zirkoniumdichlorid,
Dimethylsilylen(3-phenyl-1-indenyl)(2,5-dimethyl-1-cyclopentadienyl)zirkoniumdichlorid,
Dimethylsilylen(3-phenyl-1-indenyl) (3,4-dimethyl-1-cyclopentadienyl)zirkoniumdichlorid,
Dimethylsilylen(3-phenyl-1-indenyl)(2,3,4,5-tetraethyl-1-cyclopentadienyl)zirkoniumdichlorid,
Dimethylsilylen(3-phenyl-1-indenyl)(2,3,4,5-tetrapropyl-1-cyclopentadienyl)zirkoniumdichlorid,
Dimethylsilylen(3-phenyl-1-indenyl) (9-flourenyl)zirkoniumdichlorid,
Dimethylsilylen(3-phenyl-1-indenyl)(2,7-dimethyl-9-fluorenyl)zirkoniumdichlorid,
Dimethylsilylen(3-phenyl-1-indenyl)(2,7-di-t-butyl-9-fluorenyl)zirkoniumdichlorid,
Dimethylsilylen(3-phenyl-1-indenyl)(3,6-dimethyl-9-fluorenyl)zirkoniumdichlorid,
Dimethylsilylen(3-phenyl-1-indenyl)(3,6-di-t-butyl-9-fluorenyl)zirkonium-dichlorid,
Dimethylsilylen(3-phenyl-1-indenyl) (4,7-dimethyl-9-fluorenyl)zirkoniumdichlorid,
Diethylsilylen(3-phenyl-1-indenyl)(2,3,4,5-tetramethyl-1-cyclopentadienyl)zirkoniumdichlorid,
Dipropylsilylen(3-phenyl-1-indenyl)(2,3,4,5-tetramethyl-1-)cyclopentadienyl)zirkoniumdichlorid,
Dibutylsilylen(3-phenyl-1-indenyl)(2,3,4,5-tetramethyl-1-)cyclopentadienyl)zirkoniumdichlorid,
Diphenylsilylen(3-phenyl-1-indenyl)(2,3,4,5-tetramethyl-1-)cyclopentadienyl)zirkoniumdichlorid,
Silacyclobutyliden(3-phenyl-1-indenyl)(2,3,4,5-tetramethyl-1-cyclopentadienyl)zirkoniumdichlorid,
Silacyclopentyliden(3-phenyl-1-indenyl) (2,3,4,5-tetramethyl-1-cyclopentadienyl)zirkoniumdichlorid,
Silacyclohexyliden(3-phenyl-1-indenyl) (2,3,4,5-tetramethyl-1-cyclopentadienyl)zirkoniumdichlorid,
Dimethylgermylen(3-phenyl-1-indenyl) (2,3,4,5-tetramethyl-1-cyclopentadienyl)zirkoniumdichlorid,
Diethylgermylen(3-phenyl-1-indenyl) (2,3,4,5-tetramethyl-1-cyclopentadienyl)zirkoniumdichlorid,
Dipropylgermylen(3-phenyl-1-indenyl) (2,3,4,5-tetramethyl-1-cyclopentadienyl)zirkoniumdichlorid,
Dibutylgermylen(3-phenyl-1-indenyl) (2,3,4,5-tetramethyl-1-cyclo-penta-dien-yl)zirkonium-dichlorid,
Diphenylgermylen(3-phenyl-1-indenyl) (2,3,4,5-tetramethyl-1-cyclopentadienyl)zirkoniumdichlorid,
Isopropyliden(3-phenyl-1-indenyl) (2,3,4,5-tetramethyl-1-cyclo-penta-dienyl)zirkoniumdichlorid,
Diphenylmethylen(3-phenyl-1-indenyl) (2,3,4,5-tetramethyl-1-cyclopentadienyl)zirkoniumdichlorid,
Dimethylsilylen(2-methyl-3-phenyl-1-indenyl) (2,3,4,5-tetramethyl-1-cyclopentadienyl)zirkoniumdichlorid,
Dimethylsilylen(2-ethyl-3-phenyl-1-indenyl) (2,3,4,5-tetramethyl-1-cyclopentadienyl)zirkoniumdichlorid,
Dimethylsilylen(2-propyl-3-phenyl-1-indenyl) (2,3,4,5-tetramethyl-1-cyclopentadienyl)zirkoniumdichlorid,
Dimethylsilylen(2-isopropyl-3-phenyl-1-indenyl)(2,3,4,5-tetramethyl-1-cyclopentadienyl)zirkoniumdichlorid,
Dimethylsilylen(4-methyl-3-phenyl-1-indenyl) (2,3,4,5-tetramethyl-1-cyclopentadienyl)zirkoniumdichlorid,
Dimethylsilylen(4,7-dimethyl-3-phenyl-1-indenyl) (2,3,4,5-tetramethyl-1-cyclopentadienyl)zirkoniumdichlorid,
Dimethylsilylen(5,6-dimethyl-3-phenyl-1-indenyl)(2,3,4,5-tetramethyl-1-cyclopentadienyl)zirkoniumdichlorid,
Dimethylsilylen(2,4-dimethyl-3-phenyl-1-indenyl) (2,3,4,5-tetramethyl-1-cyclopentadienyl)zirkoniumdichlorid,
Dimethylsilylen(2,6-dimethyl-3-phenyl-1-indenyl) (2,3,4,5-tetramethyl-1-cyclopentadienyl)zirkoniumdichlorid,
Dimethylsilylen(3-phenyl-2,4,6-trimethyl-1-indenyl)-(2,3,4,5-tetramethyl-1-cyclopentadienyl)-zirkoniumdichlorid,
Dimethylsilylen(3-phenyl-2,4,7-trimethyl-1-indenyl)-(2,3,4,5-tetramethyl-1-cyclopentadienyl)zirkoniumdichlorid,
Dimethylsilylen(3-phenyl-2,5,6-trimethyl-1-indenyl)-(2,3,4,5-tetramethyl-1-cyclopentadienyl)zirkoniumdichlorid,
Dimethylsilylen(3-phenyl-4,5,6,7-tetramethyl-1-indenyl)-(2,3,4,5-tetramethyl-1-cyclopentadienyl)zirkoniumdichlorid,
Dimethylsilylen(2,4,5,6,7-pentamethyl-3-phenyl-1-indenyl)-(2,3,4,5-tetramethyl-1-cyclopentadienyl)zirkoniumdichlorid,
Dimethylsilylen(6-chlor-3-phenyl-1-indenyl) (2,3,4,5-tetramethyl-1-cyclopentadienyl)zirkoniumdichlorid,
Dimethylsilylen(7-chlor-3-phenyl-1-indenyl) (2,3,4,5-tetramethyl-1-cyclopentadienyl)zirkoniumdichlorid,
Dimethylsilylen(4,6-dichlor-3-phenyl-1-indenyl) (2,3,4,5-tetramethyl-1-cyclopentadienyl)zirkoniumdichlorid,
Dimethylsilylen(5,7-dichlor-2-methyl-3-phenyl-1-indenyl)(2,3,4,5-tetramethyl-1-cyclopentadienyl)zirkoniumdichlorid,
Dimethylsilylen(2-butyl-7-chlor-3-phenyl-1-indenyl)(2,3,4,5-tetramethyl-1-)cyclopentadienyl)zirkoniumdichlorid,
Dimethylsilylen(7-chlor-3-phenyl-2-propyl-1-indenyl)(2,3,4,5-tetramethyl-1-cyclopentadienyl)zirkoniumdichlorid,
Dimethylsilylen(7-chlor-2-ethyl-3-phenyl-1-indenyl)(2,3,4,5-tetramethyl-1-cyclopentadienyl)zirkoniumdichlorid,
Dimethylsilylen(5-fluoro-3-phenyl-1-indenyl)(2,3,4,5-tetramethyl-1-cyclopentadienyl)zirkoniumdichlorid,
Dimethylsilylen(5,7-difluoro-3-phenyl-1-indenyl)(2,3,4,5-tetramethyl-1-cyclopentadienyl)zirkoniumdichlorid,
Dimethylsilylen(4,6-difluoro-3-phenyl-1-indenyl) (2,3,4,5-tetramethyl-1-cyclopentadienyl)zirkoniumdichlorid,
Dimethylsilylen(5,7-difluoro-2-methyl-3-phenyl-1-indenyl)(2,3,4,5-tetramethyl-1-cyclopentadienyl)zirkoniumdichlorid,
Dimethylsilylen(3-phenyl-1,5,6,7-tetrahydro-s-1-indacenyl) (2,3,4,5-tetramethyl-1-)-cyclopentadienyl)zirkoniumdichlorid,
Dimethylsilylen(2-methyl-3-phenyl-1,5,6,7-tetrahydro-s-1-indacenyl)(2,3,4,5-tetramethyl-1-cyclopentadienyl)zirkoniumdichlorid,
Dimethylsilylen(6,6-dimethyl-3-phenyl-1,5,6,7-tetrahydros-1-indacenyl)(2,3,4,5-tetramethyl-1-cyclopentadienyl)zirkoniumdichlorid,
Dimethylsilylen(3-phenyl-2,6,6-trimethyl-1,5,6,7-tetrahydro-s-1-indacenyl) (2,3,4,5-tetramethyl-1-cyclopentadienyl)zirkoniumdichlorid,
Dimethylsilylen(3-phenyl-5,5,8,8-tetramethyl-5,6,7,8-tetrahydrobenz[f]-1-indenyl)(2,3,4,5-tetramethyl-1-cyclopentadienyl)zirkoniumdichlorid,
Dimethylsilylen(3-phenylbenz[f]-1-indenyl)(2,3,4,5-tetramethyl-1-cyclopentadienyl)zirkoniumdichlorid,
Dimethylsilylen(2-methyl-3-phenylbenz[f]-1-indenyl)-(2,3,4,5-tetramethyl-1-cyclopentadienyl)zirkoniumdichlorid,
Dimethylsilylen(2,5,5,8,8-pentamethyl-3-phenyl-5,6,7,8-tetrahydrobenz[f]-1-indenyl)(2,3,4,5-tetramethyl-1-cyclopentadienyl)zirkoniumdichlorid,
Dimethylsilylen(3-phenylbenz[e]-1-indenyl)(2,3,4,5-tetramethyl-1-cyclo-penta-dien-yl)zirkonium-dichlorid,
Dimethylsilylen(2-methyl-3-phenylbenz[e]-1-indenyl)-(2,3,4,5-tetramethyl-1-cyclopentadienyl)zirkoniumdichlorid,
Dimethylsilylen(3-(4-methylphenyl)-1-indenyl)(2,3,4,5-tetramethyl-1-cyclopentadienyl)zirkoniumdichlorid,
Dimethylsilylen(3-(3,5-dimethylphenyl)-1-indenyl)-(2,3,4,5-tetramethyl-1-cyclopentadienyl)zirkoniumdichlorid,
Dimethylsilylen(3-(2,6-dimethylphenyl)-1-indenyl)-(2,3,4,5-tetramethyl-1-cyclopentadienyl)zirkoniumdichlorid,
Dimethylsilylen(3-(2,4-dimethylphenyl)-1-indenyl)-(2,3,4,5-tetramethyl-1-cyclopentadienyl)zirkoniumdichlorid,
Dimethylsilylen(3-(3,4-dimethylphenyl)-1-indenyl)-(2,3,4,5-tetramethyl-1-cyclopentadienyl)zirkoniumdichlorid,
Dimethylsilylen(3-(2,3-dimethylphenyl)-1-indenyl)-(2,3,4,5-tetramethyl-1-cyclopentadienyl)zirkoniumdichlorid,
Dimethylsilylen(3-(2,5-dimethylphenyl)-1-indenyl)-(2,3,4,5-tetramethyl-1-cyclopentadienyl)zirkoniumdichlorid,
Dimethylsilylen(3-(2,4,6-trimethylphenyl)-1-indenyl)-(2,3,4,5-tetramethyl-1-cyclopentadienyl)zirkoniumdichlorid,
Dimethylsilylen(3-(2,3,4-trimethylphenyl)-1-indenyl)-(2,3,4,5-tetramethyl-1-cyclopentadienyl)zirkoniumdichlorid,
Dimethylsilylen(3-(3,4,5-trimethylphenyl)-1-indenyl)-(2,3,4,5-tetramethyl-1-cyclopentadienyl)zirkoniumdichlorid,
Dimethylsilylen(3-(2,3,5-trimethylphenyl)-1-indenyl)-(2,3,4,5-tetramethyl-1-cyclopentadienyl)zirkoniumdichlorid,
Dimethylsilylen(3-(2,3,6-trimethylphenyl)-1-indenyl)-(2,3,4,5-tetramethyl-1-cyclopentadienyl)zirkoniumdichlorid,
Dimethylsilylen(3-(2,4,5-trimethylphenyl)-1-indenyl)-(2,3,4,5-tetramethyl-1-cyclopentadienyl)zirkoniumdichlorid,
Dimethylsilylen(3-(2,3,4,5-tetramethylphenyl)-1-indenyl)-(2,3,4,5-tetramethyl-1-cyclopentadienyl)zirkoniumdichlorid,
Dimethylsilylen(3-(2,3,4,6-tetramethylphenyl)-1-indenyl)-(2,3,4,5-tetramethyl-1-cyclopentadienyl)zirkoniumdichlorid,
Dimethylsilylen(3-(2,3,5,6-tetramethylphenyl)-1-indenyl)-(2,3,4,5-tetramethyl-1-cyclopentadienyl)zirkoniumdichlorid,
Dimethylsilylen(3-(2,3,4,5,6-pentamethylphenyl)-1-indenyl)-(2,3,4,5-tetramethyl-1-cyclopentadienyl)zirkoniumdichlorid,
Dimethylsilylen(3-(2-methylphenyl)-1-indenyl)(2,3,4,5-tetramethyl-1-cyclopentadienyl)zirkoniumdichlorid,
Dimethylsilylen(3-(2-ethylphenyl)-1-indenyl)(2,3,4,5-tetramethyl-1-cyclopentadienyl)zirkoniumdichlorid,
Dimethylsilylen(3-(2-propylphenyl)-1-indenyl)(2,3,4,5-tetramethyl-1-cyclopentadienyl)zirkoniumdichlorid,
Dimethylsilylen(3-(2-butylphenyl)-1-indenyl)(2,3,4,5-tetramethyl-1-cyclopentadienyl)zirkoniumdichlorid,
Dimethylsilylen(3-(3-methylphenyl)-1-indenyl)(2,3,4,5-tetramethyl-1-cyclopentadienyl)zirkoniumdichlorid,
Dimethylsilylen(3-(3-ethylphenyl)-1-indenyl)(2,3,4,5-tetramethyl-1-cyclopentadienyl)zirkoniumdichlorid,
Dimethylsilylen(3-(3-propylphenyl)-1-indenyl)(2,3,4,5-tetramethyl-1-cyclopentadienyl)zirkoniumdichlorid,
Dimethylsilylen(3-(3-butylphenyl)-1-indenyl)(2,3,4,5-tetramethyl-1-cyclopentadienyl)zirkoniumdichlorid,
Dimethylsilylen(3-(3-t-butylphenyl)-1-indenyl)(2,3,4,5-tetramethyl-1-cyclopentadienyl)zirkoniumdichlorid,
Dimethylsilylen(3-(4-methylphenyl)-1-indenyl) (2,3,4,5-tetramethyl-1-cyclopentadienyl)zirkoniumdichlorid,
Dimethylsilylen(3-(4-ethylphenyl)-1-indenyl)(2,3,4,5-tetramethyl-1-cyclopentadienyl)zirkoniumdichlorid,
Dimethylsilylen(3-(4-propylphenyl)-1-indenyl)(2,3,4,5-tetramethyl-1-cyclopentadienyl)zirkoniumdichlorid,
Dimethylsilylen(3-(4-butylphenyl)-1-indenyl)(2,3,4,5-tetramethyl-1-cyclopentadienyl)zirkoniumdichlorid,
Dimethylsilylen(3-(4-t-butylphenyl)-1-indenyl) (2,3,4,5-tetramethyl-1-cyclopentadienyl)zirkoniumdichlorid,
Dimethylsilylen(3-(4-biphenyl)-1-indenyl)(2,3,4,5-tetramethyl-1-cyclopentadienyl)zirkoniumdichlorid,
Dimethylsilylen(3-(3-biphenyl)-1-indenyl)(2,3,4,5-tetramethyl-1-cyclopentadienyl)zirkoniumdichlorid,
Dimethylsilylen(3-(2-biphenyl)-1-indenyl)(2,3,4,5-tetramethyl-1-cyclopentadienyl)zirkoniumdichlorid,
Dimethylsilylen(3-(3,5-diphenylphenyl)-1-indenyl)-(2,3,4,5-tetramethyl-1-cyclopentadienyl)zirkoniumdichlorid,
Dimethylsilylen(3-(3,5-di-t-butylphenyl)-1-indenyl)-(2,3,4,5-tetramethyl-1-cyclopentadienyl)zirkoniumdichlorid,
Dimethylsilylen(3-(2-fluorphenyl)-1-indenyl)(2,3,4,5-tetramethyl-1-cyclopentadienyl)zirkoniumdichlorid,
Dimethylsilylen(3-(3-fluorphenyl)-1-indenyl)(2,3,4,5-tetramethyl-1-cyclopentadienyl)zirkoniumdichlorid,
Dimethylsilylen(3-(4-fluorphenyl)-1-indenyl)(2,3,4,5-tetramethyl-1-cyclopentadienyl)zirkoniumdichlorid,
Dimethylsilylen(3-(2,3-difluorphenyl)-1-indenyl)(2,3,4,5-tetramethyl-1-cyclopentadienyl)zirkoniumdichlorid,
Dimethylsilylen(3-(2,4-difluorphenyl)-1-indenyl)(2,3,4,5-tetramethyl-1-cyclopentadienyl)zirkoniumdichlorid,
Dimethylsilylen(3-(2,5-difluorphenyl)-1-indenyl)(2,3,4,5-tetramethyl-1-cyclopentadienyl)zirkoniumdichlorid,
Dimethylsilylen(3-(2,6-difluorphenyl)-1-indenyl)(2,3,4,5-tetramethyl-1-cyclopentadienyl)zirkoniumdichlorid,
Dimethylsilylen(3-(3,4-difluorphenyl)-1-indenyl)(2,3,4,5-tetramethyl-1-cyclopentadienyl)zirkoniumdichlorid,
Dimethylsilylen(3-(3,5-difluorphenyl)-1-indenyl)(2,3,4,5-tetramethyl-1-cyclopentadienyl)zirkoniumdichlorid,
Dimethylsilylen(3-(2,3,4-triflurophenyl)-1-indenyl)-(2,3,4,5-tetramethyl-1-cyclopentadienyl)zirkoniumdichlorid,
Dimethylsilylen(3-(2,3,5-trifluorphenyl)-1-indenyl)-(2,3,4,5-tetramethyl-1-cyclopentadienyl)zirkoniumdichlorid,
Dimethylsilylen(3-(2,3,6-trifluorophenyl)-1-indenyl)-(2,3,4,5-tetramethyl-1-cyclopentadienyl)zirkoniumdichlorid,
Dimethylsilylen(3-(2,4,5-trifluorphenyl)-1-indenyl)-(2,3,4,5-tetramethyl-1-cyclopentadienyl)zirkoniumdichlorid,
Dimethylsilylen(3-(2,4,6-trifluorphenyl)-1-indenyl)-(2,3,4,5-tetramethyl-1-cyclopentadienyl)zirkoniumdichlorid,
Dimethylsilylen(3-(3,4,5-trifluorphenyl)-1-indenyl)-(2,3,4,5-tetramethyl-1-cyclopentadienyl)zirkoniumdichlorid,
Dimethylsilylen(3-(2,3,4,5-tetrafluorphenyl)-1-indenyl)-(2,3,4,5-tetramethyl-1-cyclopentadienyl)zirkoniumdichlorid,
Dimethylsilylen(3-(2,3,4,6-tetrafluorphenyl)-1-indenyl)-(2,3,4,5-tetramethyl-1-cyclopentadienyl)zirkoniumdichlorid,
Dimethylsilylen(3-(2,3,5,6-tetrafluorphenyl)-1-indenyl)-(2,3,4,5-tetramethyl-1-cyclopentadienyl)zirkoniumdichlorid,
Dimethylsilylen(3-(pentafluorphenyl)-1-indenyl)(2,3,4,5-tetramethyl-1-cyclopentadienyl)zirkoniumdichlorid,
Dimethylsilylen(3-(2-chlorphenyl)-1-indenyl) (2,3,4,5-tetramethyl-1-cyclopentadienyl)zirkoniumdichlorid,
Dimethylsilylen(3-(3-chlorphenyl)-1-indenyl) (2,3,4,5-tetramethyl-1-cyclopentadienyl)zirkoniumdichlorid,
Dimethylsilylen(3-(4-chlorphenyl)-1-indenyl) (2,3,4,5-tetramethyl-1-cyclopentadienyl)zirkoniumdichlorid,
Dimethylsilylen(3-(2,6-dichlorphenyl)-1-indenyl) (2,3,4,5-tetramethyl-1-cyclopentadienyl)zirkoniumdichlorid,
Dimethylsilylen(3-(3,5-dichlorphenyl)-1-indenyl)(2,3,4,5-tetramethyl-1-cyclopentadienyl)zirkoniumdichlorid,
Dimethylsilylen(3-(2,4,6-trichlorphenyl)-1-indenyl)-(2,3,4,5-tetramethyl-1-cyclopentadienyl)zirkoniumdichlorid,
Dimethylsilylen(3-(2-trifluormethylphenyl)-1-indenyl)-(2,3,4,5-tetramethyl-1-cyclopentadienyl)zirkoniumdichlorid,
Dimethylsilylen(3-(3-trifluormethylphenyl)-1-indenyl)-(2,3,4,5-tetramethyl-1-cyclopentadienyl)zirkoniumdichlorid,
Dimethylsilylen(3-(4-trifluormethylphenyl)-1-indenyl)-(2,3,4,5-tetramethyl-1-cyclopentadienyl)zirkoniumdichlorid,
Dimethylsilylen(3-(3,5-bis(trifluormethyl)phenyl)-1-indenyl)(2,3,4,5-tetramethyl-1-cyclopentadienyl)zirkoniumdichlorid,
Dimethylsilylen(3-(2-methoxyphenyl)-1-indenyl) (2,3,4,5-tetramethyl-1-cyclopentadienyl)zirkoniumdichlorid,
Dimethylsilylen(3-(3-methoxyphenyl)-1-indenyl) (2,3,4,5-tetramethyl-1-cyclopentadienyl)zirkoniumdichlorid,
Dimethylsilylen(3-(4-methoxyphenyl)-1-indenyl)(2,3,4,5-tetramethyl-1-cyclopentadienyl)zirkoniumdichlorid,
Dimethylsilylen(3-(2,6-dimethoxyphenyl)-1-indenyl)-(2,3,4,5-tetramethyl-1-cyclopentadienyl)zirkoniumdichlorid,
Dimethylsilylen(3-(3,5-dimethoxyphenyl)-1-indenyl)(2,3,4,5-tetramethyl-1-cyclopentadienyl)zirkoniumdichlorid,
Dimethylsilylen(3-(2,4,6-trimethoxyphenyl)-1-indenyl)-(2,3,4,5-tetramethyl-1-cyclopentadienyl)zirkoniumdichlorid,
Dimethylsilylen(3-(1-naphtyl)-1-indenyl)(2,3,4,5-tetramethyl-1-cyclopentadienyl)zirkoniumdichlorid,
Dimethylsilylen(3-(2-naphtyl)-1-indenyl)(2,3,4,5-tetramethyl-1-cyclopentadienyl)zirkoniumdichlorid,
Dimethylsilylen(2-methyl-3-(2-naphtyl)-1-indenyl)-(2,3,4,5-tetramethyl-1-cyclopentadienyl)zirkoniumdichlorid,
Dimethylsilylen(3-(1-anthryl)-1-indenyl) (2,3,4,5-tetramethyl-1-cyclopentadienyl)zirkoniumdichlorid,
Dimethylsilylen(3-(2-anthryl)-1-indenyl)(2,3,4,5-tetramethyl-1-cyclopentadienyl)zirkoniumdichlorid,
Dimethylsilylen(3-(9-anthryl)-1-indenyl) (2,3,4,5-tetramethyl-1-cyclopentadienyl)zirkoniumdichlorid,
Dimethylsilylen(3-(9-phenanthryl)-1-indenyl) (2,3,4,5-tetramethyl-1-cyclopentadienyl)zirkoniumdichlorid,
Dimethylsilylen(3-(2-furanyl)-1-indenyl) (2,3,4,5-tetramethyl-1-cyclopentadienyl)zirkoniumdichlorid,
Dimethylsilylen(3-(2-furanyl)-2-methyl-1-indenyl)(2,3,4,5-tetramethyl-1-cyclopentadienyl)zirkoniumdichlorid,
Dimethylsilylen(3-(3-furanyl)-1-indenyl) (2,3,4,5-tetramethyl-1-cyclopentadienyl)zirkoniumdichlorid,
Dimethylsilylen(3-(3-furanyl)-2-methyl-1-indenyl)-(2,3,4,5-tetramethyl-1-cyclopentadienyl)zirkoniumdichlorid,
Dimethylsilylen(3-(2-thiophenyl)-1-indenyl) (2,3,4,5-tetramethyl-1-cyclopentadienyl)zirkoniumdichlorid,
Dimethylsilylen(2-methyl-3-(2-thiophenyl)-1-indenyl)-(2,3,4,5-tetramethyl-1-cyclopentadienyl)zirkoniumdichlorid,
Dimethylsilylen(3-(3-thiophenyl)-1-indenyl) (2,3,4,5-tetramethyl-1-cyclopentadienyl)zirkoniumdichlorid,
Dimethylsilylen(2-methyl-3-(3-thiophenyl)-1-indenyl)-(2,3,4,5-tetramethyl-1-cyclopentadienyl)zirkoniumdichlorid,
Dimethylsilylen(3-(2-pyridyl)-1-indenyl) (2,3,4,5-tetramethyl-1-cyclopentadienyl)zirkoniumdichlorid,
Dimethylsilylen(2-methyl-3-(2-pyridyl)-1-indenyl)-(2,3,4,5-tetramethyl-1-cyclopentadienyl)zirkoniumdichlorid,
Dimethylsilylen(3-(3-pyridyl)-1-indenyl) (2,3,4,5-tetramethyl-1-cyclopentadienyl)zirkoniumdichlorid,
Dimethylsilylen(2-methyl-3-(3-pyridyl)-1-indenyl)-(2,3,4,5-tetramethyl-1-cyclopentadienyl)zirkoniumdichlorid,
Titan- und Hafniumanaloga der obigen Zirkoniumdichloridverbindungen, wobei das Zirkonium-Übergangsmetall durch Titan oder Hafnium ersetzt ist und
Dimethylanaloga der obigen Dichloridverbindungen, wobei die Chloridgruppen am Zirkonium-, Hafnium- oder Titan-Übergangsmetall durch Methylgruppen ersetzt sind.

8. Verbrückte Metallocenverbindung nach einem der Ansprüche 1 bis 6, wobei jedes von R¹, R², R³, R⁴, R⁵, R⁶, R⁷, R⁸ und R⁹ unabhängig Wasserstoff oder eine substituierte oder nicht substituierte C₁- bis C₂₀-Kohlenwasserstoffgruppe ist.

9. Verbrückte Metallocenverbindung nach einem der Ansprüche 1 bis 6, wobei jedes von R⁶, R⁷, R⁸ und R⁹ unabhängig eine substituierte oder nicht substituierte C₁- bis C₄₀-Kohlenwasserstoffgruppe ist.

10. Verbrückte Metallocenverbindung nach Anspruch 9, wobei R⁶ und R⁹ gleich sind.

11. Verbrückte Metallocenverbindung nach Anspruch 9, wobei R⁷ und R⁸ gleich sind.

12. Verbrückte Metallocenverbindung nach einem der Ansprüche 1 bis 6, wobei jedes von R⁶, R⁷, R⁸ und R⁹ unabhängig ausgewählt ist aus der Gruppe bestehend aus Methyl-, Ethyl-, Propyl-, Iso-propyl-, n-Butyl-, sec-Butyl-, t-Butyl-, Pentyl-, Hexyl-, Heptyl-, Octyl-, Decyl- und Undecylgruppen, vorzugsweise einer Methylgruppe, einer Ethylgruppe oder einer n-Propylgruppe.

13. Katalysatorsystem, das die verbrückte Metallocenverbindung nach einem der Ansprüche 1 bis 12 und mindestens einen Aktivator umfasst.

14. Katalysatorsystem nach Anspruch 13, das ferner Trägermaterial umfasst.

15. Katalysatorsystem nach Anspruch 13, wobei der Aktivator Alumoxan ist.

16. Katalysatorsystem nach Anspruch 13, wobei der Aktivator ionischer, stöchiometrischer Aktivator ist.

17. Verfahren zum Polymerisieren von Ethylen und wahlweise Comonomeren, die ein oder mehrere C₃- bis C₄₀-Olefin(e) umfassen, bei dem Ethylen und wahlweise Comonomere, die ein oder mehrere C₃- bis C₄₀-Olefin(e) umfassen, mit den Katalysatorsystemen gemäß einem der Ansprüche 13 bis 16 kontaktiert werden.

18. Verfahren nach Anspruch 17, bei dem die Polymerisierung in der Gasphase durchgeführt wird.

## Revendications

1. Composé métallocène ponté représenté par la formule suivante : 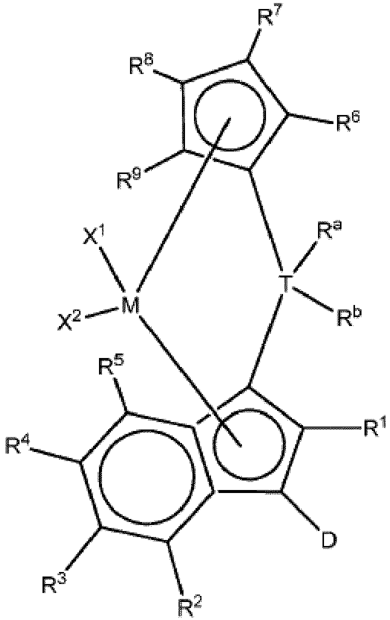 dans lequel :
M est un métal du groupe 4 ;
T est un atome du groupe 14 ;
D est un groupe aromatique substitué ou non substitué ;
R^{a} et R^{b} sont chacun indépendamment, l'atome d'hydrogène, un atome d'halogène ou un groupe hydrocarbyle en C₁ à C₂₀ substitué ou non substitué et R^{a} et R^{b} peuvent former une structure cyclique notamment un système cyclique ou de cycles condensés aromatique, partiellement saturé ou saturé substitué ou non substitué ;
chaque X¹ et X² est indépendamment choisi dans le groupe constitué par les groupes hydrocarbyle en C₁ à C₂₀ substitués ou non substitués, les hydrides, les amides, les amines, les alcoolates, les sulfures, les phosphures, les halogénures, les diènes, les phosphines et les éthers ; et X¹ et X² peuvent former une structure cyclique notamment un système cyclique ou de cycles condensés aromatique, partiellement saturé ou saturé ;
chacun de R¹, R², R³, R⁴ et R⁵ est, indépendamment, l'atome d'hydrogène, un halogénure, un alcoolate ou un groupe hydrocarbyle en C₁ à C₄₀ substitué ou non substitué et n'importe quels groupes R², R³, R⁴ et/ou R⁵ adjacents peuvent former un cycle condensé ou des systèmes cycliques condensés à plusieurs centres, les cycles pouvant être substitués ou non substitués et pouvant être aromatiques, partiellement insaturés ou insaturés ; et
chacun de R⁶, R⁷, R⁸ et R⁹ est, chacun indépendamment, l'atome d'hydrogène ou un groupe hydrocarbyle en C₁ à C₄₀ substitué ou non substitué ;
à condition en outre qu'au moins deux de R⁶, R⁷, R⁸ et R⁹ soient des groupes hydrocarbyle en C₁ à C₄₀ substitués ou non substitués.

2. Composé métallocène ponté selon la revendication 1, dans lequel M est le zirconium ou le hafnium.

3. Composé métallocène ponté selon la revendication 1 ou 2, dans lequel D est choisi dans le groupe constitué par les groupes phényle, naphtyle, biphényle, cyclopropényle, tropylium, cyclooctatétraényle, furanyle, pyridinyle, borabenzyle, thiophényle, azolyle, oxazolyle et imidazolyle substitués ou non substitués.

4. Composé métallocène ponté selon l'une quelconque des revendications 1 à 3, dans lequel T est le silicium ou le germanium.

5. Composé métallocène ponté selon l'une quelconque des revendications 1 à 4, dans lequel chaque R^{a} et R^{b} est indépendamment choisi dans le groupe constitué par les halogénures, les groupes hydrocarbyle en C₁ à C₂₀ substitués ou non substitués et les structures cycliques où R^{a} et R^{b} forment une structure hétérocyclopentyle, hétérocyclobutyle ou hétérocyclohexyle, T étant l'hétéroatome.

6. Composé métallocène ponté selon l'une quelconque des revendications 1 à 5, dans lequel chaque X¹ et X² est indépendamment choisi dans le groupe constitué par les halogénures et les groupes hydrocarbyle en C₁ à C₂₀ substitués ou non substitués.

7. Composé métallocène ponté selon la revendication 1, le composé métallocène en étant un ou plusieurs parmi :
le dichlorure de diméthylsilylène(3-phénylindén-1-yl) (2,3,4,5-tétraméthylcyclopentadién-1-yl)zirconium ;
le dichlorure de diméthylsilylène(3-phénylindén-1-yl)(2,5-diméthylcyclopentadién-1-yl)zirconium ;
le dichlorure de diméthylsilylène(3-phénylindén-1-yl)(3,4-diméthylcyclopentadién-1-yl)zirconium ;
le dichlorure de diméthylsilylène(3-phénylindén-1-yl) (2,3,4,5-tétraéthylcyclopentadién-1-yl)zirconium ;
le dichlorure de diméthylsilylène(3-phénylindén-1-yl) (2,3,4,5-tétrapropylcyclopentadién-1-yl)zirconium ;
le dichlorure de diméthylsilylène(3-phénylindén-1-yl)(fluorén-9-yl)zirconium ;
le dichlorure de diméthylsilylène(3-phénylindén-1-yl)(2,7-diméthylfluorén-9-yl)zirconium ;
le dichlorure de diméthylsilylène(3-phénylindén-1-yl)(2,7-di-*t-*butylfluorén-9-yl)zirconium ;
le dichlorure de diméthylsilylène(3-phénylindén-1-yl)(3,6-diméthylfluorén-9-yl)zirconium ;
le dichlorure de diméthylsilylène(3-phénylindén-1-yl)(3,6-di-*t-*butylfluorén-9-yl)zirconium ;
le dichlorure de diméthylsilylène(3-phénylindén-1-yl)(4,7-diméthylfluorén-9-yl)zirconium ;
le dichlorure de diéthylsilylène(3-phénylindén-1-yl)(2,3,4,5-tétraméthylcyclopentadién-1-yl)zirconium ;
le dichlorure de dipropylsilylène(3-phénylindén-1-yl)(2,3,4,5-tétraméthylcyclopentadién-1-yl)zirconium ;
le dichlorure de dibutylsilylène(3-phénylindén-1-yl)(2,3,4,5-tétraméthylcyclopentadién-1-yl)zirconium ;
le dichlorure de diphénylsilylène(3-phénylindén-1-yl)(2,3,4,5-tétraméthylcyclopentadién-1-yl)zirconium ;
le dichlorure de silacyclobutylidène(3-phénylindén-1-yl)(2,3,4,5-tétraméthylcyclopentadién-1-yl)zirconium ;
le dichlorure de silacyclopentylidène(3-phénylindén-1-yl)(2,3,4,5-tétraméthylcyclopentadién-1-yl)zirconium ;
le dichlorure de silacyclohexylidène(3-phénylindén-1-yl)(2,3,4,5-tétraméthylcyclopentadién-1-yl)zirconium ;
le dichlorure de diméthylgermylène(3-phénylindén-1-yl)(2,3,4,5-tétraméthylcyclopentadién-1-yl)zirconium ;
le dichlorure de diéthylgermylène(3-phénylindén-1-yl)(2,3,4,5-tétraméthylcyclopentadién-1-yl)zirconium ;
le dichlorure de dipropylgermylène(3-phénylindén-1-yl)(2,3,4,5-tétraméthylcyclopentadién-1-yl)zirconium ;
le dichlorure de dibutylgermylène(3-phénylindén-1-yl)(2,3,4,5-tétraméthylcyclopentadién-1-yl)zirconium ;
le dichlorure de diphénylgermylène(3-phénylindén-1-yl)(2,3,4,5-tétraméthylcyclopentadién-1-yl)zirconium ;
le dichlorure d'isopropylidène(3-phénylindén-1-yl)(2,3,4,5-tétraméthylcyclopentadién-1-yl)zirconium ;
le dichlorure de diphénylméthylène(3-phénylindén-1-yl)(2,3,4,5-tétraméthylcyclopentadién-1-yl)zirconium ;
le dichlorure de diméthylsilylène(2-méthyl-3-phénylindén-1-yl)(2,3,4,5-tétraméthylcyclopentadién-1-yl)zirconium ;
le dichlorure de diméthylsilylène(2-éthyl-3-phénylindén-1-yl)(2,3,4,5-tétraméthylcyclopentadién-1-yl)zirconium ;
le dichlorure de diméthylsilylène(2-propyl-3-phénylindén-1-yl)(2,3,4,5-tétraméthylcyclopentadién-1-yl)zirconium ;
le dichlorure de diméthylsilylène(2-isopropyl-3-phénylindén-1-yl)(2,3,4,5-tétraméthylcyclopentadién-1-yl)zirconium ;
le dichlorure de diméthylsilylène(4-méthyl-3-phénylindén-1-yl)(2,3,4,5-tétraméthylcyclopentadién-1-yl)zirconium ;
le dichlorure de diméthylsilylène(4,7-diméthyl-3-phénylindén-1-yl)(2,3,4,5-tétraméthylcyclopentadién-1-yl)zirconium ;
le dichlorure de diméthylsilylène(5,6-diméthyl-3-phénylindén-1-yl)(2,3,4,5-tétraméthylcyclopentadién-1-yl)zirconium ;
le dichlorure de diméthylsilylène(2,4-diméthyl-3-phénylindén-1-yl)(2,3,4,5-tétraméthylcyclopentadién-1-yl)zirconium ;
le dichlorure de diméthylsilylène(2,6-diméthyl-3-phénylindén-1-yl)(2,3,4,5-tétraméthylcyclopentadién-1-yl)zirconium ;
le dichlorure de diméthylsilylène(3-phényl-2,4,6-triméthylindén-1-yl)(2,3,4,5-tétraméthylcyclopentadién-1-yl)zirconium ;
le dichlorure de diméthylsilylène(3-phényl-2,4,7-triméthylindén-1-yl)(2,3,4,5-tétraméthylcyclopentadién-1-yl)zirconium ;
le dichlorure de diméthylsilylène(3-phényl-2,5,6-triméthylindén-1-yl)(2,3,4,5-tétraméthylcyclopentadién-1-yl)zirconium ;
le dichlorure de diméthylsilylène(3-phényl-4,5,6,7-tétraméthylindén-1-yl)(2,3,4,5-tétraméthylcyclopentadién-1-yl)zirconium ;
le dichlorure de diméthylsilylène(2,4,5,6,7-pentaméthyl-3-phénylindén-1-yl)(2,3,4,5-tétraméthylcyclopentadién-1-yl)zirconium ;
le dichlorure de diméthylsilylène(6-chloro-3-phénylindén-1-yl)(2,3,4,5-tétraméthylcyclopentadién-1-yl)zirconium ;
le dichlorure de diméthylsilylène(7-chloro-3-phénylindén-1-yl)(2,3,4,5-tétraméthylcyclopentadién-1-yl)zirconium ;
le dichlorure de diméthylsilylène(4,6-dichloro-3-phénylindén-1-yl)(2,3,4,5-tétraméthylcyclopentadién-1-yl)zirconium ;
le dichlorure de diméthylsilylène(5,7-dichloro-2-méthyl-3-phénylindén-1-yl)(2,3,4,5-tétraméthylcyclopentadién-1-yl)zirconium ;
le dichlorure de diméthylsilylène(2-butyl-7-chloro-3-phénylindén-1-yl)(2,3,4,5-tétraméthylcyclopentadién-1-yl)zirconium ;
le dichlorure de diméthylsilylène(7-chloro-3-phényl-2-propylindén-1-yl)(2,3,4,5-tétraméthylcyclopentadién-1-yl)zirconium ;
le dichlorure de diméthylsilylène(7-chloro-2-éthyl-3-phénylindén-1-yl)(2,3,4,5-tétraméthylcyclopentadién-1-yl)zirconium ;
le dichlorure de diméthylsilylène(5-fluoro-3-phénylindén-1-yl)(2,3,4,5-tétraméthylcyclopentadién-1-yl)zirconium ;
le dichlorure de diméthylsilylène(5,7-difluoro-3-phénylindén-1-yl)(2,3,4,5-tétraméthylcyclopentadién-1-yl)zirconium ;
le dichlorure de diméthylsilylène(4,6-difluoro-3-phénylindén-1-yl)(2,3,4,5-tétraméthylcyclopentadién-1-yl)zirconium ;
le dichlorure de diméthylsilylène(5,7-difluoro-2-méthyl-3-phénylindén-1-yl)(2,3,4,5-tétraméthylcyclopentadién-1-yl)zirconium ;
le dichlorure de diméthylsilylène(3-phényl-1,5,6,7-tétrahydro-s-indacén-1-yl)(2,3,4,5-tétraméthylcyclopentadién-1-yl)zirconium ;
le dichlorure de diméthylsilylène(2-méthyl-3-phényl-1,5,6,7-tétrahydro-*s*-indacén-1-yl)(2,3,4,5-tétraméthylcyclopentadién-1-yl)zirconium ;
le dichlorure de diméthylsilylène(6,6-diméthyl-3-phényl-1,5,6,7-tétrahydro-*s*-indacén-1-yl)(2,3,4,5-tétraméthylcyclopentadién-1-yl)zirconium ;
le dichlorure de diméthylsilylène(3-phényl-2,6,6-triméthyl-1,5,6,7-tétrahydro-*s*-indacén-1-yl)(2,3,4,5-tétraméthylcyclopentadién-1-yl)zirconium ;
le dichlorure de diméthylsilylène(3-phényl-5,5,8,8-tétraméthyl-5,6,7,8-tétrahydrobenzo[*f*]indén-1-yl)(2,3,4,5-tétraméthylcyclopentadién-1-yl)zirconium ;
le dichlorure de diméthylsilylène(3-phénylbenzo[*f*]indén-1-yl)(2,3,4,5-tétraméthylcyclopentadién-1-yl)zirconium ;
le dichlorure de diméthylsilylène(2-méthyl-3-phénylbenzo[*f*]indén-1-yl)(2,3,4,5-tétraméthylcyclopentadién-1-yl)zirconium ;
le dichlorure de diméthylsilylène(2,5,5,8,8-pentaméthyl-3-phényl-5,6,7,8-tétrahydrobenzo[*f*]indén-1-yl)(2,3,4,5-tétraméthylcyclopentadién-1-yl)zirconium ;
le dichlorure de diméthylsilylène(3-phénylbenzo[*e*]indén-1-yl)(2,3,4,5-tétraméthylcyclopentadién-1-yl)zirconium ;
le dichlorure de diméthylsilylène(2-méthyl-3-phénylbenzo[*e*]indén-1-yl)(2,3,4,5-tétraméthylcyclopentadién-1-yl)zirconium ;
le dichlorure de diméthylsilylène(3-(4-méthylphényl)indén-1-yl)(2,3,4,5-tétraméthylcyclopentadién-1-yl)zirconium ;
le dichlorure de diméthylsilylène(3-(3,5-diméthylphényl)indén-1-yl)(2,3,4,5-tétraméthylcyclopentadién-1-yl)zirconium ;
le dichlorure de diméthylsilylène(3-(2,6-diméthylphényl)indén-1-yl)(2,3,4,5-tétraméthylcyclopentadién-1-yl)zirconium ;
le dichlorure de diméthylsilylène(3-(2,4-diméthylphényl)indén-1-yl)(2,3,4,5-tétraméthylcyclopentadién-1-yl)zirconium ;
le dichlorure de diméthylsilylène(3-(3,4-diméthylphényl)indén-1-yl)(2,3,4,5-tétraméthylcyclopentadién-1-yl)zirconium ;
le dichlorure de diméthylsilylène(3-(2,3-diméthylphényl)indén-1-yl)(2,3,4,5-tétraméthylcyclopentadién-1-yl)zirconium ;
le dichlorure de diméthylsilylène(3-(2,5-diméthylphényl)indén-1-yl)(2,3,4,5-tétraméthylcyclopentadién-1-yl)zirconium ;
le dichlorure de diméthylsilylène(3-(2,4,6-triméthylphényl)indén-1-yl)(2,3,4,5-tétraméthylcyclopentadién-1-yl)zirconium ;
le dichlorure de diméthylsilylène(3-(2,3,4-triméthylphényl)indén-1-yl)(2,3,4,5-tétraméthylcyclopentadién-1-yl)zirconium ;
le dichlorure de diméthylsilylène(3-(3,4,5-triméthylphényl)indén-1-yl)(2,3,4,5-tétraméthylcyclopentadién-1-yl)zirconium ;
le dichlorure de diméthylsilylène(3-(2,3,5-triméthylphényl)indén-1-yl)(2,3,4,5-tétraméthylcyclopentadién-1-yl)zirconium ;
le dichlorure de diméthylsilylène(3-(2,3,6-triméthylphényl)indén-1-yl)(2,3,4,5-tétraméthylcyclopentadién-1-yl)zirconium ;
le dichlorure de diméthylsilylène(3-(2,4,5-triméthylphényl)indén-1-yl)(2,3,4,5-tétraméthylcyclopentadién-1-yl)zirconium ;
le dichlorure de diméthylsilylène(3-(2,3,4,5-tétraméthylphényl)indén-1-yl)(2,3,4,5-tétraméthylcyclopentadién-1-yl)zirconium ;
le dichlorure de diméthylsilylène(3-(2,3,4,5-tétraméthylphényl)indén-1-yl)(2,3,4,5-tétraméthylcyclopentadién-1-yl)zirconium ;
le dichlorure de diméthylsilylène(3-(2,3,4,6-tétraméthylphényl)indén-1-yl)(2,3,4,5-tétraméthylcyclopentadién-1-yl)zirconium ;
le dichlorure de diméthylsilylène(3-(2,3,5,6-tétraméthylphényl)indén-1-yl)(2,3,4,5-tétraméthylcyclopentadién-1-yl)zirconium ;
le dichlorure de diméthylsilylène(3-(2,3,4,5,6-pentaméthylphényl)indén-1-yl)(2,3,4,5-tétraméthylcyclopentadién-1-yl)zirconium ;
le dichlorure de diméthylsilylène(3-(2-méthylphényl)indén-1-yl)(2,3,4,5-tétraméthylcyclopentadién-1-yl)zirconium ;
le dichlorure de diméthylsilylène(3-(2-éthylphényl)indén-1-yl)(2,3,4,5-tétraméthylcyclopentadién-1-yl)zirconium ;
le dichlorure de diméthylsilylène(3-(2-propylphényl)indén-1-yl)(2,3,4,5-tétraméthylcyclopentadién-1-yl)zirconium ;
le dichlorure de diméthylsilylène(3-(2-butylphényl)indén-1-yl)(2,3,4,5-tétraméthylcyclopentadién-1-yl)zirconium ;
le dichlorure de diméthylsilylène(3-(3-méthylphényl)indén-1-yl)(2,3,4,5-tétraméthylcyclopentadién-1-yl)zirconium ;
le dichlorure de diméthylsilylène(3-(3-éthylphényl)indén-1-yl)(2,3,4,5-tétraméthylcyclopentadién-1-yl)zirconium ;
le dichlorure de diméthylsilylène(3-(3-propylphényl)indén-1-yl)(2,3,4,5-tétraméthylcyclopentadién-1-yl)zirconium ;
le dichlorure de diméthylsilylène(3-(3-butylphényl)indén-1-yl)(2,3,4,5-tétraméthylcyclopentadién-1-yl)zirconium ;
le dichlorure de diméthylsilylène(3-(3-*t*-butylphényl)indén-1-yl)(2,3,4,5-tétraméthylcyclopentadién-1-yl)zirconium ;
le dichlorure de diméthylsilylène(3-(4-méthylphényl)indén-1-yl)(2,3,4,5-tétraméthylcyclopentadién-1-yl)zirconium ;
le dichlorure de diméthylsilylène(3-(4-éthylphényl)indén-1-yl)(2,3,4,5-tétraméthylcyclopentadién-1-yl)zirconium ;
le dichlorure de diméthylsilylène(3-(4-propylphényl)indén-1-yl)(2,3,4,5-tétraméthylcyclopentadién-1-yl)zirconium ;
le dichlorure de diméthylsilylène(3-(4-butylphényl)indén-1-yl)(2,3,4,5-tétraméthylcyclopentadién-1-yl)zirconium ;
le dichlorure de diméthylsilylène(3-(4-*t*-butylphényl)indén-1-yl)(2,3,4,5-tétraméthylcyclopentadién-1-yl)zirconium ;
le dichlorure de diméthylsilylène(3-(biphén-4-yl)indén-1-yl)(2,3,4,5-tétraméthylcyclopentadién-1-yl)zirconium ;
le dichlorure de diméthylsilylène(3-(biphén-3-yl)indén-1-yl)(2,3,4,5-tétraméthylcyclopentadién-1-yl)zirconium ;
le dichlorure de diméthylsilylène(3-(biphén-2-yl)indén-1-yl)(2,3,4,5-tétraméthylcyclopentadién-1-yl)zirconium ;
le dichlorure de diméthylsilylène(3-(3,5-diphénylphényl)indén-1-yl)(2,3,4,5-tétraméthylcyclopentadién-1-yl)zirconium ;
le dichlorure de diméthylsilylène(3-(3,5-di-*t-*butylphényl)indén-1-yl)(2,3,4,5-tétraméthylcyclopentadién-1-yl)zirconium ;
le dichlorure de diméthylsilylène(3-(2-fluorophényl)indén-1-yl)(2,3,4,5-tétraméthylcyclopentadién-1-yl)zirconium ;
le dichlorure de diméthylsilylène(3-(3-fluorophényl)indén-1-yl)(2,3,4,5-tétraméthylcyclopentadién-1-yl)zirconium ;
le dichlorure de diméthylsilylène(3-(4-fluorophényl)indén-1-yl)(2,3,4,5-tétraméthylcyclopentadién-1-yl)zirconium ;
le dichlorure de diméthylsilylène(3-(2,3-difluorophényl)indén-1-yl)(2,3,4,5-tétraméthylcyclopentadién-1-yl)zirconium ;
le dichlorure de diméthylsilylène(3-(2,4-difluorophényl)indén-1-yl)(2,3,4,5-tétraméthylcyclopentadién-1-yl)zirconium ;
le dichlorure de diméthylsilylène(3-(2,5-difluorophényl)indén-1-yl)(2,3,4,5-tétraméthylcyclopentadién-1-yl)zirconium ;
le dichlorure de diméthylsilylène(3-(2,6-difluorophényl)indén-1-yl)(2,3,4,5-tétraméthylcyclopentadién-1-yl)zirconium ;
le dichlorure de diméthylsilylène(3-(3,4-difluorophényl)indén-1-yl)(2,3,4,5-tétraméthylcyclopentadién-1-yl)zirconium ;
le dichlorure de diméthylsilylène(3-(3,5-difluorophényl)indén-1-yl)(2,3,4,5-tétraméthylcyclopentadién-1-yl)zirconium ;
le dichlorure de diméthylsilylène(3-(2,3,4-trifluorophényl)indén-1-yl)(2,3,4,5-tétraméthylcyclopentadién-1-yl)zirconium ;
le dichlorure de diméthylsilylène(3-(2,3,5-trifluorophényl)indén-1-yl)(2,3,4,5-tétraméthylcyclopentadién-1-yl)zirconium ;
le dichlorure de diméthylsilylène(3-(2,3,6-trifluorophényl)indén-1-yl)(2,3,4,5-tétraméthylcyclopentadién-1-yl)zirconium ;
le dichlorure de diméthylsilylène(3-(2,4,5-trifluorophényl)indén-1-yl)(2,3,4,5-tétraméthylcyclopentadién-1-yl)zirconium ;
le dichlorure de diméthylsilylène(3-(2,4,6-trifluorophényl)indén-1-yl)(2,3,4,5-tétraméthylcyclopentadién-1-yl)zirconium ;
le dichlorure de diméthylsilylène(3-(3,4,5-trifluorophényl)indén-1-yl)(2,3,4,5-tétraméthylcyclopentadién-1-yl)zirconium ;
le dichlorure de diméthylsilylène(3-(2,3,4,5-tétrafluorophényl)indén-1-yl)(2,3,4,5-tétraméthylcyclopentadién-1-yl)zirconium ;
le dichlorure de diméthylsilylène(3-(2,3,4,6-tétrafluorophényl)indén-1-yl)(2,3,4,5-tétraméthylcyclopentadién-1-yl)zirconium ;
le dichlorure de diméthylsilylène(3-(2,3,5,6-tétrafluorophényl)indén-1-yl)(2,3,4,5-tétraméthylcyclopentadién-1-yl)zirconium ;
le dichlorure de diméthylsilylène(3-(pentafluorophényl)indén-1-yl)(2,3,4,5-tétraméthylcyclopentadién-1-yl)zirconium ;
le dichlorure de diméthylsilylène(3-(2-chlorophényl)indén-1-yl)(2,3,4,5-tétraméthylcyclopentadién-1-yl)zirconium ;
le dichlorure de diméthylsilylène(3-(3-chlorophényl)indén-1-yl)(2,3,4,5-tétraméthylcyclopentadién-1-yl)zirconium ;
le dichlorure de diméthylsilylène(3-(4-chlorophényl)indén-1-yl)(2,3,4,5-tétraméthylcyclopentadién-1-yl)zirconium ;
le dichlorure de diméthylsilylène(3-(2,6-dichlorophényl)indén-1-yl)(2,3,4,5-tétraméthylcyclopentadién-1-yl)zirconium ;
le dichlorure de diméthylsilylène(3-(3,5-dichlorophényl)indén-1-yl)(2,3,4,5-tétraméthylcyclopentadién-1-yl)zirconium ;
le dichlorure de diméthylsilylène(3-(2,4,6-trichlorophényl)indén-1-yl)(2,3,4,5-tétraméthylcyclopentadién-1-yl)zirconium ;
le dichlorure de diméthylsilylène(3-(2-trifluorométhylphényl)indén-1-yl)(2,3,4,5-tétraméthylcyclopentadién-1-yl)zirconium ;
le dichlorure de diméthylsilylène(3-(3-trifluorométhylphényl)indén-1-yl)(2,3,4,5-tétraméthylcyclopentadién-1-yl)zirconium ;
le dichlorure de diméthylsilylène(3-(4-trifluorométhylphényl)indén-1-yl)(2,3,4,5-tétraméthylcyclopentadién-1-yl)zirconium ;
le dichlorure de diméthylsilylène(3-(3,5-bis(trifluorométhyl)phényl)indén-1-yl)(2,3,4,5-tétraméthylcyclopentadién-1-yl)zirconium ;
le dichlorure de diméthylsilylène(3-(2-méthoxyphényl)indén-1-yl)(2,3,4,5-tétraméthylcyclopentadién-1-yl)zirconium ;
le dichlorure de diméthylsilylène(3-(3-méthoxyphényl)indén-1-yl)(2,3,4,5-tétraméthylcyclopentadién-1-yl)zirconium ;
le dichlorure de diméthylsilylène(3-(4-méthoxyphényl)indén-1-yl)(2,3,4,5-tétraméthylcyclopentadién-1-yl)zirconium ;
le dichlorure de diméthylsilylène(3-(2,6-diméthoxyphényl)indén-1-yl)(2,3,4,5-tétraméthylcyclopentadién-1-yl)zirconium ;
le dichlorure de diméthylsilylène(3-(3,5-diméthoxyphényl)indén-1-yl)(2,3,4,5-tétraméthylcyclopentadién-1-yl)zirconium ;
le dichlorure de diméthylsilylène(3-(2,4,6-triméthoxyphényl)indén-1-yl)(2,3,4,5-tétraméthylcyclopentadién-1-yl)zirconium ;
le dichlorure de diméthylsilylène(3-(napht-1-yl)indén-1-yl)(2,3,4,5-tétraméthylcyclopentadién-1-yl)zirconium ;
le dichlorure de diméthylsilylène(3-(napht-2-yl)indén-1-yl)(2,3,4,5-tétraméthylcyclopentadién-1-yl)zirconium ;
le dichlorure de diméthylsilylène(2-méthyl-3-(napht-2-yl)indén-1-yl)(2,3,4,5-tétraméthylcyclopentadién-1-yl)zirconium ;
le dichlorure de diméthylsilylène(3-(anthr-1-yl)indén-1-yl)(2,3,4,5-tétraméthylcyclopentadién-1-yl)zirconium ;
le dichlorure de diméthylsilylène(3-(anthr-2-yl)indén-1-yl)(2,3,4,5-tétraméthylcyclopentadién-1-yl)zirconium ;
le dichlorure de diméthylsilylène(3-(anthr-9-yl)indén-1-yl)(2,3,4,5-tétraméthylcyclopentadién-1-yl)zirconium ;
le dichlorure de diméthylsilylène(3-(phénanthr-9-yl)indén-1-yl)(2,3,4,5-tétraméthylcyclopentadién-1-yl)zirconium ;
le dichlorure de diméthylsilylène(3-(furan-2-yl)indén-1-yl)(2,3,4,5-tétraméthylcyclopentadién-1-yl)zirconium ;
le dichlorure de diméthylsilylène(3-(furan-2-yl)-2-méthylindén-1-yl)(2,3,4,5-tétraméthylcyclopentadién-1-yl)zirconium ;
le dichlorure de diméthylsilylène(3-(furan-3-yl)indén-1-yl)(2,3,4,5-tétraméthylcyclopentadién-1-yl)zirconium ;
le dichlorure de diméthylsilylène(3-(furan-3-yl)-2-méthylindén-1-yl)(2,3,4,5-tétraméthylcyclopentadién-1-yl)zirconium ;
le dichlorure de diméthylsilylène(3-(thiophén-2-yl)indén-1-yl)(2,3,4,5-tétraméthylcyclopentadién-1-yl)zirconium ;
le dichlorure de diméthylsilylène(2-méthyl-3-(thiophén-2-yl)indén-1-yl)(2,3,4,5-tétraméthylcyclopentadién-1-yl)zirconium ;
le dichlorure de diméthylsilylène(3-(thiophén-3-yl)indén-1-yl)(2,3,4,5-tétraméthylcyclopentadién-1-yl)zirconium ;
le dichlorure de diméthylsilylène(2-méthyl-3-(thiophén-3-yl)indén-1-yl)(2,3,4,5-tétraméthylcyclopentadién-1-yl)zirconium ;
le dichlorure de diméthylsilylène(3-(pyrid-2-yl)indén-1-yl)(2,3,4,5-tétraméthylcyclopentadién-1-yl)zirconium ;
le dichlorure de diméthylsilylène(2-méthyl-3-(pyrid-2-yl)indén-1-yl)(2,3,4,5-tétraméthylcyclopentadién-1-yl)zirconium ;
le dichlorure de diméthylsilylène(3-(pyrid-3-yl)indén-1-yl)(2,3,4,5-tétraméthylcyclopentadién-1-yl)zirconium ;
le dichlorure de diméthylsilylène(2-méthyl-3-(pyrid-3-yl)indén-1-yl)(2,3,4,5-tétraméthylcyclopentadién-1-yl)zirconium ;
les analogues de titane et de hafnium des composés dichlorures de zirconium ci-dessus dans lesquels le métal de transition zirconium est remplacé par le titane ou le hafnium ; et
les analogues diméthyliques des composés dichlorures ci-dessus dans lesquels les groupes chlorure sur le métal de transition zirconium, hafnium ou titane sont remplacés par des groupes méthyle.

8. Composé métallocène ponté selon l'une quelconque des revendications 1 à 6, dans lequel chacun de R¹, R², R³, R⁴, R⁵, R⁶, R⁷, R⁸ et R⁹ est, indépendamment, l'atome d'hydrogène ou un groupe hydrocarbyle en C₁ à C₂₀ substitué ou non substitué.

9. Composé métallocène ponté selon l'une quelconque des revendications 1 à 6, dans lequel chacun de R⁶, R⁷, R⁸ et R⁹ est, indépendamment, un groupe hydrocarbyle en C₁ à C₄₀ substitué ou non substitué.

10. Composé métallocène ponté selon la revendication 9, dans lequel R⁶ et R⁹ sont identiques.

11. Composé métallocène ponté selon la revendication 9, dans lequel R⁷ et R⁸ sont identiques.

12. Composé métallocène ponté selon l'une quelconque des revendications 1 à 6, dans lequel chacun de R⁶, R⁷, R⁸ et R⁹ est, indépendamment, choisi dans le groupe constitué par les groupes méthyle, éthyle, propyle, isopropyle, n-butyle, sec-butyle, t-butyle, pentyle, hexyle, heptyle, octyle, décyle et undécyle, de préférence un groupe méthyle, un groupe éthyle ou un groupe n-propyle.

13. Système catalyseur comprenant le composé métallocène ponté selon l'une quelconque des revendications 1 à 12 et au moins un activateur.

14. Système catalyseur selon la revendication 13, comprenant en outre un matériau support.

15. Système catalyseur selon la revendication 13, dans lequel l'activateur est un alumoxane.

16. Système catalyseur selon la revendication 13, dans lequel l'activateur est un activateur stoechiométrique ionique.

17. Procédé pour polymériser de l'éthylène et des comonomères facultatifs comprenant une ou plusieurs oléfines en C₃ à C₄₀ comprenant la mise en contact d'éthylène et de comonomères facultatifs comprenant une ou plusieurs oléfines en C₃ à C₄₀ avec les systèmes catalyseurs selon l'une quelconque des revendications 13 à 16.

18. Procédé selon la revendication 17, dans lequel la polymérisation est effectuée en phase gazeuse.
